# EUROPEAN PATENT SPECIFICATION

(11) **EP 3 915 995 B1**
(45) Date of publication and mention of the grant of the patent: **26.11.2025**
(21) Application number: 20177581.4
(22) Date of filing: 29.05.2020
(51) Int. Cl.: C07F 7/08, C07F 7/12, B01J 35/45

(54) **PROCESS FOR THE STEPWISE SYNTHESIS OF SILAHYDROCARBONS**
VERFAHREN ZUR STUFENWEISEN SYNTHESE VON SILAKOHLENWASSERSTOFFEN
PROCÉDÉ POUR LA SYNTHÈSE DE SILAHYDROCARBURES PAR ÉTAPES

(43) Date of publication of application: 01.12.2021
(73) Proprietor: Momentive Performance Materials Inc., Waterford, NY 12188 (US)
(72) Inventor: Auner, Norbert, 61479 Glashütten (DE); Santowski, Tobias, 63505 Langenselbold (DE); Sturm, Alexander, 55122 Mainz (DE); Felder, Thorsten, 40225 Düsseldorf (DE)
(74) Representative: Gille Hrabal Partnerschaftsgesellschaft mbB Patentanwälte

(56) References cited:
- WO-A1-2014/182681
- WO-A1-2018/064163

## Description

### TECHNICAL FIELD

The present invention relates to a process for the stepwise production of silahydrocarbons, in particular to the stepwise production of silahydrocarbons bearing up to four different hydrocarbon groups. More specifically, the invention relates to a process for the stepwise synthesis of silahydrocarbons that enables the selective and efficient production of silahydrocarbons bearing one, two, three or four different hydrocarbon groups, wherein at least two substituents of the silahydrocarbon are introduced by separate hydrosilylation steps.

### BACKGROUND OF THE INVENTION

Silahydrocarbons constitute a class of functional fluids often displaying an excellent viscosity index and thermal stability characteristics. They were found to be magnificent candidates for hydraulic fluids useable over the -54 to 315 °C temperature range. They possess excellent viscosity-temperature properties and thermal stability and they are expected to be sufficiently hydrocarbon-like in their physical and chemical properties to permit hydraulic systems to be designed with a minimum of redesign compared to conventional systems.

Silahydrocarbons are defined as compounds of silicon substituted by four hydrocarbon groups SiR₄. In general, R can be any hydrocarbon group and be either primary, secondary, or tertiary. In the silahydrocarbon molecule all four R groups can be identical, e.g. in Si(CH₃)₄, or Si can be substituted with two, three or four different groups R. The molecular shape of silahydrocarbons can be changed with proper selection of the R groups.

Accordingly, the properties of the silahydrocarbons, such as vapor pressure, boiling point, viscosity and thermal stability are controlled by the selection of the appropriate substituents R. For example, the length of the carbon chain in the substituent R affects the boiling point, and the viscosity as well as the thermal stability properties that are also a function of the molecular shape of the silahydrocarbon molecule. A comparison of the melting points of silahydrocarbons with their carbon analogues shows that silahydrocarbons have lower melting points. Additionally, the specific mass and the boiling points of silahydrocarbons are usually higher than those of the corresponding carbon analogues.

For example, tetraalkylsilanes, wherein two or more of the alkyl groups have between eight and thirty carbon atoms, have been shown to be useful and effective hydraulic fluids and lubricants, especially in aerospace and space vehicles.

In general, synthetic approaches involving organometallic intermediates such as Grignard reagents or organolithium and/or aluminum compounds offer the easiest synthetic procedures: In US 4,973,724 the preparation of compounds RSiR'₃, wherein R' radicals may be identical or different, by reacting trialkylaluminum compounds with chloro- or alkylchlorosilanes is disclosed: Therein, the selectivity to tetra- or trialkylsilanes is controlled by the addition of particular alkaline metal salts to a reaction zone.

US 5,177,235 discloses the synthesis of tetraalkylsilanes from the reaction of sodium tetrahydrocarbylaluminate obtained from molten metal and trihydrocarbonaluminum at T = 100-130 °C with an organotrihalosilane.

US 4,650,891 discloses a catalytic process for producing silahydrocarbons, wherein halo-substituted silanes are reacted with an organomagnesium compound in the presence of a catalytically effective amount of a cyanide.

An overview of general synthetic approaches to differently organo-substituted silahydrocarbons and their chemical and physical properties is provided in C. E. Snyder, L. J. Geschwender, C. Tamborski, G. J. Chen and D. R. Anderson (1982): Synthesis and Characterization of Silahydrocarbons - A Class of Thermally Stable Wide-Liquid-Range Functional Fluids, ASLE Transactions, 9, 299-308.

Recently, hydrosilylation chemistry is favoured for the buildup of silahydrocarbons. These reactions involve a reaction between a silylhydride and an unsaturated organic group. This is one basic route in the synthesis of commercial silicon-based products, wherein the hydrosilylation reactions are typically catalyzed by precious metal catalysts.

US 4,578,497 discloses the preparation of tetraalkylsilanes from monosilanes RSiH₃, RSiH₂R₁ and RSiH(R₁)₂ by hydrosilylation with at least one alpha olefin using an oxygenated, Pt-containing catalyst.

In J. Am. Chem. Soc. 119, (1997) 906-917, LaPointe et. al. reported the palladium-catalyzed hydrosilylation synthesis of tetraalkylsilanes from tertiary silanes and olefins. WO 2014/182681 A1 discloses a process for the preparation of the silahydrocarbon compounds.

In US 2014/0330036 A1 a process for the synthesis of saturated and unsaturated silahydrocarbons using iron-containing or cobalt-containing catalysts is disclosed. Starting from primary silanes RSiH₃, secondary silanes (R')₂SiH₂ or tertiary silanes (R')₃SiH silahydrocarbons R¹R²R³R⁴Si are obtained. The catalysts used are difficult to synthesize, not commercially available or very expensive. Using primary or secondary silanes, all H-substituents on Si are reacted.

A stepwise production procedure for silahydrocarbons bearing different substituents is disclosed in Ind. Eng. Chem. Prod. Res. Dev. 1983, 22, 172-178 by Tamborski et al., wherein alkyltrichlorosilanes are subsequently brought to reaction with different alkyllithium or alkylmagnesium halides.

Another stepwise synthesis method for the production of tetraalkylsilanes bearing one short and three long alkyl groups involving a two-step hydrosilylation procedure is disclosed by Onopchenko et al. in J. Chem. Eng. Data, 1988, 33, 64-66. Therein, an alkyldichlorohydridosilane is hydrosilylated with an α-olefin, then the dialkyldichlorosilane is submitted to perhydrogenation with LiAlH₄, and the resulting dialkyldihydridosilane is reacted to a tetraalkylsilane in a final hydrosilylation step.

However, the reaction of SiCl₄ with Grignard reagents or other organometallic compounds for the preparation of silahydrocarbons with up to four different organo substituents at one silicon center (R¹R²SiR³R⁴) mostly results in the formation of complex monosilane mixtures. The selective introduction of several different organo groups is highly challenging, as preparatively lavish procedures including the introduction of protecting groups and the subsequent refunctionalization of the silicon functionality, preferably by introduction of a chloro substituent at the Si atom, prevent the selective and efficient product formation. Alternatively, starting from SiH₄ that is a highly explosive gas with a boiling point of -112 °C, the hydrosilylation with 1-hexene and ethylene requires the use of LiAlH₄ as catalyst (M. Kobayashi, M. Itoh, Chem. Lett. 1996, 25, 1013-1014) to synthesize hexyl- and ethylsilane with the introduction of the first organo substituent at silicon. Further reactions of primary (RSiH₃) and secondary (R₂SiH₂) silanes inhibit platinum catalysis of hydrosilylation reactions, whereas no inhibition was observed in such reactions with rhodium, see e.g. Lewis et al., Organometallics 1990, 9, 621-625; the same is true for iron- or cobalt- containing catalysts (see, e.g., Lewis et al., US9,371,339 B2). While LaPointe et al. in J. Am. Chem. Soc. 1997, 119, 906-917, reported the Pd-catalyzed hydrosilylation synthesis of tetraalkylsilanes from tertiary silanes and olefins, Salimgareeva et al. pointed out that hydrosilylation of dimethylsilane Me₂SiH₂ afforded the use of functional olefins for silicon-carbon bond formation, see J. Organomet. Chem. 1978, 148, 23-27.

For the specific design and general synthetic approach to a wide variety of differently alkyl substituted silahydrocarbons, there is strong need for a new synthetic-protocol involving the stepwise introduction of up to four different groups at a silicon center by hydrosilylation reactions.

All literature reports up to now lack selective and efficient product formation of R¹R²SiR³R⁴ starting from primary and secondary silanes RSiH₃ and R₂SiH₂, respectively, by hydrosilylation reaction sequences.

### PROBLEM TO BE SOLVED

The problem to be solved by the present invention is the provision of a process for the stepwise production of silahydrocarbons, in particular silahydrocarbons bearing up to four different organyl groups R, via bifunctional hydridochlorosilanes as intermediates. In particular, it is an object of the present invention to provide a new process with improved performance over the conventional methods regarding overall yield of the reaction, purity of the products obtained, selectivity of the conversions, convenience of the reaction procedures, convenience of the work-up procedures, ease of the handling of the reagents, atom efficiency, and cost efficiency of the process.

According to the present invention, this problem is solved as follows.

### SUMMARY OF THE INVENTION

The present invention relates to a process for the production of silahydrocarbons of the general formula (I)

SiR¹R²R³R⁴ (I)

wherein
R¹ and R² are independently selected from the group consisting of aliphatic, cycloaliphatic, aryl, alkaryl and aralkyl groups, in particular unsubstituted or substituted alkyl groups, unsubstituted or substituted cycloaliphatic groups, unsubstituted or substituted alkaryl groups, unsubstituted or substituted aralkyl groups, unsubstituted or substituted aryl groups, or unsubstituted or substituted alkenyl groups, each having 1 to 30 carbon atoms,
R³ and R⁴ are independently selected from the group consisting of aliphatic, cycloaliphatic, aryl, alkaryl and aralkyl groups, in particular unsubstituted or substituted alkyl groups, unsubstituted or substituted cycloaliphatic groups, unsubstituted or substituted alkenyl groups, unsubstituted or substituted alkaryl groups or unsubstituted or substituted aryl groups, each having 2 to 30 carbon atoms and having at least two carbon atoms adjacent to each other,
and wherein R¹-R⁴ may be the same or be selected from two, three or four different groups,
comprising
   a) at least one step of producing a bifunctional monosilane intermediate of the general formula (II)

      SiR¹R²¹HCl (II)

      wherein R¹ is as defined above,
      and R²¹ is selected from a chloro group, hydrido group or a group consisting of aliphatic, cycloaliphatic, aryl, alkaryl and aralkyl groups, in particular an unsubstituted or substituted alkyl group, unsubstituted or substituted cycloaliphatic group, unsubstituted or substituted alkaryl group, unsubstituted or substituted aralkyl group, an unsubstituted or substituted aryl group, or an unsubstituted or substituted alkenyl group, each having 1 to 30 carbon atoms,
      by
         - a redistribution reaction of an organoperchloromonosilane of the general formula (III)

            SiR¹R²²Cl₂ (III)

            wherein R¹ is as defined above,
            and R²² is selected from a chloro group or a group consisting of aliphatic, cycloaliphatic, aryl, alkaryl and aralkyl groups, in particular an unsubstituted or substituted alkyl group, unsubstituted or substituted cycloaliphatic group, unsubstituted or substituted alkaryl group, unsubstituted or substituted aralkyl group, an unsubstituted or substituted aryl group, or an unsubstituted or substituted alkenyl group each having 1 to 30 carbon atoms,
            with an organoperhydridomonosilane of the general formula (IV)

               SiR¹R²³H₂ (IV)
            wherein R¹ is as defined above,
            and R²³ is selected from a hydrido group or a group consisting of aliphatic, cycloaliphatic, aryl, alkaryl and aralkyl groups, in particular an unsubstituted or substituted alkyl group, unsubstituted or substituted cycloaliphatic group, unsubstituted or substituted alkaryl group, unsubstituted or substituted aralkyl group, an unsubstituted or substituted aryl group, or an unsubstituted or substituted alkenyl group, each having 1 to 30 carbon atoms,
            in the presence of a redistribution catalyst and optionally in the presence of one or more solvents, or by
         - a redistribution reaction of an organoperchloromonosilane of the general formula (III) with the in-situ formed hydrogenation products obtained by reacting the monosilane of the general formula (III),
            wherein R¹ is as defined above,
            and R²² is selected from a chloro group or a group consisting of aliphatic, cycloaliphatic, aryl, alkaryl and aralkyl groups, in particular an unsubstituted or substituted alkyl group, unsubstituted or substituted cycloaliphatic group, unsubstituted or substituted alkaryl group, unsubstituted or substituted aralkyl group, an unsubstituted or substituted aryl group, or an unsubstituted or substituted alkenyl group, each having 1 to 30 carbon atoms,
            with a metal hydride reagent of the general formula MHₓ, wherein M represents one or more metals and x is an integer from 1 to 6, or an organometallic hydride donor selected from diisobutylaluminum hydride, Me₃SnH, *n*Bu₃SnH, Ph₃SnH, Me₂SnH₂, *n*Bu₂SnH₂ and Ph₂SnH₂,
            in the presence of a redistribution catalyst and optionally in the presence of one or more solvents, or by
               - a chlorination reaction comprising reacting an organoperhydridomonosilane of the general formula (IV)

                  SiR¹R²³H₂ (IV)

                  wherein R¹ is as defined above,
                  and R²³ is selected from a hydrido group or a group consisting of aliphatic, cycloaliphatic, aryl, alkaryl and aralkyl groups, in particular an unsubstituted or substituted alkyl group, unsubstituted or substituted cycloaliphatic group, unsubstituted or substituted alkaryl group, unsubstituted or substituted aralkyl group, an unsubstituted or substituted aryl group, or an unsubstituted or substituted alkenyl group, each having 1 to 30 carbon atoms,
                  with tetrachlorosilane (SiCl₄) in the presence of at least one catalyst, optionally in the presence of one or more solvents, or by
               - a selective partial chlorination reaction of an organoperhydridomonosilane of the general formula (IV)

                  SiR¹R²³H₂ (IV)

                  wherein R¹ is as defined above,
                  and R²³ is selected from a hydrido group or a group consisting of aliphatic, cycloaliphatic, aryl, alkaryl and aralkyl groups, in particular an unsubstituted or substituted alkyl group, unsubstituted or substituted cycloaliphatic group, unsubstituted or substituted alkaryl group, unsubstituted or substituted aralkyl group, an unsubstituted or substituted aryl group, or an unsubstituted or substituted alkenyl group, each having 1 to 30 carbon atoms,
                  by reacting the compound with an HCl/ether reagent, optionally in the presence of one or more further solvents,
                     and
   b) at least one step of submitting a bifunctional monosilane intermediate of the general formula (II) as obtained from step (a) or HSiCl₃ to a metal-catalyzed hydrosilylation reaction with a compound containing at least one C-C double or C-C triple bond to obtain an intermediate of the general formula (V)

      SiR¹R²R³¹Cl (V)

      wherein R¹ and R² are selected from the group consisting of aliphatic, cycloaliphatic, aryl, alkaryl and aralkyl groups, in particular unsubstituted or substituted alkyl groups, unsubstituted or substituted cycloaliphatic groups, unsubstituted or substituted alkaryl groups, unsubstituted or substituted aralkyl groups, an unsubstituted or substituted aryl group, or an unsubstituted or substituted alkenyl group, each having 1 to 30 carbon atoms,
      R³¹ is selected from a chloro group or from the group consisting of aliphatic, cycloaliphatic, aryl, alkaryl and aralkyl groups, in particular unsubstituted or substituted alkyl groups, unsubstituted or substituted cycloaliphatic groups, unsubstituted or substituted alkenyl groups, unsubstituted or substituted alkaryl groups or unsubstituted or substituted aryl groups, each having 2 to 30 carbon atoms and having at least two carbon atoms adjacent to each other,
      or to obtain an intermediate of the formula R¹SiCl₃, wherein R¹ is as defined for the intermediate of the general formula (V),
         and
   c) a step of producing an intermediate of the general formula (VI)

      SiR¹R²R³²H (VI)

      by a hydrogenation reaction of a compound of the general formula (V) as obtained in a step b)
      wherein in the general formulae (V) and (VI)
      R¹ and R² are selected from the group consisting of aliphatic, cycloaliphatic, aryl, alkaryl and aralkyl groups, in particular unsubstituted or substituted alkyl groups, unsubstituted or substituted cycloaliphatic groups, unsubstituted or substituted alkaryl groups, unsubstituted or substituted aralkyl groups, an unsubstituted or substituted aryl group, or an unsubstituted or substituted alkenyl group, each having 1 to 30 carbon atoms,
      R³¹ is as defined above,
      and R³² is selected from a hydrido group or from the group consisting of aliphatic, cycloaliphatic, aryl, alkaryl and aralkyl groups, in particular unsubstituted or substituted alkyl groups, unsubstituted or substituted cycloaliphatic groups, unsubstituted or substituted alkenyl groups, unsubstituted or substituted alkaryl groups or unsubstituted or substituted aryl groups, each having 2 to 30 carbon atoms and having at least two carbon atoms adjacent to each other,
      or of producing an intermediate of the general formula R¹SiH₃ by a hydrogenation reaction of a compound of the formula R¹SiCl₃, wherein R¹ is as defined for the intermediate of the general formula (VI),
         and
   d) submitting an intermediate of the general formula (VI) or R¹SiH₃ obtained from step c) to a final hydrosilylation reaction with a compound containing one or more C-C double bonds or C-C triple bonds in order to obtain the silahydrocarbons of the general formula (I)

      SiR¹R²R³R⁴ (I)

      as defined above, wherein the intermediate is preferably a tertiary silane of the general structure SiR¹R²R³²H (VI) with R³² ≠ H.

### DETAILED DESCRIPTION OF THE INVENTION

In the following, the present invention is described in detail.

Unless otherwise restricted, the residues R¹, R², R³ and R⁴ have the following meaning according to the invention:
R¹ and R² are each independently selected from the group consisting of aliphatic, cycloaliphatic, aryl, alkaryl and aralkyl groups, in particular unsubstituted or substituted alkyl groups, unsubstituted or substituted cycloaliphatic groups, unsubstituted or substituted alkaryl groups, unsubstituted or substituted aralkyl groups, unsubstituted or substituted aryl groups, or unsubstituted or substituted alkenyl groups, each having 1 to 30 carbon atoms,
R³ and R⁴ are each independently selected from the group consisting of aliphatic, cycloaliphatic, aryl, alkaryl and aralkyl groups, in particular unsubstituted or substituted alkyl groups, unsubstituted or substituted cycloaliphatic groups, unsubstituted or substituted alkenyl groups, unsubstituted or substituted alkaryl groups or unsubstituted or substituted aryl groups, each having 2 to 30 carbon atoms and having at least two carbon atoms adjacent to each other.

They may be used in any general structure representing the groups as defined above. For example this means that in formula (II) R²¹ is selected from a chloro group, hydrido group or R², etc, Another example is that in formula (V): R³¹ is selected from a chloro group or R³, etc.

According to the present invention, an organyl group is any organic substituent group, regardless of functional type, having one free valence at a carbon atom thereof.

According to the invention, the products obtained from the process are silahydrocarbons of the general formula (I) SiR¹R²R³R⁴ (I),
wherein R¹, R², R³ and R⁴ of the formula (I) are independently selected from the group consisting of aliphatic, cycloaliphatic, aryl, alkaryl and aralkyl groups.

All following definitions regarding R² and R³ apply in the same manner to the groups R²¹, R²², R²³, R³¹ and R³² of the general formulas (II), (III), (IV), (V) and (VI) when they are selected from aliphatic, cycloaliphatic, aryl, alkaryl and aralkyl groups.

The groups R¹ and R² in general formula (I) can have 1 to 30 carbon atoms, preferably 1 to 20 carbon atoms, more preferably 1 to 12 carbon atoms, and most preferably at least one of R¹ and R² is a methyl group.

The groups R³ and R⁴ in general formula (I) can have 2 to 30 carbon atoms, preferably 2 to 20 carbon atoms, more preferably 2 to 12 carbon atoms, even more preferably at least one of R³ and R⁴ is different from the residues R¹ and R², still more preferably both R³ and R⁴ are different from the residues R¹ and R², most preferably both of R³ and R⁴ are different from the residues R¹ and R² and from each other.

All of the above-mentioned groups aliphatic, cycloaliphatic, aryl, alkaryl and aralkyl groups that independently constitute R¹, R², R³ and R⁴ can be unsubstituted or substituted.

According to the invention, in general the term "unsubstituted" means that the respective hydrocarbyl residues do not contain any heteroatoms other than H and C, neither as substituents such as halogen substituents, amino or hydroxyl groups, nor as part of functional groups included in the carbon scaffold of the hydrocarbyl groups, such as ether groups, ester groups or amide groups. The term "substituted" according to the invention in general defines that the hydrocarbyl groups can contain heteroatoms other than H and C and functional groups containing heteroatoms other than C and H, such as halogen substituents, hydroxyl groups, amino groups, ester groups, amide groups, ether groups and heterocyclic groups.

In case of substituted residues according to the above definition, according to the invention all carbon atoms included in a heteroatom-containing functional group are taken into consideration in the determination of the carbon number of a residue. For instance, if the residue R¹ is an octyl group substituted with a propoxy group, R¹ is considered to be a C11 group.

Also according to the invention, the term "aliphatic" refers to all hydrocarbyl substituents which are non-aromatic.

It is preferred when R¹ and R² are independently selected from the group consisting of unsubstituted or substituted alkyl groups, unsubstituted or substituted cycloaliphatic groups, unsubstituted or substituted alkaryl groups, unsubstituted or substituted aralkyl groups, unsubstituted or substituted aryl groups, or unsubstituted or substituted alkenyl groups, each having 1 to 30 carbon atoms, more preferably 1 to 20 carbon atoms, even more preferably 1 to 12 carbon atoms.

In the same manner it is preferred when R³ and R⁴ are independently selected from the group consisting of unsubstituted or substituted alkyl groups, unsubstituted or substituted cycloaliphatic groups, unsubstituted or substituted alkaryl groups, unsubstituted or substituted aralkyl groups, unsubstituted or substituted aryl groups, or unsubstituted or substituted alkenyl groups, each having 2 to 30 carbon atoms, more preferably 2 to 20 carbon atoms, even more preferably 2 to 12 carbon atoms.

According to the present invention, the term "alkyl" generally includes straight, branched groups. Preferred examples of unsubstituted alkyl groups are methyl, ethyl, propyl, hexyl, octyl, iso-butyl and tert-butyl.

Preferred substituted alkyl groups in the residues R¹, R², R³ and R⁴ are substituted with one or more groups selected from acyloxy groups, alkoxy groups, ester groups (-COOR), wherein the carbonyl C atom is considered to be a C atom of the substituent and R is a hydrocarbyl residue, in particular a C1-C12 alkyl group, amino groups, halogen groups, in particular fluoro, chloro or bromo groups, silyl groups or siloxy groups.

Preferred examples of substituted alkyl groups in the residues R¹, R², R³ and R⁴ are linear alkyl groups substituted with a methyl ester group, ethyl ester group, iso-butyl ester group, tert-butyl ester group,
linear alkyl groups substituted with one or more methoxy groups, ethoxy groups, propoxy groups, polyoxyethylene groups with 2-10, preferably 2-6 (CH₂CH₂O) repeating units, iso-butoxy groups or tert-butoxy groups,
linear alkyl groups substituted with one or more acetoxy groups or unsubstituted linear C3, C4, C16, C18, C19 or C20 acetoxy groups,
linear alkyl groups substituted with one or more NH₂ groups or NMe₂ groups,
linear alkyl groups substituted with one or more fluoro groups, chloro groups or bromo groups, linear alkyl groups substituted with one or more SiMe₃ groups, SiEt₃ groups, Si(iPr)₃ groups or Si(tBu)Me₂ groups, and linear alkyl groups substituted with one or more Si(OMe)₃ groups, Si(OEt)₃ groups, Si(OiPr)₃ groups or Si(OcyHex)₃ groups (cyHex= cyclo hexyl).

It is clear that according to the invention, in general the substituted groups can bear several substituents selected from different types of functional groups or heteroatom substituents, and thus the substituted alkyl groups may also bear several substituents selected from different types of functional groups and heteroatom substituents.

According to the invention, the term "cycloaliphatic" in general includes all types of cyclic organyl substituents excluding cyclic aromatic substituents and cyclic heterocyclic substituents.

According to the invention, the term "alkaryl" in general describes an aryl group in which one or more hydrogen atoms have been substituted by the same number of alkyl groups, which alkyl groups may be the same or different from another. Preferred examples of alkaryl groups are tolyl groups and xylyl groups and mesityl groups, in particular para-tolyl groups.

According to the invention, the term "aralkyl" in general describes an alkyl group in which one or more hydrogen atoms have been substituted by the same number of aryl groups, which aryl groups may be the same or different from another. Preferred examples of aralkyl groups are benzyl groups and phenylethyl groups.

According to the invention, the term "aryl group" in general is defined as any aromatic hydrocarbon from which one hydrogen atom has been removed. An aryl may have one or more aromatic rings, which may be fused, connected by single bonds or other groups. Preferred examples of aryl groups are phenyl groups, biphenyl groups, naphthalenyl groups, phenyl groups are most preferred.

According to the invention, the term "alkenyl group" in general is defined as any straight, branched, or cyclic alkenyl group containing one or more carbon-carbon double bonds, wherein the point of substitution can be either at a carbon-carbon double bond or elsewhere in the group. Specifically, with regards to the residues R¹, R², R²¹, R²², R²³, R³, R³¹, R³² and R⁴ (when they are selected from aliphatic, cycloaliphatic, aryl, alkaryl and aralkyl groups) of the formulas (I) to (VI) according to the present invention, this means there is no limitation which carbon atom of an alkenyl group is bonded to the central Si atom.

Preferred examples of alkenyls are vinyl, propenyl, allyl, methallyl, and ethylidenyl norbornane, wherein vinyl is most preferred.

It is also preferred that the alkenyl groups in the residues R¹, R², R³ or R⁴ are bonded to the central Si atom of the silahydrocarbon by a terminal C-atom of the group which is at the same time a C atom of a carbon-carbon double bond, i.e. 1-alkenyl groups, wherein it is more preferred that the 1-alkenyl groups are C1-C12 1-alkenyl groups, most preferably unsubstituted C1-C12 1-alkenyl groups. Such preferred residues can be introduced by performing a hydrosilylation reaction of the corresponding terminal alkynes with hydridosilanes.

In step a) of the process according to the invention a bifunctional monosilane of the general formula SiR¹R²¹HCl (II) is provided, wherein such bifunctional monosilane is either an organohydridodichlorosilane of the formula SiR¹HCl₂, an organodihydridochlorosilane of the formula SiR¹H₂Cl, or a diorganohydridochlorosilane of the formula SiR¹R²HCl, wherein R¹ and R² are as defined above.

In step a) of the process according to the invention, the bifunctional intermediate of the general formula SiR¹R²¹HCl (II) can be provided by a redistribution reaction of a organoperchloromonosilane of the general formula SiR¹R²²Cl₂ (III), which can be an organotrichlorosilane of the formula SiR¹Cl₃ or a diorganodichlorosilane of the formula SiR¹R²Cl₂, wherein R¹ and R² are as defined above,
and an organoperhydridosilane of the general formula SiR¹R²³H₂ (IV), which can be an organotrihydridosilane of the formula SiR¹H₃ or a diorganodihydridosilane of the formula SiR¹R²H₂, wherein R¹ and R² are as defined above, in the presence of a redistribution catalyst and optionally in the presence of a solvent.

According to the present invention, the term "redistribution reaction" describes the redistribution of hydrogen and chlorine substituents bonded to the silicon atoms of the silane compounds comprised in the reaction mixture of such reaction by exchange of these substituents. The exchange can be monitored in particular by ²⁹Si NMR spectroscopy, by GC and/or GC/MS analysis.

On lab scale, the redistribution reactions are performed under inert conditions (N₂- or Ar-atmosphere) and can be performed in normal laboratory glass ware, sealed ampules or in steal autoclaves (depending on the reaction conditions needed). The reaction vessels are equipped with a stirring bar for thoroughly mixing the reactants. Preferred temperatures are in a range of 40-200 °C, wherein 60-140 °C are most preferred. For reactions performed in open-systems, the flasks are equipped with a reflux condenser. Preferred pressures are in a range of 1-20 bar, wherein 1-10 bar are most preferred, depending on the reaction vessel used. On technical scale and industrial scale, the same pressure and temperature ranges are preferred, and reaction vessels made from glass, metal alloys or any other material suitable for performing the reaction under such pressure and temperature conditions may be used.

Preferably, a mixing device is used in the reaction vessel, and the reactions may be performed batchwise or under continuous flow conditions.

Accordingly, the term "redistribution catalyst" applies to any compound or mixture of compounds increasing the rate of the above-defined redistribution reaction without itself undergoing a permanent chemical change.

Preferably, the redistribution catalyst, which may also be a mixture of two or more individual catalysts, is selected from the group consisting of the compounds
- R⁵₄PCl, wherein R⁵ is selected from the group consisting of hydrogen and an organyl group, which can be the same or different, more preferably R⁵ is selected from the group consisting of an aromatic group and an aliphatic hydrocarbon group, even more preferably a n-alkyl group, and most preferably a n-butyl group,
- phosphines R⁵₃P, wherein R⁵ is selected from the group consisting of hydrogen and an organyl group and can be the same or different, preferably R⁵₃P, wherein R⁵ is not hydrogen and can be the same or different, such as preferably PPh₃,
- amines R⁵₃N, wherein R⁵ is selected from the group consisting of hydrogen or an organyl group and can be the same or different, preferably R⁵₃N, wherein R⁵ is not hydrogen and can be the same or different, such as preferably *n*-Bu₃N,
- N-heterocyclic amines, preferably methylimidazoles, such as 2-methylimidazole, 4-methylimidazole and 1-methylimidazole, and
- ammonium compounds, such as R⁵₄NCl, wherein R⁵ is selected from the group consisting of hydrogen and an organyl group and can be the same or different, preferably R⁵₄NCl, wherein R⁵ is not hydrogen and can be the same or different, such as preferably *n*-Bu₄NCl.

The redistribution reaction can be performed neat, i.e. in the absence of an additional solvent, or in the presence of a solvent, which is preferably an organic solvent that is practically inert under the reaction conditions.

According to the present invention, the term "organic solvent" refers to any organic compound or mixtures thereof which is in liquid state at room temperature, and which is suitable as a medium for conducting the redistribution reactions of a step a) therein. Accordingly, the organic solvent is preferably inert to the organohydridosilanes, organochlorosilanes, organohydridochlorosilanes and the redistribution catalysts according to present invention under reaction conditions. Furthermore, the starting materials of the general formulas (III), (IV) and the products of the general formula (II) are preferably soluble in the organic solvent or fully miscible with the organic solvent, respectively.

Preferably, the organic solvent is selected from optionally substituted, preferably unsubstituted linear or cyclic aliphatic hydrocarbons, aromatic hydrocarbons or ether compounds, without being limited thereto.

Herein, the term "ether compound" shall mean any organic compound containing an ether group -O- (one or more ether groups are possible), in particular of the formula R⁶-O-R⁷, wherein R⁶ and R⁷ are independently selected from an organyl group R as defined above.

In general, the organyl group R can be selected for example from optionally substituted, preferably unsubstituted, alkyl, aryl, alkenyl, alkynyl, alkaryl, aralkyl, aralkenyl, aralkynyl, cycloalkyl, cycloalkenyl, cycloalkynyl, cycloaralkyl, cycloaralkenyl, and cycloaralkynyl groups, preferably from alkyl, alkenyl and aryl groups.

Preferably, R⁶ and R⁷ are substituted or unsubstituted linear or branched alkyl groups or aryl groups, which may have further heteroatoms such as oxygen, nitrogen, or sulfur. In the case of cyclic ether compounds, R⁶ and R⁷ can constitute together an optionally substituted alkylene or arylene group, which may have further heteroatoms such as oxygen, nitrogen, or sulfur, as for instance in dioxanes, in particular 1,4-dioxane.

The ether compounds can be symmetrical or asymmetrical with respect to the substituents at the ether group(s) -O-.

The term "ether compound" according to the invention also comprises linear ether compounds in which more than one ether group may be included, forming a di-, tri-, oligo- or polyether compound, wherein R⁶ and R⁷ constitute organyl groups when they are terminal groups of the compounds, and alkylene or arylene groups when they are internal groups. Herein, a terminal group is defined as any group being linked to one oxygen atom which is part of an ether group, while an internal group is defined as any group linked to two oxygen atoms being a constituent of ether groups.

Preferred examples of such compounds are dimethoxy ethane, glycol diethers (glymes), in particular diglyme or tetraglyme, without being limited thereto.

According to the present invention, the term "high-boiling ether compound" is defined as an ether compound according to the above definition with a boiling point at 1.013 bar (standard atmosphere pressure) of preferably at least 65 °C, more preferably at least 85 °C, even more preferably at least 100 °C, and most preferably at least 120 °C.

The application of high-boiling ethers in the present invention is favorable as it facilitates separation of the desired products of the general formula (I) from the reaction mixture containing the solvent and residual starting materials. The products of the general formula (I) in general have lower boiling points than the high-boiling ethers as defined herein.

For example, the boiling points of selected representative products of the general formula (I) are 35 °C (Me₂SiHCI) and 41 °C (MeSiHCl₂) at atmospheric pressure, while the representative higher-boiling ether compound diglyme has a boiling point of 162 °C at standard atmospheric pressure. Application of higher-boiling ether compounds as solvents allows higher reaction temperatures and allows a more efficient separation of the desired products from the reaction mixture by distillation.

In step a) of the process according to the invention, the bifunctional intermediate of the general formula SiR¹R²¹HCl (II) can also be provided by a redistribution reaction of a organoperchloromonosilane of the general formula SiR¹R²²Cl₂ (III), which can be an organotrichlorosilane of the formula SiR¹Cl₃ or a diorganodichlorosilane of the formula SiR¹R²Cl₂, wherein R¹ and R² are as defined above, with the in-situ formed hydrogenation products obtained by reacting the monosilane of the general formula (III), with a metal hydride reagent of the general formula MHₓ, wherein M represents one or more metals and x is an integer from 1 to 6, or an organometallic hydride donor selected from diisobutylaluminum hydride, Me₃SnH, *n*Bu₃SnH, Ph₃SnH, Me₂SnH₂, nBu₂SnH₂ and Ph₂SnH₂, in the presence of a redistribution catalyst and optionally in the presence of a solvent.

While the same redistribution catalysts and solvents are used as for the redistribution reaction of the compounds of the general formula (III) and (IV) as described above, the redistribution partners of the compounds of the general formula (III) are formed in situ. Herein, the term "formed in situ" according to the invention means that hydrogenated analogues, i.e. compounds in which one to all chlorine substituents of the compounds of the general formula (III) at the silicon atom have been replaced by hydrogen substituents, are formed from the compounds of the general formula (III) by contacting these compounds and the metal hydride reagent of the general formula MHₓ or an organometallic hydride donor as described above in the reaction vessel in which such reaction step a) is performed.

In accordance with the present invention, the term metal hydride reagent refers to any hydride donor containing at least one metal atom or metal ion, wherein it is specified that the metal hydride reagent according to the invention is of the general formula MHₓ with x = 1-6. The formula MHₓ with x = 1-6, wherein M may represent several different metal atoms, cations or metal atoms or cations contained in complex anions at the same time, explicitly includes complex metal hydrides.

The term "complex metal hydrides" according to the invention refers to metal salts wherein the anions contain both metal atoms or cations and hydride anions. Typically, complex metal hydrides contain more than one types of metal or metalloid element atoms. As there is neither a standard definition of a metalloid nor complete agreement on the elements appropriately classified as such, in the sense of present invention the term "metalloid" comprises the elements boron, silicon, germanium, tin, arsenic, antimony, tellurium, carbon, aluminum, selenium, polonium, and astatine. The most preferred example of a complex metal hydride is LiAlH₄, which consists of lithium cations and tetrahydridoaluminate anions.

The term "organometallic hydride donor" according to the invention refers to any compound containing at least one metal atom bonded to at least one organyl residue, wherein further at least one metal atom or ion is bonded to a hydrogen atom covalently or as an organometallic cation - hydride ion pair.

Alternatively, in step a) of the process according to the invention the bifunctional intermediate of the general formula SiR¹R²¹HCl (ll) can also be provided by a chlorination reaction comprising the reaction of an organoperhydridomonosilane of the general formula (IV)

SiR¹R²³H₂ (IV)

wherein R¹ is as defined above,
and R²³ is selected from a hydrido group or a group consisting of aliphatic, cycloaliphatic, aryl, alkaryl and aralkyl groups, in particular an unsubstituted or substituted alkyl group, unsubstituted or substituted cycloaliphatic group, unsubstituted or substituted alkaryl group, unsubstituted or substituted aralkyl group, an unsubstituted or substituted aryl group, or an unsubstituted or substituted alkenyl group, each having 1 to 30 carbon atoms,
with tetrachlorosilane (SiCl₄) in the presence of at least one catalyst, optionally in the presence of one or more solvents.

According to the invention, the at least one catalyst in this reaction is selected from the group consisting of:
- one or more compounds of the formula R⁸₄QZ, wherein R⁸ is independently chosen from hydrogen or an organyl group, more preferably an aromatic group or aliphatic hydrocarbon group, even more preferably a n-alkyl group, and most preferably a n-butyl group, Q is phosphorus, nitrogen, arsenic, antimony or bismuth, and Z is halogen,
- one or more phosphines of the formula R⁸₃P, wherein R⁸ is as defined above, preferably an organyl group, preferably PPh₃ or *n*-Bu₃P,
- one or more amines of the formula R⁸₃N, wherein R⁸ is as defined above, preferably an organyl group, preferably n-Bu₃N or NPh₃,
- one or more N-heterocyclic amines, preferably non-N-substituted methylimidazoles, such as 2-methylimidazole, and 4-methylimidazole,
- one or more alkali metal halides, such as LiCI, and
- one or more alkaline earth metal halides.

Regarding the catalysts of the formula R⁸₄QZ, R⁸ is preferably an organyl group, more preferably an aliphatic hydrocarbon group, even more preferably an n-alkyl group, and most preferably a n-butyl group, Q is preferably phosphorus or nitrogen, and Z is chlorine. Particularly preferred examples of catalysts represented by the formula R⁸₄QZ are *n*Bu₄NCl, *n*Bu₄PCl, *n*Bu₄NBr and *n*Bu₄PBr, wherein *n*Bu₄NCl is most preferred.

According to the invention, the above-described chlorination reaction is carried out in the presence or absence of at least one solvent, which is preferably an organic solvent that is practically inert under the reaction conditions as described above.

The chlorination reaction is preferably carried out at a temperature in the range of about -40°C to about 250°C, more preferably in the range of about 0 °C to 200 °C, and most preferably in the range of about 40 °C to 160 °C.

Likewise, according to the invention the chlorination reaction is preferably carried out at a pressure from about 0.1 to about 10 bar, more preferably at a pressure from 1 to 10 bar.

According to the invention, as all steps of the process according to the reaction, the chlorination reaction is preferably carried out under inert conditions.

The term "inert conditions" herein refers to conditions excluding the presence of moisture and oxygen, in particular moisture and oxygen from ambient air. Preferably, inert conditions are established by performing the reactions according to the invention in an inert gas atmosphere, such as a nitrogen atmosphere or argon atmosphere.

Further, in step a) of the process according to the invention, the bifunctional intermediate of the general formula SiR¹R²¹HCl (II) can also be provided by a selective partial chlorination reaction of an organoperhydridomonosilane of the general formula SiR¹R²³H₂ (IV), which can be an organotrihydridosilane SiR¹H₃ or a diorganodihydridosilane SiR¹R²H₂ with R¹ and R² as defined above, by reacting the compound with an HCl/ether reagent, optionally in the presence of one or more further solvents.

The optional further solvents in this reaction step is preferably an organic solvent, which according to the invention is defined as any organic compound which is in liquid state under reaction conditions and which is suitable as a medium for conducting the partial chlorination step therein. Accordingly, the organic solvent is preferably inert to the organohydridosilanes, and HCl/ether reagents applied according to present invention under reaction conditions, as well as to the resulting organohydridochlorosilanes. In general, the solvents may be the same as defined for the above redistribution steps, wherein an ether compound or a mixture of solvents containing at least one ether compound are preferred.

The HCl/ether reagent effecting the partial chlorination reaction is obtained by absorption or dissolution of HCl by an ether compound, which may be performed before the HCl/ether reagent is introduced into the reaction vessel of step a), or in situ by contacting gaseous HCl or a HCl solution with the ether compounds or a mixture containing at least one ether compound in situ in the reaction vessel in which step a) is performed.

In the present invention, the term "ether compound" shall mean any organic compound containing an ether group -O-, in particular of the formula R⁶-O-R⁷, wherein R⁶ and R⁷ are independently selected from an organyl group as defined herein above.

The ether compounds can be symmetrical or asymmetrical with respect to the substituents at the ether group -O-, and the ether compound is selected from the group consisting of linear and cyclic ether compounds. Herein, a linear ether compound is a compound containing an ether group R⁶OR⁷ as defined above, in which there is no connection between the R⁶ and R⁷ group except the oxygen atom of the ether groups, as for example in the symmetrical ethers Et₂O, *n*-Bu₂O, Ph₂O or diisoamyl ether (*i*-Pentyl₂O), in which R⁶ = R⁷, or in unsymmetrical ethers as t-BuOMe (methyl t-butyl ether, MTBE) or PhOMe (methyl phenyl ether, anisol).

A cyclic ether compound according to the invention is a compound in which one or more ether groups are included in a ring formed by a series of atoms, such as for instance tetrahydrofurane, tetrahydropyrane or 1,4-dioxane, which can be substituted e.g. by alkyl groups.

Preferably, the ether compound selected from the group consisting of linear and cyclic ether compounds is an aliphatic compound.

Also preferably, R⁶ and R⁷ are substituted or unsubstituted linear or branched alkyl groups or aryl groups, which may have further heteroatoms such as oxygen, nitrogen, or sulfur. In the case of cyclic ether compounds, R⁶ and R⁷ can constitute together an optionally substituted alkylene or arylene group, which may have further heteroatoms such as oxygen, nitrogen, or sulfur.

More preferably, R⁶ and R⁷ are independently selected from linear alkyl groups and linear alkoxyalkyl groups, most preferably from linear alkyl groups and linear alkoxyalkyl groups with 1 to 10 C atoms, and even more preferably the ether compound is selected from the group consisting of diethyl ether, di-n-butyl ether, diethylene glycol dimethyl ether (diglyme), tetraethylene glycol dimethyl ether (tetraglyme), and dioxane, preferably 1,4-dioxane, 2-methyltetrahydrofurane, tetrahydrofurane, tetrahydropyrane and dimethoxy ethane.

The use of a specific HCl/ether reagent is mostly determined by the boiling points of the products formed. For simplification of product isolation, for high boiling products the use of the hydrogen chloride / diethyl ether reagent is favored, while for low boiling organochlorosilanes of the general formula (II) high boiling ethers, e.g. diglyme, are preferred.

Preferably, the partial chlorination reaction with hydrogen chloride in the presence of at least one ether compound is performed in the absence of a metal-containing catalyst, more preferably in the absence of Lewis acid compounds containing a metal atom from group 13.

In the at least one step b) according to the invention, an organohydridochlorosilane of the formula (II) as defined above or HSiCl₃ is submitted to a metal-catalyzed hydrosilylation reaction, preferably a precious metal-catalyzed hydrosilylation reaction, with a compound containing at least one C-C double or C-C triple bond, resulting in the formation of an organochlorosilane of the general formula SiR¹R²R³¹Cl (V), which can be a diorganodichlorosilane SiR¹R²Cl₂ or a triorganochlorosilane SiR¹R²R³Cl, wherein R¹ and R² are as defined above, and R³ is selected from the group consisting of aliphatic, cycloaliphatic, aryl, alkaryl and aralkyl groups, in particular unsubstituted or substituted alkyl groups, unsubstituted or substituted cycloaliphatic groups, unsubstituted or substituted alkenyl groups, unsubstituted or substituted alkaryl groups or unsubstituted or substituted aryl groups, each having 2 to 30 carbon atoms and having at least two carbon atoms adjacent to each other, or resulting in an intermediate of the formula R¹SiCl₃, wherein R¹ is as defined for the intermediate of the general formula (V), if HSiCl₃ is applied as starting material. Such step b) according to the invention requires the presence of a metal-based hydrosilylation catalyst.

According to the invention, a metal hydrosilylation catalyst can be any reagent containing metal atoms or metal ions which increases the rate of the hydrosilylation of C-C-unsaturated compounds by the organochlorohydridosilanes of the general formula (II) or by HSiCl₃, and accordingly a precious metal hydrosilylation catalyst can be any reagent containing precious metal atoms or ions effecting the hydrosilylation of C-C-unsaturated compounds by the organochlorohydridosilanes of the general formula (II) or by HSiCl₃.

In the present invention, the metals platinum, iridium, palladium, osmium, rhodium, ruthenium, copper, silver, gold and mercury are considered to be precious metals, and accordingly the hydrosilylation catalysts of steps b) according to the invention can be based on metals and in particular on the above-listed precious metals.

Preferably, the hydrosilylation catalyst of step b) of the process according to the invention is selected from the group of Mn, Fe, Co, Ni, Ir, Rh, Ru, Os, Pd and Pt compounds as taught in US 3,159,601; US 3,159,662; US 3,419,593; US 3,715,334; US 3,775,452; US 3,814,730; US 20130158281 A1; WO 2013090548 A1; WO 2011006049 A1; US 20110009573 A1; WO 2011006044 A2; US 20110009565 A1; US 9,387,468; US 20180015449; US 20180201634; US 9,890,182 and US 9,371,339. Most preferred are platinum compounds.

The hydrosilylation catalyst of step b) is a catalyst compound which facilitates the reaction of C-C-unsaturated compounds by the organochlorohydridosilanes of the general formula (II) or by HSiCl₃. The metal or organo metal compound is preferably based on a platinum group metal. Without wishing to be bound by theory, it is believed that the above-cited hydrosilylation catalyst includes complexes with sigma- and pi-bonded carbon ligands as well as ligands with S-, N, or P atoms, metal colloids or salts of the afore mentioned metals. The catalyst can be present on a carrier such as silica gel or powdered charcoal, bearing the metal, or a compound or complex of that metal. Preferably, the metal-based hydrosilylation catalyst is any platinum complex compound. The metal-based hydrosilylation catalyst may be immobilized on a support, such as silica, alumina, activated charcoal, carbon black, clays and organic polymeric materials or a polysiloxane-based material. Therein, immobilization on a silica support, a functionalized silica support, an activated charcoal or carbon black support, a polymeric organic material or a polysiloxane-based material is preferred.

A typical platinum containing catalyst component applied in step b) of this invention is any form of platinum (0), (II) or (IV) compounds, which are able to form complexes. Preferred complexes are Pt-⁽⁰⁾-alkenyl complexes, such alkenyl, cycloalkenyl, alkenylsiloxane such as vinylsiloxane. A particularly useful form of the platinum complexes are the Pt⁽⁰⁾-complexes with aliphatically unsaturated organosilicon compound such as a 1,3-divinyltetramethyldisiloxane (Vinyl-M2) or Karstedt catalyst: 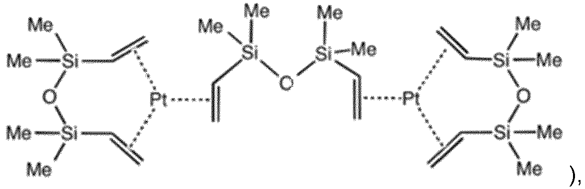 as disclosed by e.g. US 3,419,593 which are especially preferred, cyclohexene-Pt, cyclooctadiene-Pt and tetravinyltetramethyl-tetracyclosiloxane (Vinyl-D4)-Pt, e.g. Ashby's catalyst, a Pt(0) complex in tetramethyltetravinylcyclotetrasiloxane with the empirical formula Pt[(C₃H₆SiO)₄]ₓ.

Also preferred is a so-called Lamoreaux catalyst, which is a platinum (II) complex compound, obtained from chloroplatinic acid hexahydrate and octyl alcohol (as described for example in US 3,197,432 or US 3,220,972). Further preferred are Pt(0) or Pt(II) catalysts, with preference to Ashby and Lamoreaux platinum catalysts.

The amount of platinum-containing catalyst component that is used in the compositions of this invention is not narrowly limited as long as there is a sufficient amount to accelerate the hydrosilylation between C-C-unsaturated compounds and the organochlorohydridosilanes of the general formula (II) or by HSiCl₃ at the desired temperature in the required time (B) for step b). The exact necessary amount of said catalyst component will depend upon the particular catalyst, the amount of other inhibiting compounds and the SiH to olefin ratio and is not easily predictable. However, for platinum catalysts said amount can be as low as possible due to cost reasons. Preferably, one should add more than one part by weight of platinum for every one million parts by weight of the organochlorohydridosilanes of the general formula (II) or HSiCl₃ to ensure hydrosilylation in the presence of other undefined inhibiting traces. For the hydrosilylation reaction of step b) of this invention the amount of platinum-containing catalyst component to be applied is preferably in the range of from 1 to 200 ppm, preferably 2 to 100 ppm, especially preferred 4 to 60 ppm by weight platinum per weight of organochlorohydridosilanes of the general formula (II) or of HSiCl₃. Preferably, said amount is at least 4 ppm platinum by weight of organochlorohydridosilanes of the general formula (II) or of HSiCl₃.

The hydrosilylation step b) can be performed under the assistance of heat or light. Light-curing is then initiated by irradiation with light, in particular UV light having a wavelength maximum between 300 and 550 nm. Irradiation-initiated hydrosilylation is performed preferably at room temperature (25 °C).

Accordingly, the hydrosilylation catalyst can also be selected from the group of catalysts capable of being photoactivated. These photo-activatable catalysts preferably contain at least one metal selected from the group composed of Pt, Pd, Rh, Co, Ni, Ir or Ru. The catalysts capable of being photoactivated preferably comprise platinum compounds. Catalyst capable of being photo-activatable is preferably selected among organometallic compounds, i.e. comprise carbon-containing ligands, or salts thereof. Preferably, the photoactive hydrosilylation catalyst (C) has metal carbon bonds, including sigma- and pi-bonds. Also preferably, the catalyst capable of being photo-activated (C) is an organometallic complex compound having at least one metal carbon sigma bond, still more preferably a platinum complex compound having preferably one or more sigma-bonded alkyl and/or aryl group, preferably alkyl group(s). Sigma-bonded ligands include in particular, sigma-bonded organic groups, preferably sigma-bonded C₁-C₆-alkyl, more preferably sigma-bonded methyl groups, sigma-bonded aryl groups, like phenyl, Si and O substituted sigma bonded alkyl or aryl groups, such as trisorganosilylalkyl groups, sigma-bonded silyl groups, like trialkyl silyl groups. Most preferred photo-activatable catalysts include η⁵-(optionally substituted)-cyclopentadienyl platinum complex compounds having sigma-bonded ligands, preferably sigma-bonded alkyl ligands.

Further catalysts capable of being photoactivated include (η-diolefin)-(sigma-aryl)-platinum complexes (see e.g. US 4,530,879).

The catalyst capable of being photoactivated can be used as such or supported on a carrier. Examples of catalysts capable of being photo-activated include η-diolefin-σ-aryl-platinum complexes, such as disclosed in US 4,530,879, EP 122008, EP 146307 (corresponding to US 4,510,094 and the prior art documents cited therein), or US 2003/0199603, and also platinum compounds whose reactivity can be controlled by way for example using azodicarboxylic esters, as disclosed in US 4,640,939 or diketonates.

Platinum compounds capable of being photo-activated that can be used are moreover those selected from the group having ligands selected from diketones, e.g. benzoylacetones or acetylenedicarboxylic esters, and platinum catalysts embedded into photodegradable organic resins. Other Pt-catalysts are mentioned by way of example in US 3,715,334 or US 3,419,593, EP 1 672 031 A1 and Lewis, Colborn, Grade, Bryant, Sumpter, and Scott in Organometallics, 1995, 14,

Catalysts capable of being photo-activated can also be formed in-situ in the reaction mixture of step b) by using Pt⁰-olefin complexes and adding appropriate photo-activatable ligands thereto.

The catalysts capable of being photo-activated that can be used here are, however, not restricted to these above-mentioned examples.

The most preferred catalyst capable of being photo-activated to be used in the process of the invention are (η⁵-cyclopentadienyl)-trimethyl-platinum, (η⁵-cyclopentadienyl)-triphenyl-platinum complexes, in particular, (η⁵-methylcyclopentadienyl)-trimethyl-platinum.

The amount of the catalyst capable of being photo-activatable is preferably 1 to 500 ppm and preferably in the same lower range as defined for the heat-activatable hydrosilylation catalysts mentioned above.

The compound submitted to the hydrosilylation reaction of step b) can be any compound which in a hydrosilylation reaction is converted to a residue as defined for R³.

In general, the compound containing at least one C-C double bond or C-C triple bond can be selected from mono- or polyunsaturated alkenes, mono- or polyunsaturated alkynes, and compounds containing both C-C double bonds and C-C triple bonds, each having 2 to 30 carbon atoms.

Preferred compounds containing at least one C-C double bond or C-C triple bond applied in the hydrosilylation reaction of step b) are
- 1-alkenes, preferably linear C2-C16 1-alkenes, more preferably 1-butene, 1-pentene, 1-hexene, 1-heptene, 1-octene, 1-nonene, 1-decene, 1-undecene and 1-dodecene,
- 1-alkynes, preferably linear C2-C12 1-alkynes, more preferably 1-butyne, 1-pentyne, 1-hexyne, 1-heptyne, 1-octyne, 1-nonyne, 1-decyne, 1-undecyne and 1-dodecyne, and
- linear ester group-substituted alkenes, preferably C8-C24 monounsaturated alkenylesters.

In the at least one step c) according to the invention, a compound of the general formula (V) or of the general formula R¹SiCl₃ as defined above is submitted to a hydrogenation reaction, resulting in the formation of an intermediate of the general formula SiR¹ R²R³²H (VI), which can be a diorganodihydrido silane SiR¹R²H₂ or a triorganohydrido silane SiR¹R²R³H, wherein R¹, R² and R³ are as defined above, or of R¹SiH₃, wherein R¹ is as defined above.

According to the invention, the hydrogenation reaction of step c) is any kind of reaction in which all chloro substituents at the silicon atom of the starting materials are replaced by hydrogen substituents.

Preferably, the hydrogenation of the organochlorosilanes is effected by reacting the compounds with metal hydrides, mixed metal hydrides, organometallic hydride donors or with hydrogen gas in the presence of a hydrogenation catalyst.

Preferred metal hydrides are LiH, NaH, KH, CaH₂, AlH₃ and BH₃; LiH and NaH are most preferred, preferred mixed metal hydrides are LiAlH₄, NaBH₄, KBH₄ and Zn(BH₄)₂, wherein LiAlH₄ is most preferred, preferred organometallic hydride donors are diisobutyl aluminum hydride, LiEt₃BH, K(sec-Bu)₃BH, nBu₃SnH, Me₃SnH, Ph₃SnH, nBu₂SnH₂, Me₂SnH₂, and Ph₂SnH₂, wherein nBu₃SnH is most preferred, and preferred hydrogenation catalysts for the hydrogenation with hydrogen gas are based on the metals Ti, Zr, Hf, Ni, Pd, Pt, Mo, W, Nb, Ta, Ba, Sr, Ca, Mg, Ru, Rh, Ir and combinations thereof, which means the metals are either present in elemental state or as any kind of salt thereof.

In step d) of the process according to the invention, a compound of the general formula SiR¹R²R³²H (VI), which can be a diorganodihydrido-silane SiR¹R²H₂ or a triorganohydridosilane SiR¹ R²R³H, wherein R¹, R² and R³ are as defined above, is submitted to a hydrosilylation reaction with a compound containing one or more C-C double bonds or C-C triple bonds, resulting in the formation of the target compounds of the general formula (I).

Therein, preferably a metal catalyst as defined for step b) is applied in step d) for increasing the reaction rate of the hydrosilylation reaction of a compound of the general formula (VI) and a compound containing one or more C-C double bonds or C-C triple bonds, and the compound containing one or more C-C double bonds or C-C triple bonds is as defined for step b) as well. According to the invention, it is preferred that the intermediate submitted to step d) is a triorganohydridosilane SiR¹R²R³²H as defined above, i.e. R³² ≠ H, which is in particular crucial for the selective synthesis of silahydrocarbons bearing three or four different substituents. Preferably, the residues R¹, R², and R³ are selected from two or more, preferably three different residues.

Step d) is necessarily the final step of the process for the production of silahydrocarbons.

It is noted that according to the invention, in general the residue R²¹ is the same as R² defined above or a chloro or a hydrido substituent, the group R²² is the same as R² defined above or a chloro substituent, and the group R²³ is the same as R² defined above or a hydrido substituent, unless this range is explicitly restricted in a preferred range of a specific embodiment.

It is likewise noted that according to the invention, in general the residue R³¹ is the same as R³ defined above or a chloro substituent, and the group R³² is the same as R³ defined above or a hydrido substituent, unless this range is explicitly restricted in a preferred range of a specific embodiment.

In a preferred embodiment according to the invention, the four organyl substituents R¹, R², R³ and R⁴ at the silicon center of the silahydrocarbon product of the general formula (I) are selected from at least two, preferably from at least three, and most preferably from four different groups.

By the process of the present invention silahydrocarbons bearing up to four different substituents can be prepared in a selective manner. Therein, the process can be performed by submitting to the process compounds obtained by performing a hydrosilylation reaction using SiHCl₃, or by submitting mono- and diorganochlorosilanes obtainable for instance from side-products of industrial processes. Accordingly, it is possible to introduce all four substituents independently by hydrosilylation, if desired. Performing the reactions as disclosed herein sequentially starting from mono- or diorganochlorosilanes or by the hydrosilylation of trichlorosilane (HSiCl₃), the synthesis of a rather unlimited range of tetraorganosilanes is efficiently possible. The preferred bifunctional starting materials HSiCl₃, MeSiHCl₂ and Me₂SiHCl are industrially available as compounds produced in the Siemens Process as well as the Rochow-Müller Process (Direct Process); more specifically, methylchlorosilanes are obtained from cleavage of disilanes MeₙSi₂Cl₆₋ₙ (n=1-5), isolated from the Direct-Process-Residue (N. Auner et al. Chem. Eur. J. 2019, 25, 3809-3815 and Chem. Eur. J. 2019, 25, 13202-13207) or, alternatively, from cleavage of disilanes MeₙSi₂H₆₋ₙ (n=1-5) and chlorination of methylhydridomonosilanes by ether/HCl solutions (M. C. Holthausen et al. Chem. Eur. J. 2019, 25, 8499-8502 and Chem Eur. J. 2018, 24, 17796-17801).

In a further preferred embodiment according to the invention, the four organyl substituents R¹, R², R³ and R⁴ at the silicon center of the silahydrocarbon product of the general formula (I) are selected from four different groups, preferably four different alkyl groups, more preferably four different linear alkyl groups, most preferably four different linear unsubstituted alkyl groups.

According to the invention, all four different groups can be introduced by four selective hydrosilylation reactions when the starting material of the general formula (III) is prepared by hydrosilylation of HSiCl₃. A starting material of the formula (II) which is SiR¹HCl₂ can be further functionalized in a sequence including two steps b) and a final step d), or a starting material of the formula (II) which is SiR¹R²¹HCl, wherein R¹ ≠ R²¹, can be transformed to a silahydrocarbon bearing four different substituents applying one step b) and step d).

It is preferred that in the silahydrocarbon bearing four different groups as substituents the overall number of carbon atoms is in the range from 8 to 80, more preferably in the range from 10 to 50, even more preferably in the range from 12 to 40.

In another preferred embodiment according to the invention, the residue R¹ of the silahydrocarbon product of the general formula (I) is a methyl group or a phenyl group, preferably a methyl group.

Starting materials of the general formula (III) SiR¹ R²²Cl₂ as defined above with R¹ = Me or Ph, and R²² = R¹ or Cl are readily available, as all compounds selected from the group of MeSiCl₃, Me₂SiCl₂, PhSiCl₃ and Ph₂SiCl₂, which are preferred compounds of the formula (III) according to the invention, are produced on industrial scale for the application in silicones.

It is preferred that when R¹ in the silahydrocarbon products of the general formula (I) are Me or Ph, R² is the same as R¹. More preferably, R¹ is the same as R², while both R³ and R⁴ are different from R¹ and R².

It is also preferred that when R¹ is a methyl group or a phenyl group, at least one of the further groups R², R³ and R⁴ is a C2 to C30 alkyl group, which may be substituted by one or more halogen groups, preferably one or more chloro, fluoro or bromo groups, or by one or more ester groups.

In still another preferred embodiment according to the invention, the residues R¹ and R² of the silahydrocarbon product of the general formula (I) are both independently selected from the group consisting of methyl groups, butyl groups, hexyl groups, phenyl groups, preferably both are independently selected from phenyl and methyl groups, most preferably both are methyl groups.

Therein it is preferred that R³ and R⁴ are independently different from the residues R¹ and R², and it is more preferred that at least one of R⁴ is a substituted hydrocarbyl residue.

In a preferred embodiment according to the invention, one or two of the substituents R³ and R⁴ of the silahydrocarbon product of the general formula (I) are alkenyl substituents, preferably 1-alkenyl substituents, even more preferably unsubstituted 1-alkenyl substituents.

Alkenyl substituents are either introduced by submitting compounds containing two or more C-C-double bonds to the hydrosilylation reactions of the steps b) and d), or by submitting alkynyl compounds to said process steps. In particular, 1-alkenyl substituents are obtained when submitting 1-alkynyl compounds to the hydrosilylation steps. The presence of alkenyl substituents can be useful in controlling the compounds physical properties, and it allows further functionalization of the silahydrocarbons.

Preferably alkenyl substituents are selected from the group consisting of butenyl, 2-methylbutenyl, 2-chlorobutenyl, cyclohexenyl, vinyl, allyl, propenyl, pentenyl, hexenyl, octenyl, nonenyl, decenyl, undecenyl and dodecenyl groups. Vinyl, allyl, 1-propenyl, 2-butenyl, 1-pentenyl, 1-hexenyl, 1-octenyl, 1-nonenyl and 1-dodecenyl substituents are particularly preferred.

In a further preferred embodiment according to the invention, one or two of the substituents R³ and R⁴ of the silahydrocarbon product of the general formula (I) are residues substituted with one or more halogen substituents, preferably selected from chloro and bromo substituents, most preferably bearing one or more bromo substituents.

Functionalization by halogen substituents is useful for modifying and tailoring the physical properties of the silahydrocarbon compounds, for instance by applying fully or partially perfluorinated alkyl chains. The introduction of chloro and bromo substituents, which are compatible with the hydrosilylation conditions of the process according to the present invention, may also be useful for modification of the compounds' physical properties, and in addition the presence of chloro or bromo substituents may be used as a starting point for further functionalization of the silahydrocarbons.

It is preferred that at least one of the residues R³ and R⁴ is substituted by a single halogen atom selected from **F,** Cl and Br, more preferred at the terminal C-atom of the residue or residues. Therein, in case the substituent is branched, the C-atom most distant from the central Si atom is considered to be the terminal C-atom.

It is also preferred that at least one of the residues R³ and R⁴ contains at least one alkyl residue containing at least one difluoromethylene group or trifluoroalkyl group, more preferably at least one residue contains two or more structural moieties selected from trifluoromethyl groups and difluoromethylene groups.

In still a further preferred embodiment according to the invention, one or two of the substituents R³ and R⁴ of the silahydrocarbon product of the general formula (I) are residues comprising one or more aromatic groups, preferably one or two of the residues R³ and R⁴ comprise one or more phenyl groups, most preferably one or two of the residues R³ and R⁴ comprise one or more phenyl groups as substituents.

According to this embodiment of the invention, R³ and R⁴ preferably comprise one or more aromatic groups. Therein, it is preferred that the aryl groups are present as substituents of alkyl or alkenyl groups. The introduction of aryl groups, for instance phenyl groups, being R³ or R⁴ themselves would require the formation of arynes as substrates for hydrosilylation, which is viable, but rather inconvenient. It is more preferred that one or two of R³ and R⁴ are alkyl groups substituted with phenyl groups, naphthalenyl groups or biphenyl groups, most preferably one or two of R³ and R⁴ are phenylethyl groups, which result from hydrosilylation reactions involving styrene as unsaturated substrate.

In an even further preferred embodiment according to the invention, one or two of the substituents R³ and R⁴ of the silahydrocarbon product of the general formula (I) are residues comprising ester groups, preferably one or two of the residues R³ and R⁴ in the general formula (I) are residues comprising ester groups of C₁-C₆ alcohols, in particular methyl ester groups, more preferably the residues R³, R⁴ and R² in the general formula (I) are residues comprising ester groups of C₁-C₆ alcohols, most preferably the residues R³, R⁴ and R² comprise methyl ester groups.

Therein, it is preferred that R³ and R⁴ are alkyl groups terminated by an ester functional group, wherein, if the alkyl substituent is branched due to being obtained from a hydrosilylation reaction of an internal double bond or to being the Markovnikov product of the hydrosilylation reaction of a terminal alkene, preferably only one terminus of the alkyl substituent is terminated by a ester group.

In another preferred embodiment according to the invention, all four organyl substituents R¹, R², R³ and R⁴ at the silicon center of the silahydrocarbon product of the general formula (I) are independently selected from saturated hydrocarbon groups, preferably from unsubstituted alkyl groups, more preferably from unsubstituted alkyl groups, most preferably from linear unsubstituted alkyl groups.

When all four substituents R¹, R², R³ and R⁴ are selected from saturated hydrocarbon groups, the resulting silahydrocarbons are particularly stable compounds, which is an important feature for various applications.

It is preferred that at least two of the substituents R¹-R⁴ are different regarding their number of carbon atoms, more preferably three or four of the substituents differ regarding their number of carbon atoms.

In still another preferred embodiment according to the invention, the silahydrocarbon product of the general formula (I) is selected from the group consisting of Me₂SiHexPent, Me₂SiHexHept, Me₂SiHexOct, MeSiBu₃, MeSiBu₂Hept, MeSiBuHeptOct, MeSiHexHeptOct, MeSiHept₂Oct, MeSiHeptOctDec, MeSiHeptOctHexdec, Bu₂SiHexOct, BuSiHex₂Oct, BuSiHexHeptOct, BuSiHexOctDec, BuSiHexOctHexdec, Bu₃SiHex, BuSiHex₃, BuSiHexHept₂, BuSiHexDec₂, OctHexSiPentHept, OctHexSiPentOctenyl (C1 and C2 substituted Octenyl), OctHexSiPentDec, OctHexSiPentHexadec, (11-bromoundecyl)MeSiBu₂, (phenethyl)MeSiBu₂, and methyl-11-(methyldibutylsilyl)undecenoate, preferably selected from the group consisting of Me₂SiHexPent, Me₂SiHexHept, Me₂SiHexOct, MeSiBu₃, MeSiBu₂Hept, MeSiBuHeptOct, MeSiHexHeptOct, MeSiHept₂Oct, MeSiHeptOctDec, MeSiHeptOctHexdec, Bu₂SiHexOct, BuSiHex₂Oct, BuSiHexHeptOct, BuSiHexOctDec, BuSiHexOctHexdec, Bu₃SiHex, BuSiHex₃, BuSiHexHept₂, BuSiHexDec₂ and OctHexSiPentHept, even more preferably selected from the group consisting of Me₂SiHexPent, Me₂SiHexHept, Me₂SiHexOct, MeSiBu₃, MeSiBuHeptOct, MeSiHexHeptOct, MeSiHeptOctDec, MeSiHeptOctHexdec, BuSiHexHeptOct, BuSiHexOctDec, BuSiHexOctHexdec and OctHexSiPentHept, and most preferably selected from Me₂SiHexPent, Me₂SiHexOct, MeSiBu₃, MeSiHeptOctDec, MeSiHeptOctHexdec, BuSiHexHeptOct, BuSiHexOctDec and BuSiHexOctHexdec. According to the invention, the term "Hexdec" denotes a hexadecyl (C₁₆H₃₃) residue.

In a preferred embodiment according to the invention, the bifunctional monosilane intermediate of the general formula (II) in step a) is a compound of the formula SiR¹H₂Cl,
wherein R¹ is an unsubstituted or substituted alkyl group, preferably R¹ is an unsubstituted alkyl group, more preferably R¹ is an unsubstituted C1-C30 alkyl group, even more preferably R¹ is an unsubstituted C1-C30 linear alkyl group, most preferably R¹ is a methyl group.

By submitting such intermediate to the process step b), a compound of the formula SiR¹ R²R³Cl is obtained, wherein R¹ is as defined according to this embodiment, R² = R³ and R³ is as defined above.

In an also preferred embodiment according to the invention, the bifunctional monosilane intermediate of the general formula (II) in step a) is a compound of the formula SiR¹ HCl₂, wherein R¹ is an unsubstituted or substituted alkyl group, preferably R¹ is an unsubstituted alkyl group, more preferably R¹ is an unsubstituted C1-C30 alkyl group, even more preferably R¹ is an unsubstituted C1-C30 linear alkyl group, most preferably R¹ is a methyl group.

By submitting such intermediate to the next step b), a compound of the formula SiR¹R²Cl₂ is obtained, wherein R¹ is as defined according to this embodiment, and R² is as defined above with the proviso that it has at least two carbon atoms adjacent to each other, i.e. being connected by a single or double bond.

In a further preferred embodiment according to the invention, the bifunctional monosilane intermediate of the general formula (II) in step a) is a compound of the formula SiR¹R²¹HCl, wherein R¹ and R²¹ are independently selected from unsubstituted or substituted alkyl groups, preferably R¹ and R²¹ are independently selected from unsubstituted alkyl groups, more preferably R¹ and R²¹ are independently selected from unsubstituted C1-C30 linear alkyl groups, even more preferably R¹ is methyl and R²¹ is selected from unsubstituted C1-C30 linear alkyl groups, most preferably R¹ and R²¹ are both methyl groups.

By submitting such intermediate to the next step b), a compound of the formula SiR¹R²R³Cl is obtained, wherein R¹ and R² are as defined according to this embodiment, and R³ is as defined above.

In a still further preferred embodiment according to the invention, the bifunctional monosilane intermediate of the general formula (II) in step a) is selected from the group consisting of MeSiHCl₂, MeSiH₂Cl, Me₂SiHCl, PhSiHCl₂, PhSiH₂Cl, Ph₂SiHCl, MePhSiHCl, MeViSiHCl, BuSiHCl₂, MeBuSiHCl, BuSiHexHCl, Hex₂SiHCI, HexSiHCl₂, HexSiH₂Cl, OctSiHCl₂, OctSiH₂Cl, OctHexSiHCl, preferably MeSiHCl₂, PhSiHCl₂, MeViSiHCl, HexSiHCl₂, Hex₂SiHCl, Me₂SiHCl, BuSiHCl₂, or MeSiBuHCl, most preferred MeSiHCl₂, Me₂SiHCl, or BuSiHCl₂.

The above-listed group of compounds is readily available and constitutes a starting point for the synthesis of silahydrocarbons bearing up to four different substituents, thus allowing the design of compounds having appropriate physical and chemical properties for a variety of applications. The substituents R¹ and R²¹ of the compounds of the above-listed group are inert under process conditions and thus allow to perform the process steps in high yields and without the formation of by-products.

In another preferred embodiment according to the invention, the starting material for step a) of the general formula (III) is a compound of the general formula R¹SiCl₃, wherein R¹ is selected from unsubstituted or substituted alkyl groups, unsubstituted or substituted cycloaliphatic groups, unsubstituted or substituted alkaryl groups, unsubstituted or substituted aralkyl groups, or unsubstituted or substituted aryl groups, each having 1 to 30 carbon atoms, and is preferably obtained by a hydrosilylation reaction of HSiCl₃ and a C-C-unsaturated compound having 2 to 30 carbon atoms.

Preferably, the starting material of the general formula (III) is obtained by a hydrosilylation reaction of HSiCl₃ and a compound selected from the group consisting of linear alkenes and alkynes, more preferably unsubstituted linear alkenes and alkynes, even more preferably unsubstituted linear monoalkenes and monoalkynes, most preferably terminally unsaturated linear unsubstituted monoalkenes and monoalkynes.

Hydrosilylation of the readily available compound HSiCl₃ allows to introduce a wide variety of residues which is only limited by the kinds of C-C unsaturated compounds available and appropriate for this reaction. Starting from HSiCl₃, the process according to the invention allows to independently introduce all four substituents of the silahydrocarbon target in a selective manner by hydrosilylation reactions.

In a preferred embodiment according to the invention, the starting material for step a) of the general formula (IV) is a compound of the formula R¹SiH₃, wherein R¹ is selected from unsubstituted or substituted alkyl groups, unsubstituted or substituted cycloaliphatic groups, unsubstituted or substituted alkaryl groups, unsubstituted or substituted aralkyl groups, or unsubstituted or substituted aryl groups each having 1 to 30 carbon atoms, which is preferably obtained by a hydrosilylation reaction of HSiCl₃ and subsequent hydrogenation with a metal hydride of the general formula MHₓ, wherein M and x are as defined above, or an organometallic hydride donor selected from diisobutylaluminum hydride, Me₃SnH, nBu₃SnH, Ph₃SnH, Me₂SnH₂, nBu₂SnH₂ and Ph₂SnH₂.

It is preferred when the compound of the general formula (IV) according to this embodiment is submitted to a redistribution reaction with a compound of the general formula (III) that is the perchlorinated analogue of the compound of the formula (IV), i.e. R¹ is the same in both compounds.

In a further preferred embodiment according to the invention, one or both of the starting materials of the general formulae (III) and (IV) applied in a reaction of step a) are obtained starting from HSiCl₃, wherein the HSiCl₃ is preferably obtained from the Siemens Process or from hydrogenation of SiCl₄ with mono-, di- or triorganohydridosilanes.

In the Siemens Process for the production of highly pure polycrystalline silicon 98-99 % pure silicon is grounded and reacted with gaseous hydrogen chloride at 300-350 °C in a reactor to obtain trichlorosilane. Then, trichlorosilane is pyrolyzed at T > 1000 °C and in the presence of hydrogen gas (H₂) with release of HCl gas to obtain the desired silicon. However, in this second step most of the trichlorosilane exits the reactor unreacted as an exhaust gas. It can be recycled or used in other applications. According to this embodiment, either the HSiCl₃ from the exhaust gas of the above-described Siemens process is used to prepare the starting materials of the general formula (III) or (IV), or the HSiCl₃ applied in this embodiment is obtained by treating the high-boiling side-products of the Siemens Process with an appropriate reaction-promoting agent, e.g. the ether/HCl reagent.

HSiCl₃ can also be generated in the reaction of SiCl₄ with mono-, di- or triorganohydridosilanes, for instance in the chlorination reaction which can be applied as a means for the provision of bifunctional starting materials in step a) of the process according to the invention. Use of thus generated HSiCl₃ for the generation of starting materials according to the invention can render the process according to the invention more beneficial from both an economic as well as from an environmental perspective.

In an also preferred embodiment according to the invention, the starting material for step a) according to general formula (III) is MeSiCl₃ or Me₂SiCl₂, preferably MeSiCl₃ or Me₂SiCl₂ obtained from the Müller-Rochow-Direct Process.

Me₂SiCl₂ is the main product of the Müller-Rochow-Direct Process, its annual production worldwide is in the Million of tons range. MeSiCl₃ is the next abundant product of the Müller-Rochow-Direct Process, and thus both Me₂SiCl₂ and MeSiCl₃ are readily available. Both compounds can also be obtained from cleavage of high-boiling side-products of the Müller-Rochow-Direct Process, in particular of the disilane residue (DPR) mostly comprising compounds of the general formula MeₙSi₂Cl₆₋ₙ (n=2-6).

Both MeSiCl₃ and Me₂SiCl₂ thus constitute readily available and cheap starting materials for the process according to the invention, which, due to the small size of the methyl group and its chemical robustness, allow the introduction of a wide variety of further substituents.

It is preferred that each of the starting materials MeSiCl₃ or Me₂SiCl₂ is brought to reaction in a redistribution reaction with its hydrogenated analogue, MeSiH₃ or Me₂SiH₂, respectively. In the case MeSiCl₃ is selected as starting material, it is preferred when MeSiHCl₂ is formed as product in the redistribution reaction.

In a further preferred embodiment according to the invention, the starting material for step a) according to general formula (IV) is MeSiH₃ or Me₂SiH₂, preferably obtained by hydrogenation of MeSiCl₃ or MeSiCl₂ with a metal hydride of the general formula MHₓ, wherein M and x are as defined above, or an organometallic hydride donor selected from diisobutylaluminum hydride, Me₃SnH, nBu₃SnH, Ph₃SnH, Me₂SnH₂, nBu₂SnH₂ and Ph₂SnH₂, even more preferably the starting material for step a) according to general formula (IV) is MeSiH₃ or Me₂SiH₂ obtained by hydrogenation of MeSiCl₃ or Me₂SiCl₂ obtained from the Müller-Rochow-Direct Process with a metal hydride of the general formula MHₓ, wherein M and x are as defined above, or an organometallic hydride donor selected from diisobutylaluminum hydride, Me₃SnH, nBu₃SnH, Ph₃SnH, Me₂SnH₂, nBu₂SnH₂ and Ph₂SnH₂.

It is particularly preferred that the compounds MeSiH₃ or Me₂SiH₂ are obtained by a reduction reaction using NaH, LiH or LiAlH₄ as reductant.

In another preferred embodiment according to the invention, at least one intermediate of the general formula (II) is obtained by a redistribution reaction of a compound of the general formula (III) and a compound of the general formula (IV) as defined above, wherein the redistribution catalyst is selected from one or more compounds selected from the group consisting of
- phosphonium halides, preferably phosphonium chlorides R⁵₄PCl, wherein R⁵ is selected from the group consisting of hydrogen and an organyl group, which can be the same or different, more preferably R⁵ is selected from the group consisting of an aromatic group and an aliphatic hydrocarbon group, even more preferably R⁵ is selected from n-alkyl groups, and most preferably R⁵₄PCl is n-Bu₄PCl,
- phosphines R⁵₃P, wherein R⁵ is selected from the group consisting of hydrogen and an organyl group and can be the same or different, preferably R⁵ is an organyl group and can be the same or different, most preferably R⁵₃P is Ph₃P,
- amines R⁵₃N, wherein R⁵ is selected from the group consisting of hydrogen or an organyl group and can be the same or different, preferably R⁵₃N, wherein R⁵ is an organyl group and can be the same or different, most preferably R⁵₃N is *n*-Bu₃N,
- N-heterocyclic amines, preferably methylimidazoles, such as 2-methylimidazole, 4-methylimidazole and 1- methylimidazole, and
- ammonium halides, preferably ammonium chlorides of the formula R⁵₄NCl, wherein R⁵ is selected from the group consisting of hydrogen and an organyl group and can be the same or different, more preferably R⁵₄NCl, wherein R⁵ is an organyl group and can be the same or different, more preferably R⁵ is selected from n-alkyl groups, most preferably R⁵₄NCl is *n-*BU₄NCl.

Preferably, the compound of the general formula (III) applied in the redistribution reaction is the chlorinated analogue of the compound of the general formula (IV) applied.

In a preferred embodiment according to the invention, at least one step a) is performed in the presence of a solvent, wherein the solvent is selected from the group consisting of ethers, alkanes or aromatic solvents, more preferably selected from the group consisting of THF, 1,4-dioxane, diglyme, tetraglyme, hexane and benzene, most preferably the solvent is THF.

In particular, for step a) being a redistribution reaction, THF, diglyme, 1,4-dioxane and tetraglyme are preferred solvents;
for step a) being a redistribution reaction with in situ reduction of the chlorosilane, THF, diglyme and tetraglyme are preferred solvents; and
for step a) being a partial chlorination using ether/HCl, 1,4-dioxane, *n*-Bu₂O and diglyme are preferred solvents;

If SiCl₄ is used as chlorination reagent for the provision of the target compounds of step a), no solvent is required, and although the presence of ether solvents does not hamper the chlorination reaction in general, it is preferred to perform the reaction under neat conditions.

In a further preferred embodiment according to the invention, the reaction temperature in at least one step a) is in the range from 0 °C to 180 °C, preferably 20 °C to 160 °C, and most preferably 60 °C to 120 °C.

In particular, for step a) being a redistribution reaction the temperature is preferably in the range from 50 to 160 °C, more preferably from 60 to 120 °C;
for step a) being a redistribution reaction with in situ reduction of the chlorosilane, the temperature is preferably in the range from 70 to 100 °C;
for step a) being a partial chlorination using ether/HCl, the temperature is preferably in the range from 0 to 80 °C, more preferably in the range from 20 to 60 °C, and for step a) being a chlorination using SiCl₄, the temperature is preferably in the range from 55 to 140 °C, more preferably from 60 to 120 °C.

According to the invention, the reaction temperature in a step a) is the temperature of the reaction mixture, i.e. the temperature measured inside the reaction vessel in which the reaction is conducted.

In another preferred embodiment according to the invention, the redistribution partners in at least one step a) are selected from the group consisting of the couples MeSiCl₃ and MeSiH₃, Me₂SiCl₂ and Me₂SiH₂, MeSiCl₃ and Me₂SiH₂, Me₂SiCl₂ and MeSiH₃, Ph₂SiCl₂ and Me₂SiH₂, PhMeSiCl₂ and Me₂SiH₂, MeSiHeptCl₂ and MeSiHeptH₂, MeSiOctCl₂ and MeSiOctH₂ or MeSiBuCl₂ and MeSiBuH₂, preferably from MeSiCl₃ and MeSiH₃, Me₂SiCl₂ and Me₂SiH₂, or from MeSiBuCl₂ and MeSiBuH₂.

The above-listed couples indicate that one of these specific pairs of compounds is submitted to a step a) without any further compounds of the general formula (III) or (IV) added to the reaction mixture before or during the reaction.

In still another preferred embodiment according to the invention, at least one intermediate of the general formula (II) in a step a) is obtained by a redistribution reaction of a compound of the general formula (III) and the in-situ formed hydrogenation products obtained by reacting one or more monosilanes of the general formula (III) with a metal hydride of the general formula MHₓ or an organometallic hydride donor in the presence of a redistribution catalyst, wherein the redistribution catalyst is selected from the group consisting of
- R⁵₄PCl, wherein R⁵ is selected from the group consisting of hydrogen and an organyl group, which can be the same or different, preferably R⁵ is an organyl group, more preferably R⁵ is selected from the group consisting of an aromatic group and an aliphatic hydrocarbon group, even more preferably an n-alkyl group, and most preferably R⁵₄PCl is n-Bu₄PCl,
- phosphines R⁵₃P, wherein R⁵ is selected from the group consisting of hydrogen and an organyl group and can be the same or different, preferably R⁵₃P, wherein R is an organyl group and can be the same or different, more preferably Ph₃P,
- amines R⁵₃N, wherein R⁵ is selected from the group consisting of hydrogen and an organyl group and can be the same or different, preferably R⁵₃N, wherein R⁵ is as defined above and can be the same or different, more preferably *n*-Bu₃N,
- N-heterocyclic amines, preferably methylimidazoles, more preferably 2-methylimidazole, 4-methylimidazole and 1- methylimidazole, and
- ammonium compounds, such as R⁵₄NCl, wherein R⁵ is selected from the group consisting of hydrogen and an organyl group and can be the same or different, preferably R⁵₄NCl, wherein R⁵ is as defined above and can be the same or different, more preferably *n*-Bu₄NCl, and the metal hydride reagent is selected from alkali metal hydrides, alkaline earth metal hydrides, mixed metal hydride salts comprising one or more alkali metal or alkaline earth metal ions or mixtures thereof, preferably selected from lithium hydride, sodium hydride, potassium hydride, magnesium hydride, calcium hydride, lithium aluminum hydride, sodium borohydride, lithium borohydrate, and mixtures thereof, and the organometallic hydride donor is selected from diisobutylaluminum hydride, Me₃SnH, nBu₃SnH, Ph₃SnH, Me₂SnH₂, nBu₂SnH₂ and Ph₂SnH₂, more preferably the metal hydride or organometallic hydride donor is selected from sodium hydride, lithium aluminum hydride, lithium hydride, and nBu₃SnH, most preferably LiH.

It is particularly preferred that the redistribution catalyst is selected from *n*-Bu₄PCl, *n*-Bu₄NCl, Ph₃P, *n*-Bu₃N, and the reductant is LiH.

In a further preferred embodiment according to the invention, the solvent in the redistribution reaction involving in-situ reduction of the perchlorinated starting material is selected from the group consisting of ethereal solvents, more preferably THF, diglyme, 1,4-dioxane, triglyme, tetraglyme, DME (dimethoxyethane), most preferably THF, 1,4-dioxane, or diglyme.

In an also preferred embodiment according to the invention, the reaction temperature in the redistribution reaction involving in-situ reduction of the perchlorinated starting material is in the range from 0 °C to 180 °C, preferably 20 °C to 160 °C, and most preferably 60 °C to 140 °C.

In another preferred embodiment according to the invention, the compounds of the general formula (III) are selected from the group consisting of MeSiCl₃, Me₂SiCl₂, PhSiCl₃, Ph₂SiCl₂, PhMeSiCl₂, BuSiCl₃ or MeSiBuCl₂, preferably from the group consisting of MeSiCl₃, BuSiCl₃, MeSiBuCl₂ and Me₂SiCl₂.

In a preferred embodiment according to the invention, at least one intermediate of the general formula (II) is obtained in a selective partial chlorination reaction of a compound of the general formula (IV) by reacting the compound with an HCl/ether reagent in step a), wherein the HCl/ether reagent is preferably selected from THF/HCl, diethyl ether/HCl, diglyme/HCl, 1,4-dioxane/HCl, dibutyl ether/HCl, more preferably selected from diglyme/HCl, diethyl ether/HCl, 1,4-dioxane/HCl, dibutyl ether/HCl, and most preferably selected from diethyl ether/HCl, or diglyme/HCl.

Preferably, the compound of the general formula (IV) submitted to partial chlorination according to the embodiment of the invention is selected from SiR¹ H₃ or SiR¹R²H₂, wherein at least one, preferably both of R¹ and R² are independently selected from C1-C30 alkyl and C1-C30 alkenyl groups, more preferably from C1-C16 alkyl groups.

In another preferred embodiment according to the invention, at least one intermediate of the general formula (II) is obtained in a chlorination reaction of a compound of the general formula (IV) SiR¹R²³H₂ with tetrachlorosilane (SiCl₄) in the presence of at least one catalyst.

Chlorination of the perhydridosilane compounds of the formula (IV) with SiCl₄ in order to obtain the bifunctional intermediates of the formula (II) is preferred because the reaction is conveniently performed using SiCl₄ as a chlorination reagent of low cost. Further, HSiCl₃ obtained as a side-product of the reaction can be reintroduced into the silicon deposition process of the Siemens Process or, alternatively, for hydrosilylation reactions and is thus of great economic value.

In a further preferred embodiment according to the invention, in at least one step a) the compounds of the general formula (IV) submitted to a partial chlorination reaction with an HCl/ether reagent or with SiCl₄ in the presence of at least one catalyst are selected from the group consisting of MeSiH₃, Me₂SiH₂, PhSiH₃, Ph₂SiH₂, PhMeSiH₂, BuSiH₃, MeSiBuH₂, HexSiH₃, OctSiH₃, Hex₂SiH₂, MeSiHexH₂, MeSiHeptH₂ and MeSiOctH₂, preferably from MeSiBuH₂, MeSiHexH₂, MeSiHeptH₂, and MeSiOctH₂.

In a still further preferred embodiment according to the invention, the compounds of the general formula (IV) submitted to the partial chlorination reaction with an HCl/ether reagent or with SiCl₄ in the presence of at least one catalyst are obtained by perhydrogenation of the analogous perchlorinated monosilanes using one or more metal hydride reagents or organometallic hydride donor reagents selected from NaBH₄, LiAlH₄, LiBH₄, KH, LiH, NaH, MgH₂, CaH₂, nBu₃SnH, Me₃SnH, Ph₃SnH, nBu₂SnH₂, Me₂SnH₂, and Ph₂SnH₂ or i-Bu₂AlH, preferably from LiAlH₄, NaH, LiH or nBu₃SnH, more preferably from LiAlH₄ or LiH, most preferably LiH.

In another preferred embodiment according to the invention, at least one metal-catalyzed hydrosilylation step (b) is performed using a Rh- or Pt-based catalyst, more preferably using a Pt-catalyst immobilized on a support, even more preferably using a Pt-catalyst immobilized on silica, most preferably a Pt-catalyst immobilized on silica comprising a metal-containing siloxane polymer matrix covalently bonded to the silica support, in particular Pt-nanoparticles encapsulated in a siloxane polymer matrix covalently bonded to a silica support.

A platinum-based catalyst which is preferred according to the invention is disclosed in the patent application US 2015/0051357 A1. In particular, the catalyst disclosed therein in Example 2 is particularly preferred according to the invention.

In general, when a Pt-based catalyst immobilized on a support is applied in step b), it is preferred when the metal loading ranges from about 0.1 to about 5 percent by weight of the support material.

When a Pt-catalyst immobilized on silica comprising a metal-containing siloxane polymer matrix covalently bonded to the silica support is applied, it is preferred when the metal loading ranges from about 0.1 to about 1 percent by weight of the support material. In such case it is also preferred when the metal-containing polymer matrix is covalently bonded to the support material via a hydrophobic functional group chosen from an alkyldisilazane, a vinyl-containing silazane, or a combination thereof.

In still another preferred embodiment according to the invention, the bifunctional monosilane intermediate of the general formula (II) submitted to step b) is selected from R¹SiHCl₂ or R¹SiH₂Cl, wherein in each case R¹ is selected from phenyl or a C1-C30 linear alkyl residue, or R¹R²¹SiHCl, wherein R¹ and R²¹ are independently selected from phenyl or a C1-C30 linear alkyl residue, preferably the intermediate is selected from the group consisting of MeSiHCl₂, MeSiH₂Cl, Me₂SiHCl, PhSiH₂Cl, PhSiHCl₂, Ph₂SiHCl or PhMeSiHCl, and most preferably the intermediate is selected from MeSiHCl₂, MeSiH₂Cl or Me₂SiHCl.

According to this embodiment of the invention, it is further preferred that one of the residues R³ and R⁴ introduced by a hydrosilylation reaction step is a substituted alkyl or alkenyl group, more preferred an alkyl group bearing at least one bromo group, chloro group or ester group as substituent.

According to this embodiment of invention, it is also further preferred that one of the residues R³ and R⁴ introduced by a hydrosilylation step is a C8-C30 linear unsubstituted alkyl group or a C8-C30 linear unsubstituted alkenyl group.

In a preferred embodiment according to the invention, the compound containing at least one C-C double or C-C triple bond in the hydrosilylation reaction of step b) is selected from the group consisting of alkenes, cycloalkenes, polyenes, alkynes, cyclic alkynes, polyalkynes, preferably alkenes, cycloalkenes, alkynes, cyclic alkynes, more preferably alkenes, cycloalkenes, alkynes, even more preferably alkenes, and most preferably monounsaturated terminal alkenes.

In a further preferred embodiment according to the invention, at least one step b) is performed at a temperature within the range from 0 °C to 180 °C, preferably 20 °C to 140 °C, most preferably 60 °C to 100 °C.

Therein, it is preferred when no additional solvent is used or the solvent is selected from THF, diglyme, 1,4-dioxane, benzene or toluene, preferably from THF, diglyme or 1,4-dioxane, more preferably from THF or 1,4-dioxane, most preferably the solvent is THF.

In another preferred embodiment according to the invention, in step c) the intermediate of the general formula (V) is hydrogenated by a reaction with a metal hydride reagent of the general formula MHₓ, wherein M and x are as defined above, or an organometallic hydride donor reagent selected from the group consisting of nBu₃SnH, Me₃SnH, Ph₃SnH, nBu₂SnH₂, Me₂SnH₂, and Ph₂SnH₂, preferably with a metal hydride reagent selected from the group consisting of NaBH₄, LiAlH₄, LiBH₄, KH, LiH, NaH, MgH₂, CaH₂, i-Bu₂AlH or nBu₃SnH, more preferably consisting of LiAlH₄, NaH, LiH, even more preferably from LiAlH₄ and LiH, and most preferably the metal hydride reagent is LiH.

According to the invention, LiH is the most preferred metal hydride reagent for the reduction step c) as it is comparatively easy to handle, reduces chlorosilanes under convenient reaction conditions, i.e. at low temperatures and the resulting lithium chloride can be submitted to a recycling process for the recovery of LiH. NaH is also preferred due to its low cost and satisfying performance in the reduction of chlorosilanes.

In still another preferred embodiment according to the invention, the catalyst of the hydrosilylation reaction of step d) is selected from a Rh- or Pt-based catalyst, more preferably from a Pt-catalyst immobilized on a support, even more preferably from a Pt-catalyst immobilized on silica, most preferably from a Pt-catalyst immobilized on silica comprising a metal-containing siloxane polymer matrix covalently bonded to the silica support, in particular Pt-nanoparticles encapsulated in a siloxane polymer matrix covalently bonded to a silica support.

A platinum-based catalyst which is preferred according to the invention is disclosed in the patent application US 2015/0051357 A1. In particular, the catalyst disclosed therein in Example 2 is particularly preferred according to the invention.

In general, when a Pt-based catalyst immobilized on a support is applied in step b), it is preferred when the metal loading ranges from about 0.1 to about 5 percent by weight of the support material.

When a Pt-catalyst immobilized on silica comprising a metal-containing siloxane polymer matrix covalently bonded to the silica support is applied, it is preferred when the metal loading ranges from about 0.1 to about 1 percent by weight of the support material. In such case it is also preferred when the metal-containing polymer matrix is covalently bonded to the support material via a hydrophobic functional group chosen from an alkyldisilazane, a vinyl-containing silazane, or a combination thereof.

In a further preferred embodiment according to the invention, the compound containing one or more C-C double bonds or C-C triple bonds submitted to the hydrosilylation reaction of step d) is selected from the group consisting of alkenes, cycloalkenes, polyenes, alkynes, cyclic alkynes, polyalkynes, preferably alkenes, cycloalkenes, alkynes, cyclic alkynes, more preferably alkenes, cycloalkenes, alkynes, even more preferably alkenes, and most preferably monounsaturated terminal alkenes.

In another preferred embodiment according to the invention, hydrogenation reaction of step c) and the hydrosilylation reaction of step d) are performed in a one-step procedure.

### EXAMPLES

The present invention is further illustrated by the following examples, without being limited thereto.

### General

Prior to the reactions the solvents used were carefully dried according to procedures known from the literature. Products were analyzed and characterized by standard procedures, especially by NMR spectroscopy and GC/MS analyses.

The hydrosilylation catalyst referred to herein as the immobilized-Pt catalyst "Y1EX2" is a heterogenous platinum-based catalyst prepared according to the procedure disclosed in Example 2 of the patent US 9,993,812 B2 (corresponds to the application US 2015/0051357 A1).

The hydrosilylation catalyst referred to herein as "B770011" is a commercial product named 3.6R210 containing 3.6% Platinum metal (500 nm) on Silica Type 210, as purchased from Johnson Matthey (JM).

While the bifunctional starting materials HSiCl₃, MeSiHCl₂ and Me₂SiHCl are industrially available, a wide range of differently organo-substituted bifunctional hydridochloromonosilanes can be synthesized either by cleavage of organochlorodisilanes with suitable cleavage catalysts and reaction partners, e.g. phosphonium chlorides (see N. Auner et al., "Synthesis of Bifunctional Monosilanes by Disilane Cleavage with Phosphonium Chlorides", Chem. Eur. J. 2019, 25, 3809-3815), or, alternatively by selective chlorination of the respective organohydridomonosilanes with ether/HCl solutions (see M. C. Holthausen et al., "Lewis Base Catayzed Selective Chlorination of Monosilanes", Chem. Eur. J. 2018, 24, 17796-17801). The bifunctional monosilanes used in the examples of this application were synthesized by these two synthetic routes and by redistribution reactions of organochlorosilanes with organohydridosilanes, alternatively, chlorination of the respective hydridodosilanes with tetrachlorosilane (SiCl₄) in the presence of suitable catalysts give bifuctional monosilanes in excellent yields (N. Auner, A. G. Sturm, EP 18193571.9). To obtain the organohydridosilanes used as starting materials, the chlorosilanes, in particular, the organochlorosilanes R₃SiCl, R₂SiCl₂ and RSiCl₃ (R = alkyl, aryl, alkenyl) were converted to the corresponding organomono-, di-, and trihydridosilanes R₃SiH, R₂SiH₂ and RSiH₃ by hydrogenation (reduction) with conventional reduction agents, in ethers as solvents. The redistribution reactions were performed by mixing the reaction partners, i.e. the hydridosilanes (0.1 mL) and the chlorosilanes (1.1-2.0 eq of the chlorosilanes based on the molar amount of the hydridosilanes), dissolved in 0.2-0.3 mL of THF or diglyme and the redistribution catalyst (1-3 wt% based on the amount of silane substrates added) in an NMR tube. After cooling the sample with liquid nitrogen (about -196 °C), the tube was evacuated (about 0.1 mbar), and sealed to avoid any losses of low boiling monosilanes such as Me₂SiHCl (b.p. 35 °C), MeSiHCl₂ (b.p. 41 °C), Me₂SiH₂ (b.p. -20 °C), MeSiH₃ (b.p. -58 °C) and HSiCl₃ (b.p. 32 °C), the boiling point of Me₂SiCl₂ is about 70 °C (all b.p. at normal pressure). NMR spectra were recorded depending on reaction time and temperature to control the product formation. The molar ratios of the products formed were determined by integration of the relevant NMR signals that were assigned to specific products in the mixture. After completion of the redistribution reactions (e.g. R₂SiH₂ + R₂SiCl₂ → 2R₂SiHCl) the NMR tube was opened to analyze the product mixture by GC-MS. Product identification was verified in all cases for the main products by ¹H⁻ and ²⁹Si-NMR spectroscopy and GC-MS analysis.

The amount of products formed was estimated by the molar ratios as measured by NMR spectroscopy and the amount of starting materials submitted.

The optimum reaction conditions were identified by NMR-tube experiments and transferred to reactions in preparative scale in closed glass ampules or in open systems. The synthesis of Me₂SiHCl from Me₂SiCl₂ and the organosilane Me₂SiH₂ in preparative scale is described exemplarily. NMR experiments as well as those in closed glass ampules were run in high boiling solvents, such as diglyme, to reduce the overall pressure at elevated temperatures. The glass ampules had a length of 200 mm, outer diameter of 30 mm and a wall thickness of 2 mm (internal volume ~ 40 mL). For high boiling organosilanes, such as PhSiH₃, reactions can be performed in open systems.

The hydrosilylation reactions of bifunctional monosilanes with 1-alkenes and 1-alkynes were generally performed as follows. 0.1 mL of the alkene or alkyne (1.1-3.5 eq based on the amount of bifunctional monosilane) were admixed with 0.05-0.15 mL of the monosilane (1.0 eq) and 10 wt% (based on the amount of the silane substrate) of the hydrosilylation catalyst (Y1EX2, or Karstedt-catalyst, or B770011) in 0.2-0.3 mL THF as solvent in an NMR tube. After cooling the sample with liquid nitrogen (about -196 °C), the tube was evacuated (about 0.1 mbar), and sealed. After warming to r.t., NMR spectra were recorded from the starting mixture and subsequently the sample was heated. The course of the reaction was controlled by NMR spectroscopy, the frequency of measurements performed depending on reaction time and temperature. The molar ratios of products formed were determined by integration of the relevant NMR signals that were assigned to specific products within the mixture. In case the hydridosilane was completely added across the carbon-carbon double bond, the conversion rate was defined as 100 %; in case only half of the hydridosilane was consumed the conversion rate of the hydridosilane was 50 % accordingly. In some cases when the olefin reactant was partially isomerized, and/or hydrogenated (H₂ from dehydrogenative silylation) due to the high reaction temperature applied, excess of hydridosilane remained. In case the olefin was completely consumed and the hydridosilane concentration was still 50 %, then the conversion rate was defined as 50 %. After completion of the hydrosilylation reaction the NMR tube was opened and the product mixture was investigated by additional GC-MS analysis.

Alternatively to hydrosilylation reactions in closed systems which constitute the preferred procedure for reacting compounds with low boiling points, the reaction can be run in open systems (reaction flask, magnetic stirrer, reflux condenser and dropping funnel, under inert atmosphere, e.g. Ar or N₂) as well, if reaction partners with relatively high boiling points are reacted. This is especially recommended for the introduction of a third or fourth organo substituent at silicon. Although the high molecular tri- and tetraalkylsilanes are thermally very stable, it is recommended to purify these products by short path distillation procedures under reduced pressure conditions (p < 10⁻² mbar) to avoid thermal decomposition of the organosilanes.

In some cases the products have not been further purified or isolated (diluted in THF or impurities of other silane compounds), thus, yields are either based on the amount of the starting material used, or the respective product proportions are given in relation to the starting materials.

### Identification of compounds

Products were analyzed by ¹H and ²⁹Si and ¹H-²⁹Si-HSQC NMR spectroscopy. The spectra were recorded on a Bruker AV-500 spectrometer equipped with a Prodigy BBO 500 S1 probe. ¹H-NMR spectra were calibrated to the residual solvent proton resonance ([D₆]benzene *δ*_{H} = 7.16 ppm). Product identification was additionally supported by GC-MS analyses and verified the identification of the main products.

GC-MS analyses were performed with a Thermo Scientific Trace GC Ultra coupled with an ITQ 900MS mass spectrometer. The stationary phase (Macherey-Nagel PERMABOND Silane) had a length of 50 m with an inner diameter of 0.32 mm. 1µL of analyte solution was injected, 1/200 thereof was transferred onto the column with a flow rate of 1,7 mL/min carried by helium gas. The temperature of the column was first kept at 50 °C for 10 minutes. Temperature was then elevated at a rate of 20 °C/min up to 250 °C and held at that temperature for another 25 - 160 minutes (depending on the steric demand or length of the alkyl-substituents at the silicon center). After exiting the column, substances were ionized with 70 eV and cationic fragments were measured within a range of 34 - 600 m/z (mass per charge). ²⁹Si NMR chemical shifts and mass fragments for the starting materials and reaction products formed are listed in Table 1.

**Table 1: List of starting materials and reaction products.**

| **silane compounds** | **R_{T} GC¹⁾ [min]** | **mass fragment²⁾** | **²⁹Si-NMR [ppm]** | **boiling point [°C]** | **M³⁾ [g/mol]** | **Entry** |
|---|---|---|---|---|---|---|
| Me₂SiHCl | 3.82 | 79 [M-CH₃]⁺ | 11.0 | 35 | 94.62 | A1-A6 |
| MeSiCl₃ | 6.06 | 133 M-CH₃]⁺ | 13.4 | 66 | 149.48 | - |
| MeSiHCl₂ | 4.16 | 99 [M-CH₃]⁺ | 11.3 | 41 | 115.03 | A5-A7, A17 |
| MeSiH₂Cl | 3.03 | 95 [M-CH₃]⁺ | -11.9 | 7 | 80.59 | A5-A7 |
| MeSiBuCl₂ | 15.40 | 135 [M-Cl]⁺ | 33.3 | 148-151 | 171.14 | B4 |
| MeSiBuH₂ | 6.10 | 101 [M-H]⁺ | -33.6 | 82 | 102.25 | C4 |
| MeSiBuHCl | 13.33 | 101 [M-Cl]⁺ | 12.9 | 104 | 136.70 | A10¹-A10², A16, A19 |
| MeSiBu₂Cl | 17.83 | 135 [M-Bu]⁺ | 31.5 | 193-198 | 192.80 | B12, B13 |
| MeSiBu₂H | 15.85 | 156 [M-H]⁺ | -10.1 | 173 | 158.36 | C8 |
| MeSiBu₃ | 18.65 | 199 [M-CH₃]⁺ | 2.6 | 233 | 214.46 | D17 |
| MeSiBu₂Hept | 20.65 | 241 [M-CH₃]⁺ | 2.6 | 250* | 256.26 | D21 |
| MeSiHeptCl₂ | 18.47 | 177 [M-Cl]⁺ | 32.5 | 208 | 213.22 | B6 |
| MeSiHeptH₂ | 15.16 | 143 [M-H]⁺ | -34.0 | 160* | 144.33 | C3 |
| MeSiHeptHCl | 17.33 | 143 [M-Cl]⁺ | 12.71 | 191* | 178.77 | A9 |
| MeSiHeptOctCl | 23.22 | 255 [M-Cl]⁺ | 31.5 | ~300 | 290.99 | B15 |
| MeSiHeptOctH | 21.27 | 255 [M-H]⁺ | -10.0 | ~300 | 256.54 | C9 |
| MeSiBuHeptOct | 23.87 | 297 [M-CH₃]⁺ | 2.5 | - | 312.65 | D1 |
| MeSiHexHeptOct | 26.40 | 325 [M-CH₃]⁺ | 2.5 | - | 340.70 | D2 |
| MeSiHept₂Oct | 28.20 | 340 [M-CH₃]⁺ | 2.5 | - | 368.76 | D3 |
| MeSiHeptOctDec | 36.96 | 382 [M-CH₃]⁺ | 2.6 | - | 396.81 | D4 |
| MeSiHeptOctHexdec | 91.15 | 382 [M-Hept]⁺ | 2.6 | - | 480.97 | D5 |
| Me₂SiHeptCl | 24.3 | 157 [M-Cl]⁺ | 33.2 | - | 192.80 | B11 |
| HSiCl₃ | 4.60 | 133 [M-H]⁺ | 10.2 | 32 | 135.45 | - |
| BuSiCl₃ | 15.28 | 155 [M-Cl]⁺ | 13.1 | 149 | 191.56 | B1 |
| BuSiHCl₂ | 13.95 | 121 [M-Cl]⁺ | 11.5 | 124 | 157.11 | A18 |
| BuSiHexCl₂ | 19.81 | 205 [M-Cl]⁺ | 33.3 | 75⁴⁾ | 241.27 | B7 |
| BuSiHexH₂ | 17.32 | 171 [M-H]⁺ | -28.9 | 202* | 172.38 | C7 |
| BuSiHexHCl | 18.92 | 171 [M-Cl]⁺ | 15.2 | - | 206.83 | A11 |
| BuSiHexOctCl | 24.97 | 283 [M-Cl]⁺ | 32.0 | 145⁴⁾ | 319.04 | B17 |
| BuSiHexOctH | 22.56 | 283 [M-H]⁺ | -6.8 | 130⁴⁾ | 284.60 | C10 |
| Bu₂SiHexOct | 25.35 | 283 [M-Bu]⁺ | 2.7 | - | 340.35 | D6 |
| BuSiHex₂Oct | 28.40 | 311 [M-Bu]⁺ | 2.7 | - | 368.76 | D7 |
| BuSiHexHeptOct | 30.65 | 325 [M-Bu]⁺ | 2.7 | - | 382.78 | D8 |
| BuSiHexOctDec | 41.64 | 367 [M-Bu]⁺ | 2.8 | - | 424.86 | D9 |
| BuSiHexOctHexdec | 109.35 | 367 [M-Bu]⁺ | 2.8 | - | 509.02 | D10 |
| Bu₃SiHex | 21.48 | 227 [M-Bu]⁺ | 2.7 | - | 284.60 | D6** |
| BuSiHex₃ | 25.05 | 283 [M-Bu]⁺ | 2.7 | - | 340.70 | D7** |
| BuSiHexHept₂ | 28.30 | 311 [M-Bu]⁺ | 2.7 | - | 368.76 | D8** |
| BuSiHexDec₂ | 54.18 | 395 [M-Bu]⁺ | 2.8 | - | 452.91 | D9** |
| MeHexSiCl₂ | 18.36 | 163 M-Cl]⁺ | 32.6 | - | 199.19 | B5 |
| MeHexSiH₂ | 14.36 | 129 [M-H]⁺ | -33.9 | - | 130.30 | C5 |
| MeHexSiHCl | 17.12 | 129 [M-Cl]⁺ | 12.9 | - | 164.75 | A22 |
| ^{1 )}R_{T} = retention time on GC-column; ²⁾ The product specific mass fragment is often characterized by loss of one alkyl leaving group ³⁾ M = molecular weight calculated; *calculated boiling points; **additional product from double hydrosilylation | | | | | | |

| **silane compounds** | **R_{T} GC¹⁾ [min]** | **mass fragment²⁾** | **²⁹Si-NMR [ppm]** | **boiling point [°C]** | **M³⁾ [g/mol]** | **Entry/ Table** |
|---|---|---|---|---|---|---|
| MeHexSiHeptCl | 22.49 | 227 [M-Cl]⁺ | 31.6 | - | 262.93 | B14 |
| MeHexSiHeptH | 20.74 | 227 [M-H]⁺ | -10.1 | - | 228.49 | C11 |
| MeHexSiHeptPent | 23.52 | 283 [M-CH₃]⁺ | 2.6 | - | 298.62 | D11 |
| MeHexSiHeptNon | 30.07 | 339 [M-CH₃]⁺ | 2.6 | - | 354.73 | D12 |
| Me₂SiHexCl | 17.82 | 144 [M-Cl]⁺ | 30.8 | - | 178.77 | B10 |
| Me₂SiHexH | 15.44 | 143 [M-H]⁺ | -13.4 | | 144.33 | C12 |
| Me₂SiHexPent | 19.33 | 199 [M-CH₃]⁺ | 1.8 | - | 214.46 | D13 |
| Me₂SiHexHept | 20.67 | 227 [M-CH₃]⁺ | 1.9 | - | 242.52 | D14 |
| Me₂SiHexOct | 21.39 | 241 [M-CH₃]⁺ | 1.9 | - | 256.54 | D15 |
| HexSiCl₃ | 18:21 | 183 [M-Cl]⁺ | 13.0 | 25⁴⁾ | 219.61 | B2 |
| HexSiH₃ | 11.60 | 115 [M-H]⁺ | 60.0 | 80-110 | 116.28 | C1 |
| HexSiH₂Cl | 15.89 | 115 [M-Cl]⁺ | 9.5 | - | 150.72 | A21 |
| HexSiHCl₂ | 17.43 | 149 [M-Cl]⁺ | 13.4 | 80⁵⁾ | 185.17 | A21 |
| OctSiCl₃ | 21.03 | 211 [M-Cl]⁺ | 13.0 | 55⁴⁾ | 247.67 | B3 |
| OctSiH₃ | 16.04 | 143 [M-H]⁺ | -60.0 | 120⁴⁾ | 144.33 | C2 |
| OctSiH₂Cl | 18.26 | 143 [M-Cl]⁺ | -9.5 | - | 178.77 | A20 |
| OctSiHCl₂ | 19.22 | 177 [M-Cl]⁺ | 11.2 | - | 213.22 | A20 |
| OctHexSiCl₂ | 24.25 | 261 [M-Cl]⁺ | 33.20 | 135⁴⁾ | 297.38 | B8, B9 |
| OctHexSiH₂ | 21.14 | 227 [M-H]⁺ | -28.8 | 70⁴⁾ | 228.49 | C6 |
| OctHexSiHCl | 22.78 | 228.3 [M-Cl]⁺ | 14.9 | 106⁵⁾ | 262.93 | A23 |
| OctHexSiPentCl | 28.61 | 297.9 [M-Cl]⁺ | 31.6 | 135⁴⁾ | 333.07 | B16 |
| OctHexSiPentH | 24.82 | 297.9 [M-H]⁺ | -6.7 | 120⁴⁾ | 298.62 | C13 |
| OctHexSiPentHept | 36.48 | 297 [M-Hept]⁺ | 2.8 | 135⁴⁾ | 396.42 | D16 |
| OctHexSiPentOctenyl (1-Octenyl and 2-Octenyl) | 38.41 | 337 [M-Pent]⁺ | -2.3 | - | 408.42 | D17 |
| | 39.32 | 323 [M-Hex]⁺ | -5.7 | | | |
| OctHexSiPentDec | 53.03 | 367 [M-Pent]⁺ | 2.8 | 165⁴⁾ | 438.46 | D18 |
| OctHexSiPentHexadec | 160.98 | 451 [M-Pent]⁺ | 2.8 | - | 452.84 | D19 |
| Trichloro(oct-1-enyl) silane | 19.11 | 209 [M-Cl]⁺ | -3.1 | - | 245.65 | B18 |
| Trichloro(phenethyl) silane | 19.77 | 203 [M-Cl]⁺ | 12.3 | - | 239.60 | B19 |
| Methyl-11-(trichlorosilyl)undecenoate | 26.11 | 301 [M-Cl]⁺ | 13.3 | - | 333.75 | B20 |
| (11-Bromoundecyl)trichlorosilane | 27.07 | 365 [M-H]⁺ | 13.2 | - | 368.64 | B21 |
| Trichloro(2,3-dimethylbut-3-en-1-yl) silane | 16.90 | 181 [M-Cl]⁺ | 11.7 | - | 217.60 | B22 |
| Methyldichloro(oct-1-enyl)silane | 19.08 | 189 [M-Cl]⁺ | 16.3 | - | 225.23 | B23 |
| Methyldichloro(phenethyl)silane | 19.91 | 183 [M-Cl]⁺ | 32.5 | - | 219.18 | B24 |
| Methyl-11-(methyldichlorosilyl)undecenoate | 26.27 | 277 [M-Cl]⁺ | 32.9 | - | 313.14 | B25 |
| (11-Bromoundecyl)methyldichlorosilane | 27.19 | 345 [M-H]⁺ | 32.7 | - | 348.22 | B26 |
| Methyldichloro(2,3-dimethylbut-3-en-1-yl) silane | 17.38 | 161 [M-Cl]⁺ | 32.6 | - | 197.18 | B27 |
| Methyldibutyl(oct-1-enyl)silane | 20.96 | 253 [M-CH₃]⁺ | -6.2 | - | 268.55 | B28 |
| Methyldibutyl(phenethyl)silane | 22.62 | 205 [M-Bu]⁺ | 2.8 | - | 262.51 | B29 |
| Methyl-11-(methyldibutylsilyl)undecenoate | 32.58 | 341 [M-CH₃]⁺ | 2.6 | - | 356.66 | B30 |
| (11-Bromoundecyl)methyldibutylsilane | 34.30 | 255 [M-BuBr]⁺ | 2.6 | - | 391.54 | B31 |
| Methyldibutyl(2,3-dimethylbut-3-en-1-yl) silane | 19.64 | 225 [M-CH₃]⁺ | 2.2 | - | 240.50 | B32 |

| | | | | | | |
|---|---|---|---|---|---|---|
| ¹⁾R_{T} = retention time on GC-column; ²⁾ The product specific mass fragment is often characterized by loss of one alkyl leaving group; ³⁾ M = molecular weight calculated; ⁴⁾ b.p. at 10⁻² mbar; ⁵⁾ b.p. at 40 mbar. | | | | | | |

Table 2 shows the molecular structures of selected silahydrocarbons synthesized in the subsequently described Examples as well as their precursors and intermediates in synthesis. The target compounds of the process according to the invention are marked with an asterisk (*).

**Table 2: Selected silahydrocarbons(*) and their precursors.**

| | | | | |
|---|---|---|---|---|
| 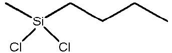 **MeSiBuCl₂ C₅H₁₂Cl₂Si** | | 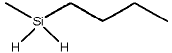 **MeSiBuH₂ C₅H₁₄Si** | | |
| 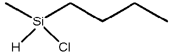 **MeSiBuHCl C₅H₁₃ClSi** | | 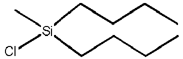 **MeSiBu₂Cl C₉H₂₁ClSi** | | |
| 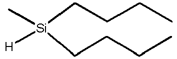 **MeSiBu₂H C₉H₂₂Si** | | 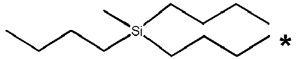 **MeSiBu₃ C₁₃H₃₀Si** | | |
| 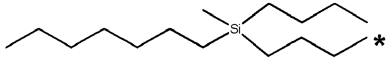 **MeSiBu₂Hept C₁₆H₃₆Si** | | 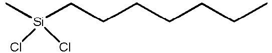 **MeSiHeptCl₂ C₈H₁₈Cl₂Si** | | |
| 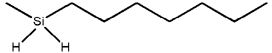 **MeSiHeptH₂ C₈H₂₀Si** | | 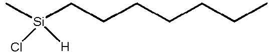 **MeSiHeptHCl C₈H₁₉ClSi** | | |
| 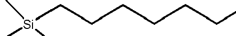 **Me₂SiHeptCl C₉H₂₁ClSi** | | 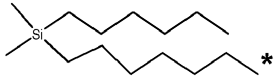 **Me₂SiHexHept C₁₅H₃₄Si** | | |
| 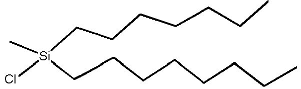 **MeSiHeptOctCl C₁₆H₃₅ClSi** | | 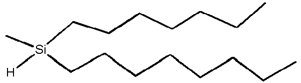 **MeSiHeptOctH C₁₆H₃₆Si** | | |
| 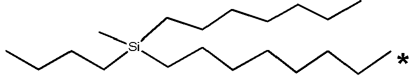 **MeSiBuHeptOct C₂₀H₄₄Si** | | 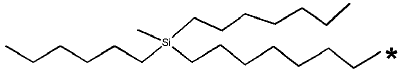 **MeSiHexHeptOct C₂₂H₄₈Si** | | |
| 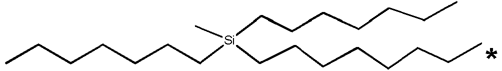 **MeSiHept₂Oct C₂₃H₅₀Si** | | | | |
| 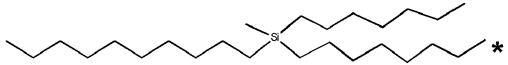 **MeSiHeptOctDec C₂₆H₅₆Si** | | | | |
| 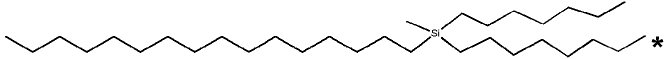 **MeSiHeptOctHexdec C₃₂H₃₃Si** | | | | |
| 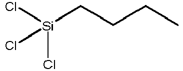 **BuSiCl₃ C₄H₉Cl₃Si** | 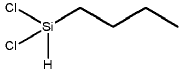 **BuSiHCl₂ C₄H₁₀Cl₂Si** | | | 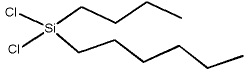 **BuSiHexCl₂ C₁₀H₂₂Cl₂Si** |
| 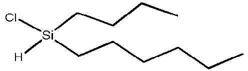 **BuSiHexHCl C₁₀H₂₃ClSi** | | 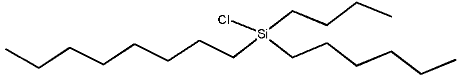 **BuSiHexOctCl C₁₈H₃₉ClSi** | | |
| 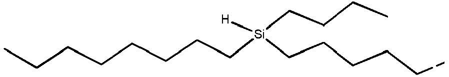 **BuSiHexOctH C₁₈H₄₀Si** | | 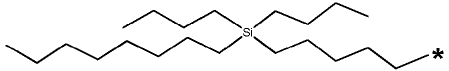 **Bu₂SiHexOct C₂₂H₄₈Si** | | |
| 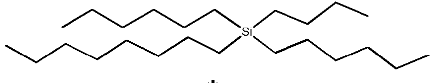 **BuSiHex₂Oct C₂₄H₅₂Si** | | 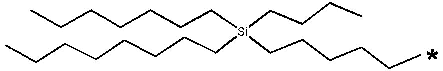 **BuSiHexHeptOct C₂₅H₅₄Si** | | |
| 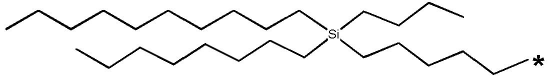 **BuSiHexOctDec C₂₈H₆₀Si** | | | | |
| 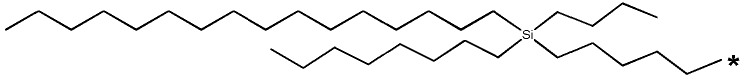 **BuSiHexOctHexdec C₃₄H₇₂Si** | | | | |
| 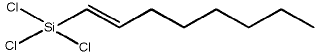 **Trichloro(oct-1-enyl)silane C₈H₁₅Cl₃Si** | | | 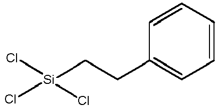 **Trichloro(phenethyl)silane C₈H₉Cl₃Si** | |
| 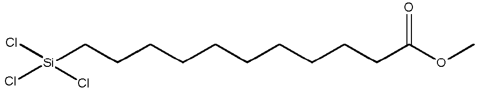 **Methyl-11-(trichlorosilyl)undecenoate C₁₂H₂₃Cl₃O₂Si** | | 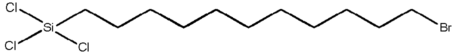 **(11-Bromoundecyl)trichlorosilane C₁₁H₂₂BrCl₃Si** | | |
| 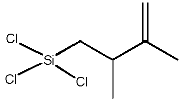 **Trichloro(2,3-dimethylbut-3-en-1-yl) silane C₆H₁₁Cl₃Si** | | 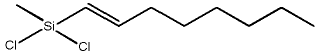 **Methyldichloro(oct-1-enyl)silane C₉H₁₈Cl₂Si** | | |
| 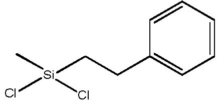 **Methyldichloro(phenethyl)silane C₉H₁₂Cl₂Si** | | 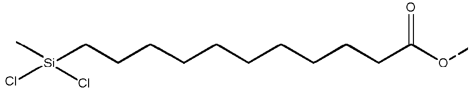 **Methyl-11-(methyldichlorosilyl)undecenoate C₁₃H₂₆Cl₂O₂Si** | | |
| 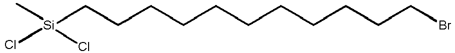 **(11-Bromoundecyl)methyldichlorosilane C₁₂H₂₅BrCl₂Si** | | 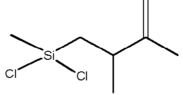 **Methyldichloro(2,3-dimethylbut-3-en-1-yl) silane C₇H₁₄Cl₂Si** | | |
| 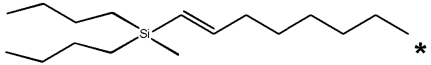 **Methyldibutyl(oct-1-enyl)silane C₁₇H₃₆Si** | | 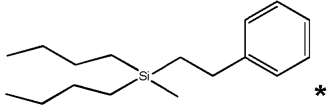 **Methyldibutyl(phenethyl)silane C₁₇H₃₀Si** | | |
| 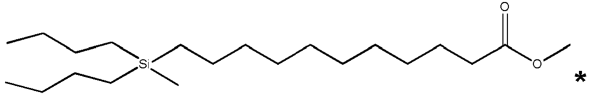 **Methyl-11-(methyldibutylsilyl)undecenoate C₂₁H₄₄O₂Si** | | | | |
| 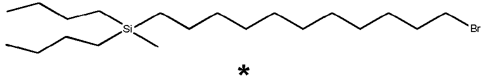 **(11-Bromoundecyl)methyldibutylsilane C₂₀H₄₃BrSi** | | 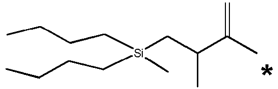 **Methyldibutyl(2,3-dimethylbut-3-en-1-yl) silane C₁₅H₃₂Si** | | |

### Step a): Synthesis of bifunctional monosilanes

### 1) Redistribution reactions of hydrido- and chlorosilanes to yield bifunctional monosilanes

**Table 3: Redistribution reactions of different hydrido- and chlorosilanes under n-Bu₄PCl catalysis**

| **Entry** | **Silane compound 1** | **Silane compound 2** | **Molar ratio 1 / 2** | ***n*-Bu₄PCl (mg)** | **T[°C] (t[h])** | **RSiCl₃** | **RSiHCl₂** | **RSiH₂Cl** | **RSiH₃** | **R₂SiCl₂** | **R₂SiHCl** | **R₂SiH₂** | **Solvent** |
|---|---|---|---|---|---|---|---|---|---|---|---|---|---|
| A1 | Me₂SiCl₂ | Me₂SiH₂ | 67/33 | 9 | 100 (30) | - | - | - | - | 53 | 52 | 5 | diglyme |
| A2 | Me₂SiCl₂ | Me₂SiH₂ | 60/40 | 13 | 100 (30) | - | - | - | - | 34 | 58 | 8 | diglyme |
| A3 | Me₂SiCl₂ | Me₂SiH₂ | 52/48 | 12 | 100 (24) | - | - | - | - | 19 | 64 | 17 | diglyme |
| A4 | MeSiCl₃ | Me₂SiH₂ | 47/53 | 13 | 80 (2) | 13 | 17 | 13 | 2 | 4 | 51 | traces | diglyme |
| | | | | | 100 (2) | 1 | 19 | 21 | 7 | 27 | 25 | - | |
| | | | | | 100 (30) | - | 16 | 23 | 9 | 34 | 18 | - | |
| A5 | MeSiCl₃ | Me₂SiH₂ | 60/40 | 8 | 80 (16) | 3 | 37 | 18 | 3 | 33 | 7 | - | diglyme |
| A6 | Me₂SiCl₂ | MeSiH₃ | 74/26 | 18 | 120 (60) | - | 10 | 12 | 5 | 56 | 27 | - | diglyme |
| A7 | MeSiCl₃ | MeSiH₃ | 73/27 | 11 | r.t (72) | 22 | 71 | 7 | - | - | - | - | diglyme |
| A8 | HexSiCl₃ | HexSiH₃ | 59/41 | 9 | 80 (14) | 8 | 66 | 23 | 4 | - | - | - | diglyme |
| | | | | | 120 (42) | 6 | 72 | 20 | 2 | - | - | - | |
| A9 | MeSiHeptCl₂ | MeSiHeptH₂ | 45/55 | 14 | 120 (16) | - | - | - | - | 13 | 64 | 23 | THF |
| | MeSiHeptCl₂ | MeSiHeptH₂ | 55/45 | 14 | 140 (19) | - | - | - | - | 25 | 63 | 12 | THF |
| A10¹ | MeSiBuCl₂ | MeSiBuH₂ | 50/50 | 17 | 120 (17) | - | - | - | - | 18 | 56 | 56 | THF |
| A10² | MeSiBuCl₂ | MeSiBuH₂ | 50/50 | 15 | 120 (17) | - | - | - | - | 13 | 62 | 25 | diglyme |
| A11 | BuSiHexCl₂ | BuSiHexH₂ | 74/26 | 16 | 120 (109) | - | - | - | - | 32 | 58 | 10 | THF |

**Table 4: Redistribution reactions of differently organo-substituted hydrido- and chlorosilanes with n-Bu₄PCl as catalyst in diglyme as solvent**

| **Entry** | **Silane compound 1** | **Silane compound 2** | **Molar ratio 1 / 2** | **Catalyst: (mg)** | **T[°C] (t[h])** | **R¹R²SiCl₂** | **R¹R²SiHCl** | **R¹R²SiH₂** | **R^{'}₂SiCl₂** | **R^{'}₂SiHCl** | **R^{'}₂SiH₂** | **Remarks** |
|---|---|---|---|---|---|---|---|---|---|---|---|---|
| A12 | Ph₂SiCl₂ | Me₂SiH₂ | 55/45 | 15 | 80 (16) | 12 | 30 | 13 | 9 | 34 | 2 | R¹,R² = Ph; R'= Me |
| | | | | | 100 (24) | 5 | 35 | 17 | 17 | 25 | 1 | |
| A13 | Me₂SiCl₂ | Et₂SiH₂ | 56/44 | 9 | 80 (13) | 26 | 20 | 10 | - | 32 | 12 | R¹,R² = Me; R'= Et |
| | | | | | 140 (13) | 11 | 37 | 10 | 10 | 26 | 6 | |
| A14 | PhMeSiCl₂ | Me₂SiH₂ | 51/49 | 21 | 80 (2) | 22 | 19 | 10 | 2 | 40 | 7 | R¹ = Ph; R² = Me; R'= Me |
| | | | | | 140 (48) | 7 | 33 | 12 | 14 | 30 | 4 | |
| A15 | ViMeSiCl₂ | Me₂SiH₂ | 48/52 | 18 | 80 (2) | 10 | 28 | 9 | 6 | **41** | 6 | R¹ = Vi; R² = Me; R'= Me |
| | | | | | 120 (21) | 6 | 29 | 14 | 13 | 33 | 5 | |

### Entries A1-A3/Table 3: Target reaction: 1 Me₂SiH₂ + 1 Me₂SiCl₂ → 2 Me₂SiHCl

As can be seen from Table 3, the redistribution reactions gave Me₂SiHCl in excellent yields (ca. 85%) related to the hydridosilane reacted and under moderate conditions (100° C / 24 h). The yield of Me₂SiHCl is increasing with increasing excess of Me₂SiCl₂; Me₂SiH₂ is nearly quantitatively consumed, thus simplifying the separation of Me₂SiCl₂ from Me₂SiHCl by low temperature condensation and/or distillation at normal pressure. Notably, in all redistribution reactions the catalyst *n*-Bu₄PCl remained unreacted and could be recycled easily.

### Entry A4/Table 3: Target reaction: Me₂SiH₂ + MeSiCl₃ → Me₂SiHCl+ MeSiHCl₂

After 2 h at 80 °C Me₂SiH₂ was quantitatively transferred into Me₂SiHCl (51%), while MeSiCl₃ was increasingly reduced to finally give MeSiH₃ in 8% with increasing reaction times/temperatures. With prolonged reaction times and/or increasing temperatures Me₂SiHCl was increasingly chlorinated to Me₂SiCl₂, while the molar ratio of methylmonochloro- and methyldichlorosilanes (MeSiH₂Cl and MeSiHCl₂) remains rather constant. The optimum conditions for the synthesis of the target compounds are 80 °C / 2 h. Notably, under those conditions, the overall yield in hydridomonosilanes was 81%, the catalyst remained unchanged.

### Entry A5/Table 3: Target reaction: 1 Me₂SiH₂ + 1 MeSiCl₃ → 1 Me₂SiHCl+ 1 MeSiHCl₂

Entry A5 demonstrates that the redistribution equilibrium is strongly shifted to give monomethylsilanes MeSiH₂Cl and MeSiHCl₂ in 55% at 80 °C / 16 h: Longer reaction times as compared to entry A4 (Table 3) favored monomethylsilane formation, while Me₂SiH₂ was completely chlorinated to give Me₂SiCl₂; the catalyst remained unchanged.

### Entries A6 and A7/Table 3: Target reaction: 1 MeSiH₃ + 2 MeSiCl₃ → 3 MeSiHCl₂

As shown in entries A6 and A7, Table 3, as well as Table 3/A7¹and 3/A7² below, the target compound MeSiHCl₂ was formed already within 2 h at 80 °C. Based on the amount of MeSiH₃ reacted and with an excess of MeSiCl₃, the redistribution reaction was quantitative. Table 3/A7² demonstrates that MeSiHCl₂ was already formed in more than 70 % at r.t., but with longer reaction times. The yield of MeSiH₂Cl was slightly increased running the redistribution reaction at higher temperatures. In both experiments of entries A6 and A7, *n*-Bu₄PCl was used as catalyst and remained unchanged.

**Table 3/A7^{1*)}**

| **silane** | **educt (%)** | **80 °C, 2 h** | **120 °C, +60 h** |
|---|---|---|---|
| MeSiCl₃ | 73 | 24 | 23 |
| MeSiH₂Cl | - | 6 | 10 |
| MeSiHCl₂ | - | 70 | 67 |
| MeSiH₃ | 27 | - | - |

**Table 3/A7^{2*)}**

| **silane** | **educt (%)** | **rt, 32 h** | **rt, +40 h** |
|---|---|---|---|
| MeSiCl₃ | 73 | 25 | 22 |
| MeSiH₂Cl | - | 6 | 7 |
| MeSiHCl₂ | - | 69 | 71 |
| MeSiH₃ | 27 | - | - |

| | | | |
|---|---|---|---|
| *⁾ (+) means: in addition to the aforementioned reaction | | | |

### Entry A8/Table 3: Target reaction: 1 HexSiH₃ + 2 HexSiCl₃ → 3 HexSiHCl₂

Already after 14h at 80 °C the target compounds HexSiHCl₂ (66%) and HexSiH₂Cl (23%) were formed in excellent yields (ca. 90%), related to the amount of starting material HexSiH₃ used; thus the redistribution was nearly quantitative. With prolonged reaction times and temperatures (120 °C/42 h) the relative amount of the targeted HexSiHCl₂ increased to 72%, while the amount of educts as well as of HexSiH₂Cl (20%) decreased slightly.

### Entry A9/Table 3: Target reaction: 1 MeSiHeptH₂ + 1 MeSiHeptCl₂ → 2 MeSiHeptHCl

A 55:45 mixture of MeSiHeptH₂ and MeSiHeptCl₂ was reacted with *n*-Bu₄PCl as redistribution catalyst at 100 °C (3 h), 120 °C (16 h) and 140 °C (18 h) in a sealed NMR tube. After each heating period product distribution was controlled by NMR spectroscopy. Redistribution reaction started already at r.t. to give 30 % of MeSiHeptHCl. By further heating of the sample to 120 °C, the redistribution reaction was almost completed yielding 64 % of MeSiHeptHCl.

### Entries A10¹ and A10²/Table 3: Target reaction: 1 MeSiBuH₂ + 1 MeSiBuCl₂ → 2 MeSiBuHCl

The redistribution reactions of an equimolar mixture of MeSiBuH₂ and MeSiBuCl₂ (molar ratio 50:50) in THF and in diglyme as solvent at 120 °C (17 h) each gave identical product distributions: The bifunctional target compound MeSiBuHCl was formed in about 60 % based on the sum of the molar amounts of the chlorosilane and the hydridosilane.

### Entry A11/Table 3: Target reaction: 1 BuSiHexH₂ + 1 BuSiHexCl₂ → 2 BuSiHexHCl

124 mg of *n*-Bu₄PCl, 5 mL THF, BuSiHexH₂ (7 mmol dissolved in 10 mL THF) and 4.82 g (20 mmol) BuSiHexCl₂ were placed in an ampule equipped with an NMR tube, cooled to -196 °C and sealed *in vacuo.* Reaction was performed at 120 °C for 109 h. The ampule was opened, and the liquid product mixture was transferred into a *Schlenk-flask.* Volatile products as well as the silane reactants were condensed off *in vacuo* to be separated from phosphonium chloride, which remained unchanged in the redistribution reaction. The THF was distilled off and a mixture consisting of BuHexSiHCl (2.69 g, 13 mmol) and BuSiHexCl₂ (3.14 g, 11 mmol) was obtained.

### Entry A12/Table 4: Target reaction: Ph₂SiCl₂ + Me₂SiH₂ → Me₂SiHCl+ Ph₂SiHCl

A mixture of Me₂SiH₂ (0.9 mmol) and Ph₂SiCl₂ (1.1 mmol) was solved in diglyme (0.35 ml) with an admixture of a catalytic amount of *n*-Bu₄PCl (0.02 mmol). As shown in Table 4 the targeted hydridochlorosilanes Me₂SiHCl and Ph₂SiHCl were formed in 34 and 30% (80 °C, 16 h), respectively. While Me₂SiH₂ was consumed nearly quantitatively, Ph₂SiH₂ was formed in 13%: Monosilane Me₂SiH₂ was chlorinated to give Me₂SiHCl and Me₂SiCl₂ (9%) while Ph₂SiCl₂ was reduced to yield Ph₂SiHCl and Ph₂SiH₂. With prolonged reaction time at 100 °C, the amount of Ph₂SiCl₂ increased from 30 to 35%, while that of the Me₂SiHCl decreased from 34 to 25%. Higher temperatures did not shift the redistribution equilibrium, the system remained constant.

### Entry A13/Table 4: Target reaction: Me₂SiCl₂ + Et₂SiH₂ → Me₂SiHCl+ Et₂SiHCl

In a redistribution reaction of Me₂SiCl₂ (1.0 mmol) and diethylsilane (Et₂SiH₂, 0.8 mmol) in diglyme (0.35 ml) and *n*-Bu₄PCl (0.02 mmol) as catalyst, Me₂SiHCl and Et₂SiHCl were formed in 37% and 26%, respectively at 140 °C/13 h. At lower temperatures (80 °C/13 h) formation of Et₂SiHCl was favored over the methyl substituted counterpart Me₂SiHCl (32 vs. 20% yield). While starting compound Et₂SiH₂ was nearly quantitatively consumed at 140 °C to even give the dichloro derivative (Et₂SiCl₂), Me₂SiH₂ was formed in 10%. This experiment convincingly demonstrates that the formation of the targeted differently organo substituted hydridochlorosilanes was effectively controlled by the reaction conditions.

### Entry A14/Table 4: Target reaction: PhMeSiCl₂ + Me₂SiH₂ → PhMeSiHCl + Me₂SiHCl

In a redistribution reaction, similar to entry A12, Me₂SiH₂ (1.1 mmol) was reacted with PhMeSiCl₂ (1.1 mmol) in diglyme (0.35 ml) and *n*-Bu₄PCl (0.02 mmol) as catalyst to give the target compounds Me₂SiHCl (30%) and PhMeSiHCl (33%) at 140 °C/48 h. Notably, the starting compounds were mostly consumed already at 80 °C yielding Me₂SiHCl in 40% and PhMeSiHCl in 19%. As discussed for entries A12 and A13, the formation of differently organo substituted target compounds is depending on reaction conditions, thus making product formation controllable.

### Entry A15/Table 4: Target reaction: ViMeSiCl₂ + Me₂SiH₂ → ViMeSiHCl + Me₂SiHCl

Redistribution reactions of Me₂SiH₂ (1.1 mmol) and ViMeSiCl₂ (1.1 mmol) in diglyme (0.35 mol) and *n*-Bu₄PCl (0.02 mmol) as catalyst were similar to those described for entries A12-A14. The target compounds Me₂SiHCl and ViMeSiHCl were already formed at 80 °C/2 h in nearly 70% yield. While the molar amounts of ViMeSiHCl remained constant with increasing reaction temperatures, the amount of Me₂SiHCl was steadily decreasing by chlorination to give dichlorosilane Me₂SiCl₂ (13%).

### Upscaling into preparative scale:

### Synthesis of Me₂SiHCl₂SiCl₂ with LiH in THF and subsequent redistribution of Me₂SiH₂ with Me₂SiCl₂

### Synthesis of Me₂SiH₂ by reduction of Me₂SiCl₂ with LiH in THF

In a 250 ml three-necked flask equipped with a dropping funnel, reflux condenser and a magnetic stirrer were placed 7.22 g (0.88 mol, 97 %) lithium hydride (LiH), suspended in 100 ml of thoroughly dried tetrahydrofurane (THF) under an inert nitrogen atmosphere. The THF/LiH suspension was carefully scaled from oxygen/air by degassing *in vacuo* and refilling with gaseous nitrogen to establish inert conditions. To the vigorously stirred suspension 56.84 g (53.6 ml, 0.44 mol) of dimethyldichlorosilane (Me₂SiCl₂) were slowly added over the dropping funnel. Upon addition, the reduction of Me₂SiCl₂ started after an induction period of 5 minutes with self-heating of the solution to about 54 °C. Dimethylsilane (Me₂SiH₂, b.p.: -20 °C), formed continuously, evaporated and was frozen in a cooling trap (-196 °C) which was connected with the top of the reflux condenser. After Me₂SiCl₂ addition was completed (1 h, final temperature 50 °C), the mixture was subsequently heated to reflux (75 °C oil bath temperature) for an additional hour and then cooled down to r.t.. To completely collect Me₂SiH₂ in the cooling trap, the reaction flask was applied to vacuum and the product was pumped off. The product mixture inside the cooling trap was then condensed into an ampule with attached NMR tube and the ampule was sealed (31.28 g product mixture). Subsequently, 0.5 ml of the product mixture was poured from the ampule into the NMR tube, which was then sealed and disconnected from the ampule. ¹H and ²⁹Si NMR spectroscopic measurements revealed the following product distribution:

| | |
|---|---|
| Me₂SiH₂: | 25.4 g, 0.42 mol, 96 % yield. |
| Me₂SiCl₂: | 2.28 g, 0.018 mol, 4 %. |

Upon chlorosilane reduction with lithium hydride lithium chloride is formed and precipitated from the solution. LiCl was isolated by filtration and dried in vacuo. Formed LiCl was obtained in 36.05 g (96% conversion of LiH into LiCl; theoretical yield after 100% conversion: 37.56 g), which is in line with the amount of formed Me₂SiH₂.

### Synthesis of Me₂SiHClvia n-Bu₄PCl catalyzed redistribution of Me₂SiH₂ with Me₂SiCl₂ in THF

In an glass ampule were placed 0.41 g (1.39 mmol) *n*-Bu₄PCl, 40 ml of thoroughly dried THF and 84.82 g (657.21 mmol) Me₂SiCl₂. The ampule was cooled to -196 °C and a Me₂SiH₂/THF mixture (30.42 g; ca. 22.69 g Me₂SiH₂) was added via condensation. Subsequently, the ampule was evacuated *in vacuo,* sealed and heated to 100 °C for 24 h. After the reaction was completed, the ampule was cooled to -196 °C, opened and the products condensed into a flask. After warming the reaction mixture to -80 °C (to liquefy all products), 0.6 ml were taken for ¹H, ²⁹Si and ³¹P NMR spectroscopy. The product mixture obtained was as follows:

| | |
|---|---|
| Me₂SiHCl: | 51.4 g, 0.54 mol, 55 % |
| Me₂SiCl₂: | 49.8 g, 0.39 mol, 39 % |
| Me₂SiH₂: | 5.6 g, 0.06 mol, 6 % |

For isolation of Me₂SiHCl, the glass ampule was again cooled to -196 °C, opened and the whole product mixture condensed into a 250 ml flask. Final distillation over a 25 cm Vigreux column at normal pressure with an oil bath temperature of up to 68 °C and a cooled receiving flask (-80 °C) gave 52.70 g distillate, with the following product distribution:

| | |
|---|---|
| Me₂SiHCl: | 41.2 g, 0.435 mol, 82 % |
| Me₂SiCl₂: | 3.7 g, 0.028 mol, 3 % |
| Me₂SiH₂; | 3.6 g, 0.060 mol, 15 % |

93.95 g residue remained after distillation, which was also analyzed by ¹H and ²⁹Si NMR spectroscopy. The corresponding product distribution was:

| | |
|---|---|
| Me₂SiHCl: | 9.3 g, 0.099 mol, 26 % |
| Me₂SiCl₂: | 46.9 g, 0.363 mol, 74 % |

Combining the product distillate and the residue, the overall yield of Me₂SiHCl was 50.48 g (0.53 mol), Me₂SiH₂ remained after redistribution and distillation in 3.61 g (0.06 mol). Related to the reacted amount of Me₂SiH₂ the (isolated) yield of Me₂SiHCl was 71%, integration of signals in the product mixture (glass ampule after redistribution) gave an overall yield of 82% Me₂SiHCl.

| | | | | |
|---|---|---|---|---|
| boiling points: | Me₂SiH₂ | -20 °C | | |
| | Me₂SiHCl | +35 °C | 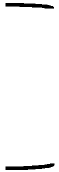 | separation of products is simply |
| | Me₂SiCl₂ | +70 °C | | possible by fractional distillation. |
| | THF | +66 °C | | |

In conclusion, the synthesis of Me₂SiH₂ works in 96% yield and the redistribution selectively gave Me₂SiHCl with some remaining Me₂SiH₂, wherein the losses of the hydridosilane are due to the low boiling point and the work up procedure. Careful distillation of the product mixture with subsequent post-processing of remaining Me₂SiH₂ (chlorination with HCl/ether or with SiCl₄ or a second redistribution with Me₂SiCl₂) gives the target compound Me₂SiHCl nearly quantitatively.

### 2) One-step chlorosilane reduction with subsequent redistribution reactions to yield bifunctional monosilanes

**Table 5: One-step chlorosilane reduction with lithium hydride and subsequent redistribution reactions under n-Bu₄PCl catalysis¹⁾**

| **Entry** | **chlorosilane** | **molar ratio s.m./ LiH** | **T[°C] (t[h])** | **RSiCl₃** | **RSiHCl₂** | **RSiH₂Cl** | **RSiH₃** | **R₂SiCl₂** | **R₂SiHCl** | **R₂SiH₂** | **Remarks** |
|---|---|---|---|---|---|---|---|---|---|---|---|
| A16 | MeSiBuCl₂ | 1/1 | 140 (65) | - | - | - | - | 23 | 50 | 27 | one-step reduction and redistribution with LiH in THF |
| | | | 160 (32) | | | | | 20 | 72 | 5 | |
| A17 | MeSiCl₃ | 1/1.5 | 120 (65) | 5 | 61 | 29 | 5 | - | - | - | one-step reduction and redistribution with LiH |
| A18 | BuSiCl₃ | 1/0.35 | 120 (15) | 70 | 30 | - | - | - | - | - | one-step reduction and redistribution with LiH |

| | | | | | | | | | | | |
|---|---|---|---|---|---|---|---|---|---|---|---|
| ¹⁾ *n*-Bu₄PCl was added to the redistribution mixture in 0.1-10 wt% related to the amount of chlorosilanes (in grams); s.m. = silane starting material. | | | | | | | | | | | |

### Entry A16/Table 5: One-step reduction and redistribution reaction of MeSiBuCl₂ to MeSiBuHCl

LiH (150 mg, 18.3 mmol, 1 eq) and *n*-Bu₄PCl (31.4 mg, 0.1 mmol, 0.5 mol%) were suspended in 10 mL of dry THF and 1 mL of dry C₆D₆ in an ampule equipped with an NMR tube. The ampule was frozen at -196 °C, subsequently MeSiBuCl₂ (3 mL, 18.3 mmol, 1 eq) was added, the ampule was evacuated and sealed *in vacuo.* After 65 h at 140 °C, the NMR spectroscopic analysis indicated that MeSiBuHCl was formed in about 50 % besides 23 % of unreacted MeSiBuCl₂ and hydrogenated MeSiBuH₂ (27 %). Further heating of the sample to 160 °C (32 h) increased the amount of MeSiBuHCl (72 %) while the molar amounts of MeSiBuCl₂ (20 %) and MeSiBuH₂ (5 %) decreased.

### Entry A17/Table 5: One-step reduction and redistribution reaction of MeSiCl₃ to MeSiH₂Cl and MeSiHCl₂

LiH (340 mg, 43 mmol, 1.9 eq) and *n*-Bu₄PCl (51.7 mg, 0.2 mmol, 0.1 mol%) were suspended in 5 mL of dry THF and 1 mL of dry C₆D₆ in an ampule equipped with an NMR-tube. The ampule was frozen at -196 °C, subsequently MeSiCl₃ (2.6 mL, 22 mmol, 1 eq) was added, the ampule was evacuated and sealed. After 65 h at 120 °C, NMR spectroscopic analysis indicated that MeSiH₂Cl was formed in about 29 % besides MeSiHCl₂ (61 %), MeSiH₃ (5 %) and unreacted MeSiCl₃ (5 %).

### Entry A18/Table 5: One-step reduction and redistribution reaction of BuSiCl₃ to BuSiHCl₂

LiH (290 mg, 0.38 eq, 36.5 mmol) and *n*-Bu₄PCl (124 mg, 0.4 mmol, 0,4 mol%) were placed in an ampule equipped with an NMR tube and suspended in 12 mL of dry THF. The ampule was frozen (-196 °C) and BuSiCl₃ (16 mL, 97 mmol, 1 eq) was added and the ampule was sealed *in vacuo.* After heating the sample to 120 °C for 14.5 h, NMR analysis indicated formation of BuSiHCl₂ in 30 %. The ampule was opened, and all volatiles were condensed *in vacuo* to separate from *n*-Bu₄PCl. BuSiHCl₂ (yield: 80 % rel. to LiH, 29.1 mmol, 4.57 g), dissolved in THF, was used without further purification. (δ²⁹Si = 33.95 ppm, R_{T} = 13.95 min).

### 3) Chlorination of hydridosilanes with an Et₂O/HCl solution, exemplified for the chlorination of MeSiBuH₂ into MeSiBuHCl (Entry A19)

MeSiBuH₂ (1.06 g, 10.4 mmol) was admixed with an Et₂O/HCl solution (15 mL, 5 M, 75 mmol). The reaction mixture was stirred at r.t for 2 h, resulting in the formation of MeSiBuHCl in only 10 % (GC/MS-analysis). Increasing the reaction time (+16 h) increased the conversion of MeSiBuH₂ to MeSiBuHCl to 67 %. Addition of another 5 ml of the 5 M Et₂O/HCl solution and stirring for additional 5 h at r.t. gave MeSiBuHCl in 90 % (isolated yield) after fractional distillation besides unreacted MeSiBuH₂ as detected by GC-MS and NMR spectroscopy.

### 4) Chlorination reactions of the hydridomonosilanes R¹SiH₃ and R¹R²SiH₂ with SiCl₄

**Table 6: Chlorination reactions of the hydridosilanes R¹SiH₃ and R¹R²SiH₂ with SiCl₄^{a)}**

| **Entry** | **hydridosilane** | **T[°C] (t[h])** | **RSiCl₃** | **RSiHCl₂** | **RSiH₂Cl** | **RSiH₃** | **R₂SiCl₂** | **R₂SiHCl** | **R₂SiH₂** |
|---|---|---|---|---|---|---|---|---|---|
| A20^{b)} | OctSiH₃ | 60 (3) | - | 25 | 60 | 15 | - | - | - |
| | | 90 (64) | | 100 | | | | | |
| A21^{c)} | HexSiH₃ | 90 (16) | - | - | 86 | 14 | - | - | - |
| | | 90 (36) | - | 45 | 55 | - | | | |
| | | 130 (18) | 10 | 89 | 1 | - | | | |
| A22^{c)} | MeHexSiH₂ | 55 (9.5) | - | - | - | - | - | 100 | - |
| | | r.t. (32.5) | | | | | | | |
| A23^{c)} | OctHexSiH₂ | 100 (72) | - | - | - | - | - | 94 | 6 |

| | | | | | | | | | |
|---|---|---|---|---|---|---|---|---|---|
| ^{a)} conversion rates in mol% ^{b)}*n*-Bu₄NCl as catalyst; ^{c)} *n*-Bu₃N as catalyst | | | | | | | | | |

### Entry A20, Table 6, Target reaction: OctSiH₃ + SiCl₄ → OctSiHCl₂ + HSiCl₃

OctSiH₃ (74 mL, 0.41 mol), *n*-Bu₄NCl (4 mmol, 1 mol%) and SiCl₄ (130 mL, 1.1 mol, 3.0 eq) were reacted in a *Schlenk-flask* at 60 °C for 3 h. GC-MS analysis proved that OctSiH₃ was stepwise converted to give OctSiHCl₂ (25 %). For full conversion of the OctSiH₂Cl to yield OctSiHCl₂, the reaction mixture was heated to 90 °C for 64 h. After separation of the low boiling compounds HSiCl₃, SiCl₄ and THF by distillation, OctSiHCl₂, contaminated with OctSiCl₃, was isolated in 82.4 g (81.4 g of OctSiHCl₂, 0.38 mol, 93 % yield, contaminated with 1.0 g of OctSiCl₃, 4.0 mmol). This mixture was used without further purification for the subsequent hydrosilylation reaction.

### Entry A21, Table 6, Target reaction: HexSiH₃ + SiCl₄ → HexSiHCl₂ + HSiCl₃

HexSiH₃ (79 g, 0.58 mol, 1.0 eq), *n*-Bu₃N (4 mmol, 4 mol%) and SiCl₄ (540 mL, 3.4 mol, 5.0 eq) were reacted in a *Schlenk-flask* at 90 °C for 52 h. GC-MS-analysis proved the stepwise conversion of HexSiH₃ to HexSiH₂Cl. For full conversion of HexSiH₂Cl into HexSiHCl₂, HSiCl₃, admixed with SiCl₄, was distilled off and additional SiCl₄ (50 mL, 0.4 mol, 0.4 eq) was added to the reaction mixture and heated to 130 °C for 18 h. After separation of the low boiling compounds HSiCl₃ and SiCl₄ by distillation, HexSiHCl₂ was isolated in 87 g (0.47 mol, 81 % yield).

### Entry A22, Table 6, Target reaction: MeHexSiH₂ + SiCl₄ → MeHexSiHCl + HSiCl₃

MeHexSiH₂ (0.29 mol, 1.0 eq), SiCl₄ (63 mL, 0.55 mol, 1.9 eq) and *n*-Bu₃N (1 mL, 1 mol%) were reacted in a *Schlenk-flask* at 55 °C (9.5 h) and at r.t. (32.5 h). After distillation, the desired product MeHexSiHCl was isolated in 81 % yield (38.5 g, 0.234 mol, admixed with 2.6 g THF, as calculated from ¹H-NMR spectroscopy).

### Entry A23, Table 6, Target reaction: OctHexSiH₂ + SiCl₄ → OctHexSiHCl + HSiCl₃

OctHexSiH₂ (79 g, 0.34 mol, 1.0 eq), *n*-Bu₃N (1 mL, 1 mol%) and SiCl₄ (190 mL, 1.6 mol, 4.8 eq) were reacted in a *Schlenk-flask* at 100 °C for 40 h. A mixture consisting of HSiCl₃ and SiCl₄ (50 mL) was separated from the reaction mixture by distillation. The remaining residue was further reacted at 100 °C for 16 h. GC-MS-analysis of the reaction mixture proved OctHexSiH₂ conversion into OctHexSiHCl in 94 %. After separation of the low boiling compounds HSiCl₃ and SiCl₄ by distillation and fractional distillation, OctHexSiHCl was isolated in 86 g (0.33 mol, 96 % yield, post chlorination by thermal work up, 106 °C at 40 mbar, R_{T} = 22.8 min).

### Step b): Hydrosilylation reactions of the bifunctional monosilanes HSiCl₃, R¹SiHCl₂ and R¹R²SiHCl (organohydridochlorosilanes obtained by step a))

**Table 7: Hydrosilylation reactions of different organohydridochlorosilanes**

| **Entry** | **Silane compound** | **[mol]** | **Alkene** | **[mmol]** | **THF [mL]** | **T[°C] (t[h])** | **Cat. [mg]** | **Product** | **Conversion [%]/ Isolated yield [%]** |
|---|---|---|---|---|---|---|---|---|---|
| B1 | HSiCl₃ | 0.11 | 1-butene | 160 | 10 | 70 (17) | 192^{a)} | BuSiCl₃ | 100 / 96 |
| B2 | HSiCl₃ | 1.00 | 1-hexene | 1.30 | - | 60 (1) | 0.25 ml^{b)} | HexSiCl₃ | 100 / 87 |
| B3 | HSiCl₃ | 0.49 | 1-octene | 0.64 | 100 | 85 (14) | 50^{c)} | OctSiHCl₃ | 100 / 90 |
| B4 | MeSiHCl₂ | 0.15 | 1-butene | 160 | 10 | 100 (64) | 70^{c)} | MeSiBuCl₂ | 100 / 93 |
| B5 | MeSiHCl₂ | 0.50 | 1-hexene | 0.45 | 70 | 100 (62) | 260^{a)} | MeHexSiCl₂ | 100 / 93 |
| B6 | MeSiHCl₂ | 0.06 | 1-heptene | 70 | 30 | 100 (1) | 120^{a)} | MeSiHeptCl₂ | 100 / 80 |
| B7 | BuSiHCl₂ | 0.03 | 1-hexene | 97 | 20 | 100 (19) | 120^{a)} | BuSiHexCl₂ | 100 / 74 |
| B8 | HexSiHCl₂ | 0.44 | 1-octene | 0.69 | 150 | 100 (79) | 80^{c)} | OctHexSiCl₂ | 100/* |
| B9 | OctSiHCl₂ | 0.38 | 1-hexene | 0.54 | 50 | 100 (22) | 50^{c)} | OctHexSiCl₂ | 91 / 68 |
| B10 | Me₂SiHCl | 0.32 | 1-hexene | 0.48 | - | 100 (67) | 230^{a)} | Me₂SiHexCl | 100 / 97 |
| B11 | Me₂SiHCl | 0.8 | 1-heptene | 0.9 | 0.3 | 70 (14) | 12^{a)} | Me₂SiHeptCl | 100/* |
| B12 | MeSiBuHCl | 0.01 | 1-butene | 41 | 5 | 120 (21) | 34^{a)} | MeSiBu₂Cl | 100 / ** |
| B13 | MeSiBuHCl | 0.01 | 1-butene | 52 | 5 | 120 (21) | 31^{a)} | MeSiBu₂Cl | 100 / ** |
| B14 | MeHexSiHCl | 0.23 | 1-heptene | 0.28 | - | 100 (19) | 100^{a)} | MeHexSiHeptCl | 100 / 97 |
| B15 | MeSiHeptHCl | 0.01 | 1-octene | 19 | 4 | 100 (62) | 40^{a)} | MeSiHeptOctCl | 100 / 68 |
| B16 | OctHexSiHCl | 0.33 | 1-pentene | 0.75 | 150^{d)} | 100 (82) | 500^{c)} | OctHexSiPentCl | 100 / 94 |
| B17 | BuSiHexHCl | 0.02 | 1-octene | 0.03 | 20^{a)} | 100 (13) | 120 | BuSiHexOctCl | 100 / 30 |

| | | | | | | | | | |
|---|---|---|---|---|---|---|---|---|---|
| ^{a)} Y1EX2-immobilized Pt-catalyst; ^{b)} Karstedt-catalyst⁾; ^{c)} B770011 (Pt on Silica 210); ^{d)} diglyme as solvent;* experiment was performed in a sealed NMR tube; ** Used without further purification | | | | | | | | | |

### 1) Hydrosilylation reactions of HSiCl₃

### Entry B1/Table 7: Target reaction: HSiCl₃ + 1-butene → BuSiCl₃

192 mg of the hydrosilylation catalyst (Y1EX2) were placed in an ampule equipped with an NMR tube. 10 mL of dry THF, 0.8 mL C₆D₆ and HSiCl₃ (20 ml, 1.0 eq, 0.11 mol) were added. The reaction mixture was frozen (-196 °C) and 1-butene (9.4 g, 1.4 eq, 0.16 mol) was added by condensation *in vacuo.* Subsequently the ampule was sealed *in vacuo.* After heating the sample to 70 °C (17.5 h) NMR analysis indicated full conversion of HSiCl₃ to BuSiCl₃. The ampule was opened, and the reaction mixture was distilled. The product was isolated in 19.7 g (103 mmol, 96% yield, b.p.: 149 °C (normal pressure), δ²⁹Si= 13.11 ppm, R_{T} = 15.28 min).

### Entry B2/Table 7: Target reaction: HSiCl₃ + 1-hexene → HexSiCl₃

HSiCl₃ (100 mL, 1.0 mol), 126 mL (1.3 mol, 1.3 eq) of 1-hexene and 0.25 mL of the Karstedt-catalyst were reacted at 60 °C for 30 min. THF and the alkene were separated via condensation *in vacuo.* The product was isolated by distillation *in vacuo* in 192.0 g (87 mol, 87 % yield, b.p.: 25 °C (10⁻² mbar), δ²⁹Si = 13.0 ppm, R_{T} = 18.21 min).

### Entry B3/Table 7: Target reaction: HSiCl₃ + 1-octene → OctSiCl₃

HSiCl₃ (50 mL, 0.49 mol), 100 ml of dry THF and 101 mL (0.64 mol, 1.3 eq) of 1-octene were added to 50 mg of the catalyst (B770011) in a *Schlenk-flask.* After heating to reflux (85 °C) for 14 h, GC-MS analysis proved full conversion of HSiCl₃ into OctSiCl₃. THF and the alkene were separated via condensation *in vacuo* and the product was isolated by distillation *in vacuo* in 109.7 g (0.44 mol, 90 % yield. b.p.:75°C (10⁻² mbar), δ²⁹Si = 13.0 ppm, R_{T} = 21.03 min).

### 2) Hydrosilylation reactions of R¹SiHCl₂

### Entry B4/Table 7: Target reaction: MeSiHCl₂ + 1-butene → MeSiBuCl₂

MeSiHCl₂ (15.3 ml, 0.15 mol, 1.0 eq), dry THF (10 mL) and 70 mg of the catalyst (Y1EX2) were mixed in an ampule with an attached NMR tube. The ampule was frozen at -196 °C and but-1-ene (9.0 g, 0.16 mol, 1.1 eq) was condensed onto the reaction mixture. The ampule was sealed *in vacuo* and placed in an oven at 100 °C for 64 h. NMR analysis proved a quantitative conversion of MeSiHCl₂ into MeSiBuCl₂. The ampule was opened, and the product mixture was distilled to yield 23.2 g (0.135 mol, 93 % yield) of the product. (b.p.: 148-151 °C, δ²⁹Si = 33.3 ppm, R_{T} = 15.40 min).

### Entry B5/Table 7: Target reaction: MeSiHCl₂ + 1-hexene → MeHexSiCl₂

The Pt-catalyst (260 mg) was placed in an ampule and suspended with 70 mL dry THF and 63 mL (0.5 mol, 1.1 eq) of 1-hexene. The mixture was frozen with liquid nitrogen and subsequently MeSiHCl₂ (0.45 mol, 1.0 eq) was added, the ampule was evacuated and sealed. After the reaction mixture was heated to 100 °C for 62 h, the ampule was opened and the product MeHexSiCl₂ was isolated in 94% yield, contaminated by small amounts of THF. Distillation under reduced pressure gave MeSiHexCl₂ (84.26 g, 0.423 mol) and 2.80 g THF (0.039 mol); molar ratio: 92/8; (b.p.: 145 °C (stationary vacuum), δ²⁹Si = 32.6 ppm, R_{T} = 18.36 min).

### Entry B6/Table 7: Target reaction: MeSiHCl₂ + 1-heptene → MeSiHeptCl₂

120 mg of the catalyst (Y1EX2) were placed in a flask and suspended with 30 mL of dry THF, 7 mL (1.0 eq, 64 mmol) of MeSiHCl₂, and 10 ml (1.1 eq, 70 mmol) of hept-1-ene. The reaction mixture was stirred at r.t. for 1 h, but no conversion to the dialkyldichlorosilane was detected by GC-MS. Heating of the reaction mixture to 100 °C (oil-bath temperature) gave 100% of MeSiHeptCl₂ as identified by GC-MS and ²⁹Si-NMR spectroscopy. After distillation from the solvent MeSiHeptCl₂ was isolated in 10.4 g (80 % yield) by fractional distillation *in vacuo* (34 mbar, b.p.: 100 °C, δ²⁹Si = 32.5 ppm, R_{T} = 18.47 min).

### Entry B7/Table 7: Target reaction: BuSiHCl₂ +1-hexene → BuSiHexCl₂

To BuSiHCl₂, admixed with THF (Table 5, entry A18) and contaminated with small amounts of BuSiCl₃, were added 120 mg of the catalyst (Y1EX2), 7.5 mL of 1-hexene and 20 mL of THF in a *Schlenk-flask.* After heating the reaction mixture to reflux (100 °C) for 19 h, GC-MS analysis proved full conversion of BuSiHCl₂ into BuSiHexCl₂. THF, BuSiCl₃ and the alkene were separated via condensation *in vacuo.* The product was isolated by distillation at 120 °C *in vacuo* to yield 4.82 g of BuSiHexCl₂ (20 mmol, 74 % yield, b.p.:75 °C (vacuo), δ²⁹Si = 33.3 ppm, R_{T} = 19.83 min).

### Entry B8/Table 7: Target reaction: HexSiHCl₂ + 1-octene → OctHexSiCl₂

HexSiHCl₂ (82 g, 0.44 mol, 1.3 eq), 150 mL of dry THF and 110 mL (0.69 mol, 1.5 eq) of 1-octene were added to 80 mg of the catalyst (B770011) in a *Schlenk-flask.* After heating the mixture to reflux (100 °C) for 79 h, GC-MS analysis proved conversion of HexSiHCl₂ into OctHexSiCl₂ in 100 %. THF and the alkene were separated via condensation *in vacuo.* The product was isolated by distillation *in vacuo* in 117.5 g (0.40 mol, 91 % yield, b.p.: 135 °C (10⁻² mbar), δ²⁹Si = 33.2 ppm, R_{T} = 24.3 min).

### Entry B9/Table 7: Target reaction: OctSiHCl₂ + 1-hexene → OctHexSiCl₂

OctSiHCl₂ (50 mL, 0.49 mol, admixed with OctSiCl₃), 50 ml of dry THF and 58 mL (0.46 mol, 1.2 eq) of 1-hexene were added to 50 mg of the catalyst (B770011) in a *Schlenk-flask.* After heating to reflux (100 °C) for 20 h, GC-MS analysis of the reaction mixture proved conversion of OctSiHCl₂ into OctHexSiCl₂ in 86 %. For full conversion to the desired product, additional 1-hexene (10 mL, 80 mmol, 0.2 eq) and 25 mg of the catalyst (B770011) were added and the reaction mixture was heated to 100 °C for 2 h. THF and the alkene were separated via condensation *in vacuo* and the product was isolated by fractional distillation *in vacuo* in 77.0 g (0.26 mol, 68 % yield, δ²⁹Si = 33.2 ppm, R_{T} = 24.3 min).

### 3) Hydrosilylation reactions of R¹R²SiHCl

### Entry B10/Table 7: Target reaction: Me₂SiHCl+ 1-hexene → Me₂SiHexCl

The Pt-catalyst (Y1EX2, 230 mg) was placed in an ampule and suspended with 60 mL (0.48 mol, 1.5 eq) of 1-hexene and 36 mL (0.32 mol, 1.0 eq) of Me₂SiHCl. The mixture was frozen with liquid nitrogen and the ampule was sealed *in vacuo.* The reaction mixture was heated to 100 °C for 67 h, then the ampule was opened and the product Me₂SiHexCl was isolated by distillation under reduced pressure (b.p.: 140 °C (stationary vacuum) in 56 g, 0.31 mol, 97 % yield, δ²⁹Si = 30.8 ppm, R_{T} = 17.82 min).

### Entry B11/Table 7: Target reaction: Me₂SiHCl + 1-heptene → Me₂SiHeptCl

The catalyst (Y1EX2, 12 mg), Me₂SiHCl (1 eq) and 1-heptene (1.1 eq) were placed in an NMR tube. Dry THF (0.3 mL) and 0.1 mL of dry C₆D₆ were added and the NMR tube was frozen at -196 °C, evacuated and sealed *in vacuo.* After warming the sample to r.t. the reaction mixture was heated to 70 °C for 14 h, ²⁹Si-NMR spectroscopy proved full conversion of the hydridochlorosilane into the triorganochlorosilane (Me₂SiHeptCl: δ²⁹Si = 33.2 ppm, R_{T} = 24.3 min).

### Entry B12/Table 7: Target reaction: MeSiBuHCl + 1-butene → MeSiBu₂Cl

The product mixture obtained from entry A10¹/Table 3 was transferred into an ampule that was equipped with an NMR tube to monitor product distribution in a closed system, containing 34 mg of the catalyst (Y1EX2) and 5 mL of dry THF. Subsequently, 2.32 g of but-1-ene were condensed onto the reaction mixture that was cooled to -196 °C. The ampule was evacuated, sealed *in vacuo* and placed in a drying cabinet for 21 h at 120 °C. MeSiBuHCl was fully converted into MeSiBu₂Cl as identified by NMR-spectroscopy and GC-MS analysis. After separation of all volatiles by condensation *in vacuo,* MeSiBu₂Cl (1.78 g, 9.3 mmol, 99 % yield) was isolated still dissolved in 5 mL THF. The mixture was used without further purification. (MeSiBu₂Cl: δ²⁹Si = 31.5 ppm, R_{T} = 17.82 min).

### Entry B13/Table 7: Target reaction: MeSiBuHCl + 1-butene → MeSiBu₂Cl

The product mixture obtained from entry A10¹ was transferred into an ampule that was equipped with an NMR tube to monitor product distribution in a closed system, containing 25 mg of the catalyst (Y1EX2). 2.94 g of but-1-ene were added by condensation onto the reaction mixture cooled to -196 °C. The ampule was evacuated, sealed *in vacuo* and placed in a drying cabinet for 21 h at 120 °C. MeSiBuHCl was completely converted into MeSiBu₂Cl as identified by NMR-spectroscopy and GC-MS analysis. The product (18.3 mmol, 3.5 g), dissolved in 10 mL of THF, was used without further purification for the reduction step with LiH. (MeSiBu₂Cl: δ²⁹Si = 31.5 ppm, R_{T} = 17.82 min).

### Entry B14/Table 7: Target reaction: MeHexSiHCl + 1-heptene → MeHexSiHeptCl

The Pt-catalyst (100 mg) was suspended in 40 mL (0.28 mol, 1.2 eq) of 1-heptene and 41 g (0.23 mol, 1.0 eq) of MeHexSiHCl. The reaction mixture was heated to 100 °C for 19 h, the volatile compounds were condensed off *in vacuo* and the desired product was isolated in 59.3 g (0.22 mol, 97 % yield, δ²⁹Si = 31.6 ppm, R_{T} = 22.49 min).

### Entry B15/Table 7: Target reaction: MeSiHeptHCl + 1-octene → MeSiHeptOctCl

40 mg of the catalyst (Y1EX2) were placed in a flask and a mixture of MeSiHeptCl₂, MeSiHeptHCl (entry A9, Table 3), and 1-octene (3 mL) were added. This mixture was refluxed for 62.5 h and GC-MS analysis proved full conversion of the hydridosilane into the corresponding MeSiHeptOctCl. All volatiles (THF, excess 1-octene) were separated by condensation *in vacuo* and MeSiHeptCl₂ remained as residue. Final distillation *in vacuo* at 300 °C gave the trialkylchlorosilane in 68% yield (1.55 g, 5 mmol, δ²⁹Si = 31.48 ppm, R_{T} = 23.22 min).

### Entry B16/Table 7: Target reaction: OctHexSiHCl + 1-pentene → OctHexSiPentCl

OctHexSiHCl (85 g, 0.33 mol, 1.0 eq), 150 mL of dry diglyme and 143 mL (0.75 mol, 2.3 eq) of 1-pentene were added to 500 mg of the catalyst (B770011) in a *Schlenk-flask.* After heating to reflux (100 °C) for 82 h, diglyme and the alkene were separated via distillation in vacuo. The product was isolated by fractional distillation in vacuo in 102.2 g (0.31 mol, 94 % yield, b.p.: 135 °C (10⁻² mbar), δ²⁹Si = 31.6 ppm, R_{T} = 28.6 min).

### Entry B17/Table 7: Target reaction: BuSiHexHCl + 1-octene → BuSiHexOctCl

BuSiHexHCl (15.7 mmol), admixed with THF (15 mL) and the silane compounds BuSiHexH₂ (2.7 mmol) and BuSiHexCl₂ (8.6 mmol) (Table 3, entry L), were added to 120 mg of the catalyst (Y1EX2), 5 mL of 1-octene and 20 mL of THF in a *Schlenk-flask.* After heating to reflux (100 °C) for 13 h, GC-MS analysis proved full conversion of BuSiHexHCl into BuSiHexOctCl. THF and the alkene were separated via condensation under vacuo. The product mixture was isolated by distillation in vacuo at 400 °C and comprises BuSiHexOctCl and BuSiHexCl₂ (molar ratio: 2:1) in a yield of 2.1 g (1.5 g, 4.8 mmol, 30 % yield of BuSiHexOctCl, δ²⁹Si = 31.98 ppm, R_{T} = 24.97 min, admixed with 0.6 g, 2.4 mmol of BuSiHexCl₂).

### 4) Hydrosilylation reactions of HSiCl₃, MeSiHCl₂ and of MeSiBu₂H with functional unsaturated hydrocarbons

**Table 8: Hydrosilylation reactions of different hydridosilanes with various unsaturated hydrocarbons*⁾**

| **entry** | **silane compound** | **equiv.** | **reactant** | **equiv.** | **THF [mL]** | **T[°C] (t[h])** | **Cat.: Y1EX2 [mg]** | **product** | **conversion [%]** | **remarks** |
|---|---|---|---|---|---|---|---|---|---|---|
| B18 | HSiCl₃ | 1 | 1-octyne | 1.2 | 0.3 | 100 (7) | 8 | trichloro(oct-1-enyl)silane | 71 | side products** |
| B19 | HSiCl₃ | 1 | styrene | 1.2 | 0.3 | 80 (2) | 11 | trichloro(phenethyl)silane | 100 | - |
| B20 | HSiCl₃ | 1 | methyl undec-10-enoate | 1.2 | 0.3 | 100 (7) | 10 | methyl 11-(trichlorosilyl)undecenoate | 94 | side products** |
| B21 | HSiCl₃ | 1 | 11-bromoundec-1-ene | 1.2 | 0.3 | 80 (2) | 10 | (11-bromoundecyl)trichlorosilane | 100 | - |
| B22 | HSiCl₃ | 1 | 2,3-dimethylbutadiene | 0.5 | 0.3 | 100 (7) | 8 | trichloro(2,3-dimethylbut-3-en-1-yl) silane | 100 | see additional comment |
| B23 | MeSiHCl₂ | 1 | 1-octyne | 1.2 | 0.3 | 80 (2) | 17 | methyldichloro(oct-1-enyl)silane | 100 | side products** |
| B24 | MeSiHCl₂ | 1 | styrene | 1.2 | 0.3 | 80 (2) | 15 | methyldichloro(phenethyl)silane | 100 | - |
| B25 | MeSiHCl₂ | 1 | methyl undec-10-enoate | 1.2 | 0.3 | 100 (7) | 16 | methyl 11-(methyldichlorosilyl)undecenoate | 100 | side products** |
| B26 | MeSiHCl₂ | 1 | 11-bromoundec-1-ene | 1.2 | 0.3 | 100 (7) | 23 | (11-bromoundecyl)methyldichlorosilane | 100 | - |
| B27 | MeSiHCl₂ | 1 | 2,3-dimethylbutadiene | 0.5 | 0.3 | 120 (24) | 25 | methyldichloro(2,3-dimethylbut-3-en-1-yl) silane | 60 | see additional comment |
| B28 | MeSiBu₂H | 1 | 1-octyne | 1.2 | 0.3 | 100 (7) | 18 | methyldibutyl(oct-1-enyl)silane | 100 | side products** |
| B29 | MeSiBu₂H | 1 | styrene | 1.2 | 0.3 | 100 (7) | 14 | methyldibutyl(phenethyl)silane | 100 | - |
| B30 | MeSiBu₂H | 1 | methyl undec-10-enoate | 1.2 | 0.3 | 120 (24) | 21 | methyl 11-(methyldibutylsilyl)undecenoate | 38 | side products** |
| B31 | MeSiBu₂H | 1 | 11-bromoundec-1-ene | 1.2 | 0.3 | 100 (7) | 17 | (11-bromoundecyl)methyldbutylsilane | 61 | side products** |
| B32 | MeSiBu₂H | 1 | 2,3-dimethylbutadiene | 0.5 | 0.3 | 120 (24) | 17 | methyldibutyl(2,3-dimethylbut-3-en-1-yl) silane | 100 | see additional comment |

| | | | | | | | | | | |
|---|---|---|---|---|---|---|---|---|---|---|
| ^{*)} Experiments were performed in sealed NMR tubes. ^{**)} side products were not identified. | | | | | | | | | | |

### General procedure for the syntheses according to entries B18-B32/Table 8:

0.1 mL (1 eq) of the hydridosilane, the catalyst (8-25 mg), 0.3 mL THF, 0.2 mL C₆D₆ and 1.2 eq of the corresponding unsaturated hydrocarbon (in the case of 2,3-dimethylbutadiene 0.5 eq) were placed in an NMR tube. The tube was frozen (-196 °C) and sealed *in vacuo.* Heating of the samples to 80 °C (2 h) and, in case the hydridosilane was not completely consumed, to 100 °C (7 h) and 120 °C (24 h) gave the expected products. Product mixtures were analyzed by NMR spectroscopy and GC-MS after full conversion of the Si-H to the Si-C functionality, or, in case the alkene was fully consumed.

### Additional remarks for entries B22, B27 and B32/Table 8

In these three experiments double silyl-substituted products were detected by GC/MS and ²⁹Si-NMR spectroscopy. But they were formed only to a minor extend (5-12 mol%). According to NMR and GC-MS analysis, the molecular structures of products formed are shown below:

| | | | |
|---|---|---|---|
| **Entry B21:** | 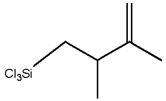 [M-Cl]⁺ = 181 | 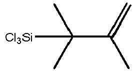 [M-Cl]⁺ = 181 | |
| | 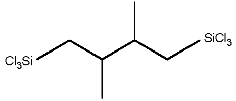 [M-Cl]⁺ = 314 | 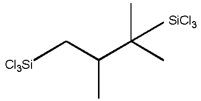 [M-Cl]⁺ = 314 | 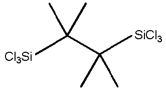 [M-Cl]⁺ = 314 |
| **Entry B26:** | 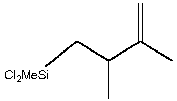 [M-CH₃]⁺ = 181 | 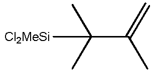 [M-CH₃]⁺ = 181 | |
| | 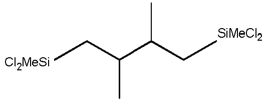 [M-Cl]⁺ = 275 | 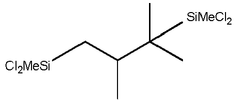 [M-Cl]⁺ = 275 | 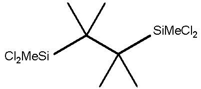 [M-Cl]⁺ = 275 |
| **Entry B31:** | 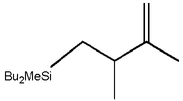 [M-CH₃]⁺ = 225 | 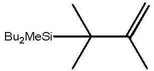 [M-CH₃]⁺ = 225 | |
| | 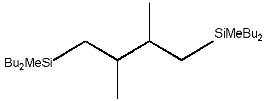 [M-H]⁺ = 397 | 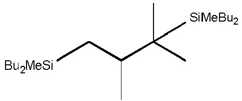 [M-H]⁺ = 397 | 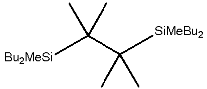 [M-H]⁺ = 397 |

### Step c): Synthesis of hydridosilanes by reduction of chlorosilanes

**Table 9: Synthesis of hydridosilanes by reduction of chlorosilanes with lithium hydride.**

| **entry** | **chlorosilane (mol)** | **LiH (mol)** | **THF (mL)** | **Temperature/Time (°C / h)** | **hydridosilane** | **yield (%)** |
|---|---|---|---|---|---|---|
| C1 | HexSiCl₃ (0.87) | 5.5 | 300 | 80 / 2 | HexSiH₃ | 67 |
| C2 | OctSiCl₃ (0.44) | 1.7 | 300 | 80 / 13 | OctSiH₃ | 87 |
| C3 | MeSiHeptCl₂ (0.014) | 0.05 | 10 | 100 / 1 | MeSiHeptH₂ | 67 |
| C4 | MeSiBuCl₂ (0.06) | 0.1 | 10 | 90/1 | MeSiBuH₂ | 100 |
| C5 | MeHexSiCl₂ (0.29) | 1.7 | 120 | 80 / 1.5 | MeSiHexH₂ | 100 |
| C6 | OctHexSiCl₂ (0.26) | 1.1 | 150 | 80/1 | OctHexSiH₂ | 81 |
| C7 | BuHexSiCl₂ (0.007) | 0.04 | 10 | 100 / 9 | BuHexSiH₂ | 100 |
| C8 | MeSiBu₂Cl (0.06) | 0.02 | 10 | 90/1 | MeSiBu₂H | 100 |
| C9 | MeSiHeptOctCl (0.005) | 0.06 | 10 | 100 / 9 | MeSiHeptOctH | 100 |
| C10 | BuSiHexOctCl (0.005) | 0.03 | 5 | 100 / 3 | BuSiHexOctH | 92 |
| C11 | MeHexSiHeptCl (0.2) | 0.6 | 70 | 70 / 15 | MeHexSiHeptH | 90 |
| C12 | Me₂SiHexCl (0.31) | 0.6 | 60 | 70/14 | Me₂SiHexH | 78 |
| C13 | OctHexSiPentCl (0.31) | 1.3 | 200 | 90/16 120/18 | OctHexSiPentH | 86 |

### General procedure for the syntheses according to entries C1-C13/Table 9

LiH, suspended in dry THF, was placed in a three necked flask that was equipped with a magnetic stirrer, reflux condenser and dropping funnel. The respective chlorosilane was added over the dropping funnel. After a short induction time of some minutes or started by heating the reaction mixture to 60-80 °C, the chlorosilane reduction started by LiCl precipitation. After hydridosilane formation was completed (controlled by ²⁹Si-NMR spectroscopy and GC/MS analysis), LiCl was separated by filtration and the respective hydridosilane was purified by fractional distillation.

### Entry C1/Table 9: Target reaction: HexSiCl₃ → HexSiH₃

LiH (54 g, 5.5 mol, 6.4 eq) was suspended in 300 mL of dry THF. Then HexSiCl₃ (192 g, 0.87 mmol, 1.0 eq) was added and the reaction mixture was heated to 80 °C for 2 h and stirred over night at r.t. GC-MS analysis of the reaction mixture proved 100 % conversion of all chlorine- against hydrido- substituents. The liquid phase was separated by filtration from LiCl and HexSiH₃ (67 g, 0.85 mol, 67 % yield), still dissolved in THF (46 g), was obtained after distillation (b.p.: 80-110 °C, δ²⁹Si = -60.0 ppm, R_{T} = 11.60 min).

### Entry C2/Table 9: Target reaction: OctSiCl₃ → OctSiH₃

LiH (13.8 g, 1.7 mol. 3.9 eq) was suspended in 300 mL of dry THF. Then OctSiCl₃ (110 g, 0,44 mol, 1.0 eq) was added and the reaction mixture was heated to 80 °C for 13 h and subsequently stirred over night at r.t. GC-MS analysis of the reaction mixture proved 100 % conversion of all chlorine- against hydrido-substituents. The liquid phase was separated by filtration from precipitated LiCl and OctSiH₃ was obtained by distillation in 55 g (0.38 mol, 87 % yield, b.p.: 162 °C, δ²⁹Si = -60.0 ppm, R_{T} = 16.04 min).

### Entry C3/Table 9: Target reaction: MeSiHeptCl₂ → MeSiHeptH₂

LiH (375 mg, 3.4 eq, 47.2 mmol) was suspended in 10 mL of dry THF. Subsequently, 3 mL (1.0 eq, 13.8 mmol) of MeSiHeptCl₂ were added at r.t. via a dropping funnel. The reaction mixture was heated to 100 °C for 1 h and stirred over night at r.t. GC-MS analysis proved 100 % conversion of the dichloro- into the dihydridosilane. After separation from LiCl by filtration, fractional distillation of the reaction mixture gave 1.31 g (9.1 mmol) of MeSiHeptH₂, yield 67 % (δ²⁹Si = -34.0 ppm, R_{T} = 15.16 min).

### Entry C4/Table 9: Target reaction: MeSiBuCl₂ → MeSiBuH₂

MeSiBuCl₂ (10 mL, 61 mmol, 1.0 eq) was added dropwise via a dropping funnel to a vigorously stirred suspension of LiH (1.21 g, 95 mmol, 2.5 eq) in 10 mL of dry THF. The reaction mixture was heated to reflux (90 °C, oil bath) for 1 h and GC-MS analysis proved full conversion of the chlorosilane into the hydridosilane MeSiBuH₂. After separation of precipitated LiCl from the reaction mixture by filtration, MeSiBuH₂ (6.2 g, 61 mmol, 100 % yield) was isolated still admixed with 10 mL of THF. (MeSiBuH₂: δ²⁹Si = -33.6 ppm, R_{T} = 6.10 min).

### Entry C5/Table 9: Target reaction: MeHexSiCl₂ → MeHexSiH₂

LiH (13.6 g, 1.7 mol, 6 eq) was suspended in 120 mL of dry THF. Then MeHexSiCl₂ (60 mL, 290 mmol) was added and the reaction mixture was heated to 80 °C for 1.5 h. NMR spectroscopic analyses verified full conversion of MeHexSiCl₂ into MeHexSiH₂. MeHexSiH₂ was separated together with THF from LiCl by distillation (37.8 g, 0.29 mol, 100 % yield, δ²⁹Si = -33.9 ppm, R_{T} = 14.36 min).

### Entry C6/Table 9: Target reaction: OctHexSiCl₂ → OctHexSiH₂

LiH (8.6 g, 1.1 mol. 4.2 eq) was suspended in 150 mL of dry THF. OctHexSiCl₂ (77 g, 0.26 mmol, 1.0 eq) was added, heated to 80 °C for 1 h, and stirred over night at r.t. GC-MS analysis of the reaction mixture proved 100 % conversion of all chlorine- against hydrido-substituents. The liquid phase was separated by filtration from LiCl and OctHexSiH₂ was isolated by distillation in 48 g (0.21 mol, 81 % yield, b.p.: 70 °C, 10⁻²mbar, δ²⁹Si = -28.8 ppm, R_{T} = 21.14 min).

### Entry C7/Table 9: Target reaction: BuSiHexCl₂ → BuSiHexH₂

LiH (320 mg, 40 mmol, 5.7 eq) was suspended in 10 mL of dry THF. Then BuSiHexCl₂ (1.70 g, 7 mmol, 1.0 eq) was added. The reaction mixture was degassed, heated to 100 °C for 9 h, and stirred over night at r.t. GC-MS analysis proved 100 % conversion of all chloro- to hydrido-substituents. BuSiHexH₂ (1.2 g, 7 mmol), dissolved in 10 mL of THF, was isolated by filtration (δ²⁹Si= -28.90 ppm, R_{T} = 17.32 min). This mixture was used without further purification for subsequent redistribution with BuSiHexCl₂.

### Entry C8/Table 9: Target reaction: MeSiBu₂Cl → MeSiBu₂H

MeSiBu₂Cl (4 mL, 21 mmol, 1.0 eq) was added dropwise via a dropping funnel to a vigorously stirred suspension of LiH (0.76 g, 95 mmol, 4.5 eq) in 10 mL of dry THF. The reaction mixture was heated to reflux (90 °C) for 1 h and GC-MS analysis proved full conversion of the chlorosilane into the hydridosilane MeSiBu₂H. After separation of the precipitated LiCl from the reaction mixture by filtration, MeSiBu₂H (δ²⁹Si = -10.1 ppm, R_{T} = 15.85 min) was obtained still dissolved in THF. The product solution was used without further purification.

### Entry C9/Table 9: Target reaction: MeSiHeptOctCl → MeSiHeptOctH

LiH (500 mg, 62.9 mmol, 11.8 eq) was suspended in 10 mL of dry THF and MeSiHeptOctCl (1.55 g, 5.3 mmol, 1.0 eq) was subsequently added. The reaction mixture was heated to 100 °C for 9 h and stirred over night at r.t. GC-MS analysis proved 100 % conversion of MeSiHeptOctCl into MeSiHeptOctH. This hydridosilane (δ²⁹Si = -10.0 ppm, R_{T} = 21.27 min) was separated from precipitated LiCl by filtration and used without further purification for subsequent hydrosilylation reactions with different alkenes.

### Entry C10/Table 9: Target reaction: BuSiHexOctCl → BuSiHexOctH

LiH (220 mg, 28.0 mmol, 5.8 eq) was suspended in 5 mL of dry THF. Subsequently, 2.1 g of a mixture comprising of BuSiHexOctCl (1.5 g, 4.8 mmol) and BuSiHexCl₂ (0.6 g, 2.4 mmol) was added. The reaction mixture was heated to 100 °C for 3 h and stirred over night at r.t. GC-MS analysis proved 100 % conversion of all chlorine- into hydrido- substituents. After condensation of volatile compounds in vacuo at r.t., the temperature was increased to 300 °C to obtain the high boiling fraction (1.3 g) which comprises small amounts of BuSiHexH₂ (8 %, 0.5 mmol, δ²⁹Si = -28.90 ppm, R_{T} = 17.32 min) and the desired product BuSiHexOctH (92 %, 4.2 mmol, δ²⁹Si = -6.80 ppm, R_{T} = 22.56 min), which was used without further purification for hydrosilylation reactions with different alkenes. The product yield was determined by integration of the signals in the ²⁹Si NMR spectrum of the product mixture.

### Entry C11/Table 9: Target reaction: MeHexSiHeptCl→ MeHexSiHeptH

LiH (5.1 g, 0.62 mol, 3.1 eq) was suspended in 70 mL of dry THF. MeHexSiHeptCl (53 g, 0.20 mol) was added dropwise to the vigorously stirred suspension at 70 °C. The reaction mixture was heated to 70 °C for 15 h and then the liquid phase was separated by filtration from LiCl. THF was distilled off and MeHexSiHeptH was isolated in 90 % yield (41.3 g, 0.18 mol, δ²⁹Si = -10.1 ppm, R_{T} = 20.74 min).

### Entry C12/Table 9: Target reaction: Me₂SiHexCl → Me₂SiHexH

LiH (5.0 g, 0.63 mol, 2.0 eq) was suspended in 60 mL of dry THF. Then Me₂SiHexCl (56 g, 0.31 mol, 1. eq) was added dropwise to the vigorously stirred solution at 70 °C. The reaction mixture was heated to 70 °C for 14 h, subsequently THF was distilled off and Me₂SiHexH was isolated under reduced pressure in 78% yield (35 g, 0.24 mol, δ²⁹Si = -13.4 ppm, R_{T} = 15.44 min).

### Entry C13/Table 9: Target reaction: OctHexSiPentCl → OctHexSiPentH

LiH (10.7 g, 1.3 mol. 4.6 eq) was suspended in 200 mL of dry THF. OctHexSiPentCl (102 g, 0.31 mmol, 1.0 eq) was added to the suspension, heated to 90 °C for 16 h and additionally at 120 ° for 18 h. GC-MS analysis of the reaction mixture proved 100 % conversion of all chlorine-against hydrido- substituents. The liquid phase was separated from LiCl by filtration and OctHexSiPentH was isolated by fractional distillation in 76 g (0.26 mol, 86 % yield, b.p.: 120 °C, 10⁻²mbar, δ²⁹Si = -6.7 ppm, R_{T} = 24.82 min).

### Step d): Synthesis of tetraorganosilanes by hydrosilylation reactions of trialkylhydridosilanes

**Table 10: Hydrosilylation reactions of various organohydridosilanes**

| **entry** | **silane compound** | **equiv.** | **alkene** | **equiv.** | **THF [mL]** | **T[°C] (t[h])** | **Cat.: [mg]** | **product** | **conversion [%]/ Isolated yield [%]** | **Conditions T[°C](t[h]), Conversion rate** |
|---|---|---|---|---|---|---|---|---|---|---|
| D1 | MeSiHeptOctH | 1 | 1-butene | 2 | 0.3 | 100 (10) | 10^{a)} | MeSiHeptOctBu | 100 / * | 80 (22), 50 % conv. |
| D2 | MeSiHeptOctH | 1 | 1-hexene | 2 | 0.3 | 100 (10) | 10^{a)} | MeSiHeptOctHex | 100 / * | 80 (22), 50 % conv. |
| D3 | MeSiHeptOctH | 1 | 1-heptene | 2 | 0.3 | 100 (10) | 10^{a)} | MeSiHept₂Oct | 100 / * | 80 (22), 50 % conv. |
| D4 | MeSiHeptOctH | 1 | 1-decene | 2 | 0.3 | 100 (10) | 10^{a)} | MeSiHeptOctDec | 100 / * | 80 (22), 50 % conv. |
| D5 | MeSiHeptOctH | 1 | 1-hexadecene | 2 | 0.3 | 100 (10) | 10^{a)} | MeSiHeptOctHexdec | 100 / * | 80 (22), 60 % conv. |
| D6 | BuSiHexOctH | 1 | 1-butene | 2 | 0.3 | 140 (10) | 10^{a)} | Bu₂SiHexOct | 100 / * | 100 (32), 31% conv. |
| | | | | | | | | | | 120 (31), 80 conv. |
| D7 | BuSiHexOctH | 1 | 1-hexene | 2 | 0.3 | 140 (10) | 10^{a)} | BuSiHex₂Oct | 80/* | 100 (32), 29% conv. |
| | | | | | | | | | | 120 (31), 32% conv. |
| D8 | BuSiHexOctH | 1 | 1-heptene | 2 | 0.3 | 140 (10) | 10^{a)} | BuSiHexHeptOct | 80 / * | 100 (32), 54% conv. |
| | | | | | | | | | | 120 (31), 77% conv. |
| D9 | BuSiHexOctH | 1 | 1-decene | 2 | 0.3 | 140 (10) | 10^{a)} | BuSiHexOctDec | 50/* | 100 (32), 11% conv. |
| | | | | | | | | | | 120 (31), 47% conv. |
| D10 | BuSiHexOctH | 1 | 1-hexadecene | 2 | 0.3 | 140 (10) | 10^{a)} | BuSiHexOctHexdec | 44 / * | 100 (32), 7% conv. |
| | | | | | | | | | | 120 (31), 40% conv. |
| D11 | MeHexSiHeptH | 1 | 1-pentene | 3.6 | 5^{d)} | 140 (142) | 40^{a)} | MeHexSiHeptPent | 100 / ** | - |
| D12 | MeHexSiHeptH | 1 | 1-nonene | 1.2 | 5^{d)} | 140 (64) | 80^{a)} | MeHexSiHeptNon | 60 / ** | - |
| D13 | Me₂SiHexH | 1 | 1-pentene | 2.5 | - | 140 (70) | 8^{a)} | Me₂SiHexPent | 100 / ** | - |
| D14 | Me₂SiHexH | 1 | 1-heptene | 2.5 | 5^{d)} | 140 (70) | 9^{a)} | Me₂SiHexHept | 100 / ** | - |
| D15 | Me₂SiHexH | 1 | 1-octene | 2.5 | - | 140 (70) | 10^{a)} | Me₂SiHexOct | 100 / ** | - |
| D16 | OctHexSiPentH | 1 | 1-heptene | 3.5 | 20^{e)} | 100 (60) | 200^{b)} | OctHexSiPentHept | 90 / 37 | - |
| | | | | | | 150 (60)^{e)} | 0.5 mL^{c)} | | | |
| D17 | OctHexSiPentH | 1 | 1-octyne | 1.5 | 10^{e)} | 100 (60) | 200^{b)} | OctHexSiPentOctenyl^{b)} | 100 / 98 | - |
| D18 | OctHexSiPentH | 1 | 1-decene | 3.5 | 10^{e)} | 100 (60) | 200^{b)} | OctHexSiPentDec | 66/ 37 | - |
| | | | | | | 150 (60)^{e)} | 0.5 mL^{c)} | | | |
| D19 | OctHexSiPentH | 1 | 1-hexadecene | 3.5 | 10^{e)} | 100 (60) | 200^{b)} | OctHexSiPentHexdec | 33 / 41 | - |
| | | | | | | 150 (60)^{e)} | 0.5 mL^{c)} | | | |
| D20 | MeSiBu₂H | 1 | 1-butene | 1.5 | 10 | 140 (65) | 35^{a)} | MeSiBu₃ | 100 / 75 | - |
| D21 | MeSiBu₂H | 1 | 1-heptene | 2.6 | 3 | 100 (1) | 50^{a)} | MeSiBu₂Hept | 100 / 96 | - |

| | | | | | | | | | | |
|---|---|---|---|---|---|---|---|---|---|---|
| ^{a)} Y1EX2 (immobilized Pt catalyst) -; ^{b)} B770011 (Pt on silica type 210); ^{c)} Karstedt-catalyst; ^{d)} *n*Bu₂O as solvent; ^{e)} diglyme as solvent; *experiments performed in sealed NMR tubes; ** no further purification. | | | | | | | | | | |

### General procedure for the syntheses according to entries D1-D10/Table 10:

0.1 mL of the hydridosilane-solution (according to step c) entries C8 and C9), the catalyst (8-12 mg), 0.3 mL THF, 0.2 mL C₆D₆ and 0.2 mL of the corresponding alkenes were placed in an NMR tube. The reaction mixture was frozen (-196 °C) and the NMR tube was sealed under vacuo. Heating periods are given separately for each alkene used for hydrosilylation. Product mixtures were analyzed by NMR spectroscopy and GC-MS after full conversion of the Si-H into the Si-C moiety, or, in case the alkene was fully consumed. According to the literature, 1-alkenes might be thermally isomerized and/or hydrogenated (H₂ from dehydrogenative silylation) including transition metal catalysis (e.g. Pt) in the course of hydrosilylation reactions. *[*J. Organomet. Chem. 2011, 696, 3687-3692; Chem. Cat. Chem. 2019, 11, 2843-2854]. This might be the reason for reduced conversion rates in the reactions listed in Table 10. Tetraalyksilanes R¹R²SiR³R⁴ (R³ = R⁴) formed from side reactions result from R¹R²SiH₂ impurities (8 mol%) in the corresponding hydridosilane solutions (entries D6-D10). This double hydrosilylation is only detected for long chain substituents R¹ and R² (R>C₄), but not for R=Me, Et (see J. Organomet. Chem. 1978, 148, 23-27).

### Entry D1/Table 10: Target reaction: MeSiHeptOctH + 1-butene → MeSiHeptOctBu

Reaction time: 80 °C (22h, conversion: 50%); 100 °C (10 h, full conversion of Si-H) (δ²⁹Si = 2.54 ppm, R_{T} = 23.87 min).

### Entry D2/Table 10: Target reaction: MeSiHeptOctH + 1-hexene → MeSiHexHeptOct

Reaction time: 80 °C (22h, conversion: 50%); 100 °C (10 h, full conversion of Si-H) (δ²⁹Si = 2.54 ppm, R_{T} = 26.40 min).

### Entry D3/Table 10: Target reaction: MeSiHeptOctH + 1-heptene → MeSiHept₂Oct

Reaction time: 80 °C (22h, conversion: 50%); 100 °C (10 h, full conversion of Si-H) (δ²⁹Si = 2.54 ppm, R_{T} = 28.20 min).

### Entry D4/Table 10: Target reaction: MeSiHeptOctH + 1-decene → MeSiHeptOctDec

Reaction time: 80 °C (22h, conversion: 50%); 100 °C (10 h, full conversion of Si-H) (δ²⁹Si = 2.56 ppm, R_{T} = 36.96 min).

### Entry D5/Table 10: Target reaction: MeSiHeptOctH + 1-hexadecene → MeSiHeptOctHexdec

Reaction time: 80 °C (22h, conversion: 60%); 100 °C (10 h, full conversion of Si-H) (δ²⁹Si = 2.56 ppm, R_{T} = 91.15 min).

### Entry D6/Table 10: Target reaction: BuSiHexOctH + 1-butene → Bu₂SiHexOct

Reaction time: 80 °C (16h, conversion: 16%); 100 °C (32 h, conversion: 31%); 120 °C (31.5 h, conversion: 80%); 140 °C (10 h, full conversion of Si-H, 100%); (δ²⁹Si = 2.71 ppm, R_{T} = 25.35 min). In addition to the targeted product formation, Bu₃SiHex (8 mol%) was formed and identified in the GC (R_{T} = 21.48) of the sample, indicating double hydrosilylation of BuSiHexH₂.

### Entry D7/Table 10: Target reaction: BuSiHexOctH + 1-hexene → BuSiHex₂Oct

Reaction time: 80 °C (16h, conversion: 12%); 100 °C (32 h, conversion: 29%); 120 °C (31.5 h, conversion: 75%); 140 °C (10 h, conversion: 80%, no alkene remained); (δ²⁹Si = 2.73 ppm, R_{T} = 28.40 min). Additionally, BuSiHex₃ (8 mol%) was detected at R_{T} = 25.05 in the GC of the sample, indicating double hydrosilylation of BuSiHexH₂.

### Entry D8/Table 10: Target reaction: BuSiHexOctH + 1-heptene → BuSiHexOctHept

Reaction time: 80 °C (16h, conversion 14%); 100 °C (32 h, conversion: 54%); 120 °C (31.5 h, conversion: 77%); 140 °C (10 h, conversion: 80%, no alkene remained); (δ²⁹Si = 2.74 ppm, R_{T} = 30.65 min). Additionally, BuSiHexHept₂ (8 mol%) was detected at R_{T} = 28.30 in the GC of the sample, indicating double hydrosilylation of BuSiHexH₂.

### Entry D9/Table 10: Target reaction: BuSiHexOctH + 1-decene → BuSiHeptOctDec

Reaction time: 80 °C (16h, conversion: 3%); 100 °C (32 h, conversion: 11%); 120 °C (31.5 h, conversion: 47%); 140 °C (10 h, conversion: 50%, no alkene remained); (δ²⁹Si = 2.75 ppm, R_{T} = 41.64 min). Moreover, BuSiHexDec₂ (8 mol%) was detected at R_{T} = 54.18 in the GC of the sample, indicating double hydrosilylation of BuSiHexH₂.

### Entry D10/Table 10: Target reaction: BuSiHexOctH + 1-hexadecene → BuSiHeptOctHexdec

Reaction time: 80 °C (16h, conversion: 2%); 100 °C (32 h, conversion: 7%); 120 °C (31.5 h, conversion: 40%); 140 °C (10 h, conversion: 44%, no alkene remained); (δ²⁹Si = 2.75 ppm, R_{T} = 109.35 min).

### Entry D11/Table 10: Target reaction: MeHexSiHeptH + 1-pentene → MeHexSiHeptPent

The Pt-catalyst (40 mg) was placed in an ampule, suspended with 33 mL (0.3 mol, 3.6 eq) of 1-pentene, 17.7 g (0.08 mol, 1.0 eq) of MeHexSiHeptH and 5 mL of dry *n*Bu₂O. The mixture was frozen with liquid nitrogen and the ampule was sealed *in vacuo.* The reaction mixture was heated to 140 °C for 142 h. Then, the ampule was opened, and the NMR-analysis verified full conversion of the hydridosilane to MeHexSiHeptPent.

### Entry D12/Table 10: Target reaction: MeHexSiHeptH + 1-nonene → MeHexSiHeptNon

The Pt-catalyst (80 mg) was placed in an ampule and suspended with 3 g (0.02 mol, 1.2 eq) of 1-nonene, 4.4 g (0.02 mol, 1.0 eq) of MeHexSiHeptH and 5 mL of dry *n*Bu₂O. The mixture was frozen with liquid nitrogen and the ampule was sealed *in vacuo.* The reaction mixture was heated to 140 °C for 64 h. Subsequently, the ampule was opened and NMR-analysis indicated that the desired product was formed in 60 % yield (0.012 mol). Notably, no alkene remained in the reaction mixture.

### General procedure for entries D13-D15/Table 10: Target reactions:

Me₂SiHexH + 1-pentene → Me₂SiHexPent, Me₂SiHexH + 1-heptene → Me₂SiHexHept,

Me₂SiHexH + 1-octene → Me₂SiHexOct

The Pt-catalyst (8-10 mg) was placed in an ampule and suspended with Me₂SiHexH (1.0 eq) and the respective alkenes (2.5 eq). The mixtures were frozen with liquid nitrogen and the ampules were sealed *in vacuo.* The reaction mixtures were heated to 140 °C for 70 h. Subsequently the ampules were opened, and the products were isolated by distillation of the volatile components *in vacuo.*

### Entry D16/Table 10: Target reaction: OctHexSiPentH + 1-heptene → OctHexSiPentHept

OctHexSiPentH (8.2 g, 0.027 mol, 1.0 eq), 20 mL of dry diglyme and 7.8 mL (0.068 mol, 2.5 eq) of 1-heptene were added to 200 mg (2.5 wt%) of the catalyst (B770011) in a *Schlenk-*flask. After heating to reflux (100 °C) for 60 h, GC-MS analysis of the reaction mixture proved the formation of the desired product in 45 %. For full conversion of the hydridosilane into the corresponding tetraalkylsilane, the reaction mixture was transferred into an ampule and admixed with an additional equivalent of 1-heptene (0.027 mol) and 0.5 mL of the Karstedt-catalyst. The reaction mixture was cooled to -196 °C, the ampule was sealed under vacuo and placed in a drying oven at 150 °C for 60 h. Then the ampule was opened, all volatiles were distilled off and OctHexSiPentHept was isolated by fractional distillation in vacuo in 4.0 g (0.01 mol, 37 % yield, .b.p.: 140 °C (10⁻² mbar), δ²⁹Si = 2.8 ppm, R_{T} = 36.53 min).

### Entry D17/Table 10: Target reaction: OctHexSiPentH + 1-octyne → OctHexSiPentOctenyl

OctHexSiPentH (8.2 g, 0.027 mol, 1.0 eq), 20 mL of dry diglyme and 6.1 mL (0.041 mol, 1.5 eq) of 1-octyne were added to 200 mg (2.5 wt%) of the catalyst (B770011) in a *Schlenk-*flask. After heating to reflux (100 °C) for 60 h, GC-MS analysis of the reaction mixture proved that the hydridosilane was consumed quantitatively. Volatile components were condensed off and the residue was distilled under vacuo. OctHexSiPentOctenyl (10.8 g) was isolated as a mixture consisting of 1-alkene- (9.2 g, 89 %) and 2-alkene- (1.6 g, 11 %) substituted silanes; the molar ratio was determind by product relevant signals in the corresponding GC and ²⁹Si-NMR spectrum of the sample.
OctHexSiPent(1-Octenyl): δ²⁹Si = -2.3 ppm, R_{T} = 38.41 min.
OctHexSiPent(2-Octenyl): δ²⁹Si = -2.3 ppm, R_{T} = 39.31 min.

### Entry D18/Table 10: Target reaction: OctHexSiPentH+ 1-decene → OctHexSiPentDec

OctHexSiPentH (8.0 g, 0.027 mol, 1.0 eq), 20 mL of dry diglyme and 12.7 mL (0.068 mol, 2.5 eq) of 1-decene were added to 200 mg (2.5 wt%) of the catalyst (B770011) in a *Schlenk-*flask. After heating to reflux (100 °C) for 60 h, ²⁹Si-NMR spectroscopic analysis of the reaction mixture indicated that 66 % of the desired product were formed. For full conversion of the hydridosilane, the reaction mixture was transferred into an ampule and admixed with an additional equivalent of 1-decene (5.1 mL, 0.027 mol) and 0.5 mL of the Karstedt-catalyst. The mixture was cooled to -196 °C, the ampule was sealed under vacuo and placed in a drying oven at 150 °C for 60 h. Then, the ampule was opened, all volatiles were condensed off and OctHexSiPentDec was isolated by fractional distillation in vacuo in 4.8 g (0.01 mol, 40 % yield, b.p.: 165 °C (10⁻² mbar), δ²⁹Si = 2.8 ppm, R_{T} = 53.01 min).

### Entry D19/Table 10: Target reaction: OctHexSiPentH+ 1-hexdecene → OctHexSiPentHexdec

OctHexSiPentH (8.0 g, 0.027 mol, 1.0 eq), 20 mL of dry diglyme and 9.4 mL (0.068 mol, 2.5 eq) of 1-hexadecene were added to 200 mg (2.5 wt%) of the catalyst (B770011) in a *Schlenk-flask.* After heating to reflux (100 °C) for 60 h, ²⁹Si-NMR spectroscopic analysis of the reaction mixture proved the formation of the desired product in 66 %. For full conversion of the hydridosilane, the reaction mixture was transferred into an ampule and admixed with an additional equivalent of 1-heptene (3.8 mL, 0.027 mol) and 0.5 mL of the Karstedt-catalyst. The reaction mixture was cooled to -196 °C, the ampule was sealed under vacuo and placed in a drying oven at 150 °C for 60 h. Then, the ampule was opened, all volatile compounds were condensed off and the residue was purified by filtration over a 2 cm column filled with silica-gel and hexane as solvent. After removal of the solvent in vacuo OctHexSiPentHexdec (where Hexdec is C₁₆H₃₁) was isolated in 5.7 g (0.011 mol, 41 % yield, δ²⁹Si = 2.8 ppm, R_{T} = 160.98 min).

### Entry D20/Table 8: Target reaction: MeSiBu₂H + 1-butene → MeSiBu₃

MeSiBu₂H (7.5 mL, 46 mmol, 1 eq) was placed in an ampule equipped with an NMR tube. The catalyst (Y1EX2) was added and 3.78 g (67 mmol, 1.5 eq) of but-1-ene were condensed at - 196 °C onto the reaction mixture. The ampule was evacuated and sealed under vacuo and placed in a drying cabinet for 65 h at 140 °C. NMR-analysis indicated full conversion (100 %) to the desired product MeSiBu₃. MeSiBu₃ was isolated by distillation in 75 % yield (34 mmol, 7.34 g, b.p.: 76 (34 mbar), δ²⁹Si = 2.6 ppm, R_{T} = 18.65 min).

### Entry D21/Table 10: Target reaction: MeSiBu₂H + 1-heptene → MeSiBu₂Hept

50 mg of the catalyst (Y1EX2) were placed in a *Schlenk-flask* and suspended with 3 mL of dry THF, 0.5 mL (1.0 eq, 2.4 mmol) of MeSiBu₂H and 0.4 mL (1.1 eq, 2.6 mmol) of hept-1-ene. The reaction mixture was stirred at r.t. for 1 h and no conversion to the tetraalkylsilane was detected by GC-MS. Heating of the reaction mixture to 100 °C (oil-bath temperature) for 1 h gave 96 % conversion into MeSiBu₂Hept as identified by GC-MS and ²⁹Si-NMR spectroscopy (MeSiBu₂Hept: δ²⁹Si = 2.6 ppm, R_{T} = 20.65 min).

### Selected examples: Stepwise synthesis of tetraorganosilanes R¹R²SiR³R⁴ with four different organo substituents (R¹≠R²≠R³≠R⁴)

### 1) Synthesis of MeHexSiHeptPent and MeHexSiHeptNon starting from MeSiHCl₂

### a) MeSiHCl₂ +1-hexene → MeHexSiCl₂

The Pt-catalyst (Y1EX2, 260 mg) was placed in an ampule and suspended with 70 mL dry THF and 63 mL (0.5 mol, 1.1 eq) of 1-hexene. The mixture was frozen with liquid nitrogen and subsequently MeSiHCl₂ (0.45 mol, 1.0 eq) was added, the ampule was evacuated and sealed. After the reaction mixture was heated to 100 °C for 62 h, the ampule was opened and the product MeHexSiCl₂ was isolated in 94% yield, contaminated by small amounts of THF. Distillation under reduced pressure gave MeSiHexCl₂ (84.26 g, 0.423 mol) and 2.80 g THF (0.039 mol); molar ratio: 92/8; (b.p.: 145 °C (stationary vacuum), R_{T} = 18.36 min). The mixture was used without further purification for subsequent hydrogenation.

¹H-NMR (500.2 MHz, C₆D₆): δ = 1.39-1.29 (m, 2H, Si-CH₂-), 1.27-1.08 (m, 6H, -CH₂-), 0.89-0.78, (m, 5H, -CH₂-CH₃), 0.50-0.43 (m, 3H, Si-CH₃) ppm.

²⁹Si-NMR (99.4 MHz, C₆D₆): δ = 32.6 ppm.

¹³C-NMR (125.8 MHz, C₆D₆): δ = 32.4, 31.7, 22.9, 22.8, 21.8, 14.35, 5.1 ppm.

### b) MeHexSiCl₂ + LiH → MeHexSiH₂

LiH (13.6 g, 1.7 mol, 6 eq) was suspended in 120 mL of dry THF. Then MeHexSiCl₂ (60 mL, 290 mmol) was added and the reaction mixture was heated to 80 °C for 1.5 h. NMR spectroscopic analyses verified full conversion of MeHexSiCl₂ into MeHexSiH₂. MeHexSiH₂ was separated together with THF from LiCl by distillation (37.8 g, 0.29 mol, 100 % yield, R_{T} = 14.36 min). The mixture comprising THF and MeSiHexH₂ was used without further purification for the subsequent chlorination reaction.

¹H-NMR (500.2 MHz, C₆D₆): δ = 3.83-3.78 (m, 2H, Si-H), 1.39-1.12 (m, 8H, -CH₂-), 0.90-0.80, (m, 3H, -CH₃), 0.04-0.00 (m, 3H, Si-CH₃) ppm.

²⁹Si-NMR (99.4 MHz, C₆D₆): δ = -33.9 ppm.

¹³C-NMR (125.8 MHz, C₆D₆): δ = 32.9, 31.9, 25.5, 23.0, 14.2, 10.8, - 8.7 ppm.

### c) MeHexSiH₂ + SiCl₄→ MeHexSiHCl + HSiCl₃

MeHexSiH₂ (0.29 mol, 1.0 eq), SiCl₄ (63 mL, 0.55 mol, 1.9 eq) and *n*-Bu₃N (1 mL, 1 mol%) were reacted in a *Schlenk-flask* at 55 °C (9.5 h) and at r.t. (32.5 h). After distillation, the desired product MeHexSiHCl was isolated in 81 % yield (38.5 g, 0.234 mol, admixed with 2.6 g THF, as calculated from ¹H-NMR spectroscopy). The mixture was used without further purification for subsequent hydrosilylation reaction.

¹H-NMR (500.2 MHz, C₆D₆): δ = 4.81-4.76 (m, 1H, Si-H), 1.36-1.27 (m, 2H, -CH₂-), 1.26-1.12 (m, 6H,-CH₂-), 0.91-0.80 (t, 3H, -CH₃), 0.71-0.64 (m, 2H, -CH₂-), 0.27-0.22 (m, 3H, Si-CH₃) ppm.

²⁹Si-NMR (99.4 MHz, C₆D₆): δ = 12.9 (d, ¹*J =* 219.8 Hz) ppm.

¹³C-NMR (125.8 MHz, C₆D₆): δ = 32.7, 31.9, 23.3, 23.0, 17.3, 14.4, - 0.4 ppm.

### d) MeHexSiHCl + 1-heptene → MeHexSiHeptCl

The Pt-catalyst (Y1EX2, 100 mg) was suspended in 40 mL (0.28 mol, 1.2 eq) of 1-heptene and 41 g (0.23 mol, 1.0 eq) of MeHexSiHCl. The reaction mixture was heated to 100 °C for 19 h, the volatile compounds were condensed off *in vacuo* and the desired product was obtained in 59.3 g (0.22 mol, 97 % yield, R_{T} = 22.49 min). The mixture was used without further purification for subsequent hydrogenation reaction.

¹H-NMR (500.2 MHz, C₆D₆): δ = 1.41-1.31 (m, 5H), 1.31-1.17 (m, 14H), 0.91-0.86 (m, 5H), 0.76-0.63 (m, 4H), 0.25 (s, 3H) ppm.

²⁹Si-NMR (99.4 MHz, C₆D₆): δ = 31.6 (s) ppm.

¹³C-NMR (125.8 MHz, C₆D₆): δ = 33.5, 33.2, 32.2, 31.9, 29.4, 23.5-23.3, 23.1, 23.0, 18.0, 14.4, 0.0 ppm.

### e) MeHexSiHeptCl + LiH → MeHexSiHeptH

LiH (5.1 g, 0.62 mol, 3.1 eq) was suspended in 70 mL of dry THF. MeHexSiHeptCl (53 g, 0.20 mol) was added dropwise to the vigorously stirred suspension at 70 °C. The reaction mixture was heated to 70 °C for 15 h and then the liquid phase was separated by filtration from LiCl. THF was distilled off and MeHexSiHeptH was isolated in 90 % yield (41.3 g, 0.18 mol, R_{T} = 20.74 min).

¹H-NMR (500.2 MHz, C₆D₆): δ = 3.98 (oct, 1H, Si-H), 1.45-1.18 (m, 18H, -CH₂-), 0.95-0.84 (m, 6H, -CH₂-), 0.63-0.53 (m, 4H, -CH₂-), 0.05 (d, 3H, Si-CH₃) ppm.

²⁹Si-NMR (99.4 MHz, C₆D₆): δ = - 10,1 (d, ¹*J =* 179,6 Hz) ppm.

¹³C-NMR (125.8 MHz, C₆D₆): δ = 33.7, 33.4, 32.2, 32.0, 29.5, 25.0, 24.9, 23.1, 23.0, 14.3, 13.1, -6.1 ppm.

### f) MeHexSiHeptH + 1-pentene → MeHexSiHeptPent

The Pt-catalyst (Y1EX2, 40 mg) was placed in an ampule, suspended with 33 mL (0.3 mol, 3.6 eq) of 1-pentene, 17.7 g (0.08 mol, 1.0 eq) and 5 mL of dry *n*Bu₂O. The mixture was frozen with liquid nitrogen and the ampule was sealed *in vacuo.* The reaction mixture was heated to 140 °C for 142 h. Then, the ampule was opened, and the NMR-analysis verified full conversion of the hydridosilane to MeHexSiHeptPent.

¹H-NMR (500.2 MHz, C₆D₆): No assignment of the ¹H-NMR data due to signal overlap.

²⁹Si-NMR (99.4 MHz, C₆D₆): δ = 2.6 (s) ppm.

¹³C-NMR (125.8 MHz, C₆D₆): δ = 36.6, 34.4, 34.1, 32.6, 32.5, 29.6, 24.5, 24.2, 23.3, 23.2, 22.9, 14.4, 14.3, 14.3, 14.2, - 4.9 ppm.

### g) MeHexSiHeptH + 1-nonene → MeHexSiHeptNon

The Pt-catalyst (Y1EX2, 80 mg) was placed in an ampule and suspended with 3 g (0.02 mol, 1.2 eq) of 1-nonene, 4.4 g (0.02 mol, 1.0 eq) of MeHexSiHeptH and 5 mL of dry *n*Bu₂O. The mixture was frozen with liquid nitrogen and the ampule was sealed *in vacuo.* The reaction mixture was heated to 140 °C for 64 h. Subsequently, the ampule was opened, and NMR-analysis indicated that the desired product was formed in 60 % yield (0.012 mol). Notably, no alkene remained in the reaction mixture. The silahydrocarbon MeHexSiHeptNon (or (CH₃)(C₆H₁₁)Si(C₇H₁₃)(C₉H₁₇) was obtained and characterized as follows:
¹H-NMR (500.2 MHz, C₆D₆): No assignment of the ¹H-NMR data due to signal overlap.
²⁹Si-NMR (99.4 MHz, C₆D₆): δ = 2.6 (s) ppm.
¹³C-NMR (125.8 MHz, C₆D₆): No assignment of the ¹³C-NMR data due to signal overlap.

### 2) Synthesis of the silahydrocarbons OctHexSiPentHept, OctHexSiPentDec and of OctHexSiPentHexadec starting from HSiCl₃

### a) HSiCl₃ + 1-octene → OctSiCl₃

HSiCl₃ (50 mL, 0.49 mol), 100 ml of dry THF and 101 mL (0.64 mol, 1.3 eq) of 1-octene were added to 50 mg of the catalyst (B770011) in a *Schlenk* flask. After heating to reflux (85 °C) for 14 h, GC-MS analysis proved full conversion of HSiCl₃ into OctSiCl₃. THF and the alkene were separated via condensation *in vacuo* and the product was isolated by distillation *in vacuo* in 109.7 g (0.44 mol, 90 % yield. (b.p.:75°C/10⁻² mbar), R_{T} = 21.03 min).

¹H-NMR: (500.2 MHz, C₆D₆): δ = 1.37-1.34 (m, 2H, Si-CH₂-), 1.28-1.02 (m, 12H, -CH₂), 0.90-0.86 (m, 3H, -CH₃) ppm.

²⁹Si-NMR: (99.4 MHz, C₆D₆): δ = 13.0 ppm.

¹³C-NMR: (125.8 MHz, C₆D₆): δ = 32.3, 32.2, 29.5, 29.4, 24.5, 23.1, 22.6 ppm.

### b) OctSiCl₃ + LiH → OctSiH₃

LiH (13.8 g, 1.7 mol. 3.9 eq) was suspended in 300 mL of dry THF. Then OctSiCl₃ (110 g, 0,44 mol, 1.0 eq) was added and the reaction mixture was heated to 80 °C for 13 h and subsequently stirred over night at r.t. GC-MS analysis of the reaction mixture proved 100 % conversion of all chlorine- against hydrido- substituents. The liquid phase was separated by filtration from precipitated LiCl and OctSiH₃ was obtained by distillation in 55 g (0,38 mol, 87 % yield, b.p.: 162 °C, R_{T} = 16.04 min).

¹H-NMR: (500.2 MHz, C₆D₆): δ = 3.79-3.38 (m, 3H, Si-H), 1.35-1.22 (m, 12H, -CH₂-), 0.88 (t, 3H, -CH₃, ³J = 7.0 Hz), 0.62-0.56 (m, 2H, Si-CH₂-) ppm.

²⁹Si-NMR: (99.4 MHz, C₆D₆): δ = -60.0 (q, ¹*J =* 192 Hz) ppm.

¹³C-NMR: (125.8 MHz, C₆D₆): δ = 33.1, 32.5, 29.8, 26.9, 23.2, 14.4, 6.3 ppm.

### c) OctSiH₃ + SiCl₄ → OctSiHCl₂ + HSiCl₃

OctSiH₃(74 mL, 0.41 mol), *n*-Bu₄NCl (4 mmol, 1 mol%) and SiCl₄ (130 mL, 1.1 mol, 3.0 equiv.) were reacted in a *Schlenk-flask* at 60 °C for 3 h. GC-MS analysis proved that OctSiH₃ was stepwise converted to give OctSiHCl₂ (25 %). For full conversion of the OctSiH₂Cl to yield OctSiHCl₂, the reaction mixture was heated to 90 °C for 64 h. After separation of the low boiling compounds HSiCl₃, SiCl₄ and THF by distillation, OctSiHCl₂, contaminated with OctSiCl₃, was isolated in 82.4 g (81.4 g of OctSiHCl₂, 0.38 mol, 93 % yield, contaminated with 1.0 g of OctSiCl₃, 4.0 mmol). This mixture was used without further purification for the subsequent hydrosilylation reaction.

¹H-NMR: (500.2 MHz, C₆D₆): δ = 5.3 (t, 1H, Si-H, ¹*J =* 2.0 Hz), 1.4-1.1 (m, 12H, -CH₂-), 0.89 (t, 3H, -CH₃, ³*J* = 6.2 Hz) 0.86-0.82 (m, 2H, Si-CH₂-) ppm.

²⁹Si-NMR: (99.4 MHz, C₆D₆): δ = 11.3 (d, ¹*J =* 276.3 Hz) ppm.

¹³C-NMR: (125.8 MHz, C₆D₆): δ = 32.5, 32.3, 29.6, 29.5, 29.4, 24.5, 23.1, 22.6, 22.1, 20.5, 14.4 ppm.

### d) OctSiHCl₂ + 1-hexene → OctHexSiCl₂

OctSiHCl₂ (50 mL, 0.49 mol, admixed with OctSiCl₃), 50 ml of dry THF and 58 mL (0.46 mol, 1.2 eq) of 1-hexene were added to 50 mg of the catalyst (B770011) in a *Schlenk-flask.* After heating to reflux (100 °C) for 20 h, GC-MS analysis of the reaction mixture proved conversion of OctSiHCl₂ into OctHexSiCl₂ in 86 %. For full conversion to the desired product, additional 1-hexene (10 mL, 80 mmol, 0.2 eq) and 25 mg of the catalyst (B770011) were added and the reaction mixture was heated to 100 °C for 2 h. THF and the alkene were separated via condensation *in vacuo* and the product was isolated by fractional distillation *in vacuo* in 77.0 g (0.26 mol, 68 % yield, R_{T} = 24.3 min).

¹H-NMR: (500.2 MHz, C₆D₆): δ = 1.44-1.37 (m, 4H, Si-CH₂-), 1.29-1.11 (m, 16H, -CH₂-) 0.91-0.85 (m, 10H,-CH₂-CH₃) ppm.

²⁹Si-NMR: (99.4 MHz, C₆D₆): δ = 33.2 ppm.

¹³C-NMR: (125.8 MHz, C₆D₆): δ = 32.9, 32.6, 32.4, 31.7, 29.7, 29.6, 23.2, 22.9, 22.8, 20.7, 14.4, 14.3 ppm.

### e) OctHexSiCl₂ + LiH → OctHexSiH₂

LiH (8.6 g, 1.1 mol. 4.2 eq) was suspended in 150 mL of dry THF. OctHexSiCl₂ (77 g, 0.26 mmol, 1.0 eq) was added, heated to 80 °C for 1 h, and stirred over night at r.t. GC-MS analysis of the reaction mixture proved 100 % conversion of all chlorine- against hydrido-substituents. The liquid phase was separated by filtration from LiCl and OctHexSiH₂ was isolated by distillation in 48 g (0.21 mol, 81 % yield, b.p.: 70 °C, 10⁻²mbar, R_{T} = 21.14 min).

¹H-NMR (500.2 MHz, C₆D₆): δ = 3.87-3.84 (p, 2H, Si-H, ²J=3.7 Hz), 1.35-1.20 (m, 20H, -CH₂-), 0.89 (dt, 6H, -CH₃, ³*J*=7.15 Hz), 0.67-0.61 (m, 4H, -CH₂-CH₃) ppm.

²⁹Si-NMR: (99.4 MHz, C₆D₆): δ = -28.8 (t, ¹J = 184 Hz) ppm.

¹³C-NMR: (125.8 MHz, C₆D₆): δ = 33.5, 33.2, 32.5, 32.1, 29.9, 29.8, 26.1, 26.0, 23.2, 23.1, 14.4, 9.7 ppm.

### f) OctHexSiH₂ + SiCl₄ → OctHexSiHCl + HSiCl₃

OctHexSiH₂ (79 g, 0.34 mol, 1.0 eq), *n*-Bu₃N (1 mL, 1 mol-%) and SiCl₄ (190 mL, 1.6 mol, 4.8 eq) were reacted in a *Schlenk-flask* at 100 °C for 40 h. A mixture consisting of HSiCl₃ and SiCl₄ (50 mL) was separated from the reaction mixture by distillation. The remaining residue was further reacted at 100 °C for 16 h. GC-MS-analysis of the reaction mixture proved OctHexSiH₂ conversion into OctHexSiHCl in 94 %. After separation of the low boiling compounds HSiCl₃ and SiCl₄ by distillation and fractional distillation, OctHexSiHCl was isolated in 86 g (0.33 mol, 96 % yield, post chlorination by thermal work up, b.p.: 106 °C at 40 mbar, R_{T} = 22.8 min).

¹H-NMR (500.2 MHz, C₆D₆): δ = 4.76 (s, 1H, Si-H), 1.42-1.34 (m, 4H, Si-CH₂-), 1.30-1.18 (m, 16H, -CH₂-), 0.90-0.85 (m, 6H, CH₃), 0.77-0.71 (m, 4H, CH₂-CH₃) ppm.

²⁹Si-NMR: (99.4 MHz, C₆D₆): δ = 14.9 (d, ¹J = 217 Hz) ppm.

¹³C-NMR: (125.8 MHz, C₆D₆): δ = 33.2, 32.9, 32.4, 31.9, 29.7, 23.6, 23.5, 23.2, 23.0, 16.1, 14.5, 14.4 ppm.

### g) OctHexSiHCl + 1-pentene → OctHexSiPentCl

OctHexSiHCl (85 g, 0.33 mol, 1.0 eq), 150 mL of dry diglyme and 143 mL (0.75 mol, 2.3 eq) of 1-pentene were added to 500 mg of the catalyst (B770011) in a *Schlenk-flask.* After heating to reflux (100 °C) for 82 h, diglyme and the alkene were separated via distillation in vacuo. The product was isolated by fractional distillation in vacuo in 102.2 g (0.31 mol, 94 % yield, b.p.: 135 °C (10⁻² mbar), R_{T} = 28.6 min).

¹H-NMR (500.2 MHz, C₆D₆): δ = 1.24-1.18 (m, 6H, Si-CH₂-), 1.08-0.87 (m, 26H, -CH₂-), 0.69 (t, 9H, -CH₃, ³*J* = 7.5 Hz) ppm.

²⁹Si-NMR: (99.4 MHz, C₆D₆): δ = 31.6 ppm.

¹³C-NMR: (125.8 MHz, C₆D₆): δ = 35.9,33.8, 33.4, 32.5, 32.0, 29.8, 29.7, 23.5, 23.5, 23.2, 22.7, 16.7, 16.6, 14.5, 14.3 ppm.

### h) OctHexSiPentCl + LiH → OctHexSiPentH

LiH (10.7 g, 1.3 mol. 4.6 eq) was suspended in 200 mL of dry THF. OctHexSiPentCl (102 g, 0.31 mmol, 1.0 eq) was added to the suspension, heated to 90 °C for 16 h and additionally at 120 ° for 18 h. GC-MS analysis of the reaction mixture proved 100 % conversion of all chlorine-against hydrido- substituents. The liquid phase was separated from LiCl by filtration and OctHexSiPentH was isolated by fractional distillation in 76 g (0.26 mol, 86 % yield, b.p.: 120 °C, 10⁻²mbar, R_{T} = 24.82 min).

¹H-NMR (500.2 MHz, C₆D₆): δ = 3.94 (s, 1H, Si-H), 1.40-1.28 (m, 26H, CH₂), 0.90 (t, 9H, CH₃), 0.65-0.60 (m, Si-CH₂, 6H) ppm.

²⁹Si-NMR: (99.4 MHz, C₆D₆): δ = -6.7 (d, ¹J = 178 Hz) ppm.

¹³C-NMR: (125.8 MHz, C₆D₆): δ = 36.2, 34.0, 33.7, 32.5, 32.2, 29.9, 29.9, 25.3, 25.3, 23.2, 23.2, 22.9, 14.5, 14.4, 11.9, 11.8 ppm.

### i) OctHexSiPentH + 1-heptene → OctHexSiPentHept

OctHexSiPentH (8.2 g, 0.027 mol, 1.0 eq), 20 mL of dry diglyme and 7.8 mL (0.068 mol, 2.5 eq) of 1-heptene were added to 200 mg (2.5 wt%) of the catalyst (B770011) in a *Schlenk-*flask. After heating to reflux (100 °C) for 60 h, GC-MS analysis of the reaction mixture proved the formation of the desired product in 45 %. For full conversion of the hydridosilane into the corresponding tetraalkylsilane, the reaction mixture was transferred into an ampule and admixed with an additional equivalent of 1-heptene (0.027 mol) and 0.5 mL of the Karstedt-catalyst. The reaction mixture was cooled to -196 °C, the ampule was sealed under vacuo and placed in a drying oven at 150 °C for 60 h. Then the ampule was opened, all volatiles were distilled off and OctHexSiPentHept was isolated by fractional distillation in vacuo in 4.0 g (0.01 mol, 37 % yield, b.p.: 140 °C (10⁻² mbar), R_{T} = 36.53 min).

¹H-NMR (500.2 MHz, C₆D₆): δ = 1.33-1.28 (m, 36H, -CH₂-), 0,90-0,88 (m, 12H, -CH₃), 0.55 (m, 8H, Si-CH₂-) ppm.

²⁹Si-NMR: (99.4 MHz, C₆D₆): δ = 2.8 ppm.

¹³C-NMR: (125.8 MHz, C₆D₆): δ = 36.8, 34.6, 34.5, 34.2, 32.6, 32.5, 32.2, 30.0, 29.9, 29.6, 24.6, 24.6, 24.5, 24.2, 23.3, 22.9, 14.5, 14.4, 13.1, 13.0 ppm.

### i) OctHexSiPentH+ 1-decene → OctHexSiPentDec

OctHexSiPentH (8.0 g, 0.027 mol, 1.0 eq), 20 mL of dry diglyme and 12.7 mL (0.068 mol, 2.5 eq) of 1-decene were added to 200 mg (2.5 wt%) of the catalyst (B770011) in a *Schlenk-*flask. After heating to reflux (100 °C) for 60 h, ²⁹Si-NMR spectroscopic analysis of the reaction mixture indicated that 66 % of the desired product were formed. For full conversion of the hydridosilane, the reaction mixture was transferred into an ampule and admixed with an additional equivalent of 1-decene (5.1 mL, 0.027 mol) and 0.5 mL of the Karstedt-catalyst. The mixture was cooled to -196 °C, the ampule was sealed under vacuo and placed in a drying oven at 150 °C for 60 h. Then, the ampule was opened, all volatiles were condensed off and OctHexSiPentDec was isolated by fractional distillation in vacuo in 4.8 g (0.01 mol, 40 % yield, b.p.: 165 °C (10⁻² mbar), R_{T} = 53.01 min).

¹H-NMR (500.2 MHz, C₆D₆): δ = 1.36-1.28 (m, 42H, -CH₂-), 0.92-0.88 (m, 12H, -CH₃), 0.63-0.54 (m, 8H, Si-CH₂-) ppm.

²⁹Si-NMR: (99.4 MHz, C₆D₆): δ = 2.8 ppm.

¹³C-NMR: (125.8 MHz, C₆D₆): δ = 36.7, 34.6, 34.2, 32.5, 32.2, 30.2, 29.9, 24.6, 24.2, 23.3, 22.8, 14.5, 13.1 ppm.

### k) OctHexSiPentH+ 1-hexadecene → OctHexSiPentHexdec

OctHexSiPentH (8.0 g, 0.027 mol, 1.0 eq), 20 mL of dry diglyme and 9.4 mL (0.068 mol, 2.5 eq) of 1-hexadecene were added to 200 mg (2.5 wt%) of the catalyst (B770011) in a *Schlenk-flask.* After heating to reflux (100 °C) for 60 h, ²⁹Si-NMR spectroscopic analysis of the reaction mixture proved the formation of the desired product in 66 %. For full conversion of the hydridosilane, the reaction mixture was transferred into an ampule and admixed with an additional equivalent of 1-hexadecene (3.8 mL, 0.027 mol) and 0.5 mL of the Karstedt-catalyst. The reaction mixture was cooled to -196 °C, the ampule was sealed under vacuo and placed in a drying oven at 150 °C for 60 h. Then, the ampule was opened, all volatile compounds were condensed off and the residue was purified by filtration over a 2 cm column filled with silica-gel and hexane as solvent. After removal of the solvent in vacuo, the silahydrocarbon OctHexSiPentHexdec (Hexdec is C₁₆H₃₁) was isolated in 5.7 g (0.011 mol, 41 % yield, δ²⁹Si=2.8 ppm, R_{T} = 160.98 min).

¹H-NMR (500.2 MHz, C₆D₆): δ = 1.22-1.14 (m, 52H, -CH₂-), 0.78-0.74 (m, 12H, -CH₃), 0.43-0.42 (m, 8H, Si-CH₂-) ppm.

²⁹Si-NMR: (99.4 MHz, C₆D₆): δ = 2.8 ppm.

¹³C-NMR: (125. MHz, C₆D₆): δ = 36.7, 34.6, 34.3, 32.5, 32.2, 30.9, 30.0, 24.6, 24.2, 23.3, 22.9, 14.5, 13.1 ppm.

### Brief description of the Figures

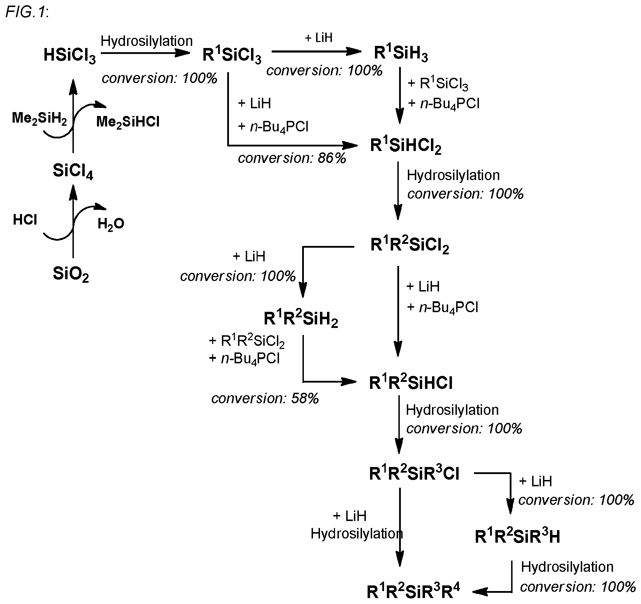

In FIG. 1 a stepwise process according to the invention for the production of silahydrocarbons of the general formula SiR¹R²R³R⁴ starting from R¹SiCl₃ is displayed, wherein also a pathway for the provision of R¹SiCl₃ starting from SiO₂ is provided.

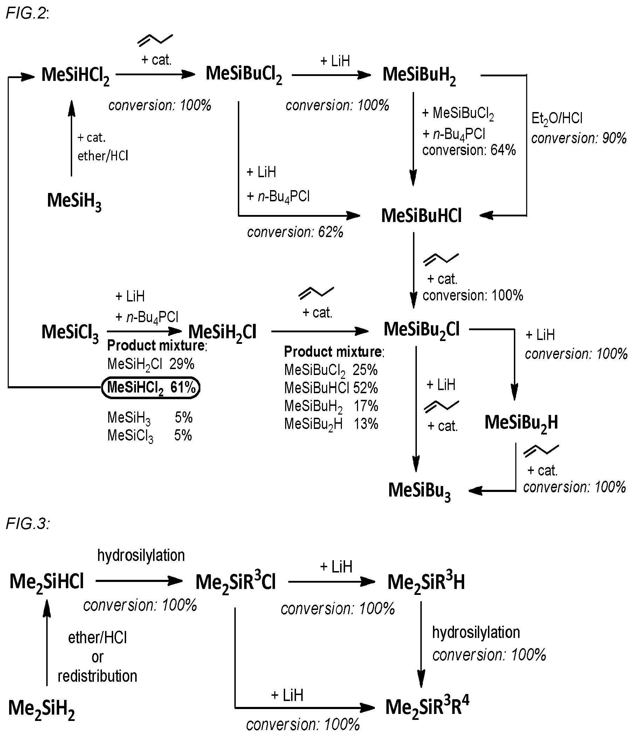

FIG. 2 displays synthetic pathways according to the present invention resulting in the preparation of MeSiBu₃ starting from MeSiH₃ and/or MeSiCl₃.
FIG. 3 displays synthetic pathways for the preparation of silahydrocarbons of the general formula Me₂SiR³R⁴ starting from Me₂SiH₂.

## Claims

1. A process for the production of silahydrocarbons of the general formula (I)
SiR¹R²R³R⁴ (I)
wherein
R¹ and R² are independently selected from the group consisting of aliphatic, cycloaliphatic, aryl, alkaryl and aralkyl groups, in particular unsubstituted or substituted alkyl groups, unsubstituted or substituted cycloaliphatic groups, unsubstituted or substituted alkaryl groups, unsubstituted or substituted aralkyl groups, an unsubstituted or substituted aryl group, or an unsubstituted or substituted alkenyl group, each having 1 to 30 carbon atoms,
R³ and R⁴ are independently selected from the group consisting of aliphatic, cycloaliphatic, aryl, alkaryl and aralkyl groups, in particular unsubstituted or substituted alkyl groups, unsubstituted or substituted cycloaliphatic groups, unsubstituted or substituted alkenyl groups, unsubstituted or substituted alkaryl groups or unsubstituted or substituted aryl groups, each having 2 to 30 carbon atoms and having at least two carbon atoms adjacent to each other, and wherein R¹-R⁴ may be the same or be selected from two, three or four different groups, comprising
a) at least one step of producing a bifunctional monosilane intermediate of the general formula (II)
SiR¹R²¹HCl (II)
wherein R¹ is as defined above,
and R²¹ is selected from a chloro group, hydrido group or selected from a group consisting of aliphatic, cycloaliphatic, aryl, alkaryl and aralkyl groups, in particular an unsubstituted or substituted alkyl group, unsubstituted or substituted cycloaliphatic group, unsubstituted or substituted alkaryl group, unsubstituted or substituted aralkyl group, an unsubstituted or substituted aryl group, or an unsubstituted or substituted alkenyl group, each having 1 to 30 carbon atoms,
by
- a redistribution reaction of an organoperchloromonosilane of the general formula (III)
SiR¹R²²Cl₂ (III)
wherein R¹ is as defined above,
and R²² is selected from a chloro group or a group consisting of aliphatic, cycloaliphatic, aryl, alkaryl and aralkyl groups, in particular an unsubstituted or substituted alkyl group, unsubstituted or substituted cycloaliphatic group, unsubstituted or substituted alkaryl group, **unsubstituted** or substituted aralkyl group, an unsubstituted or substituted aryl group, or an unsubstituted or substituted alkenyl group, each having 1 to 30 carbon atoms,
with an organoperhydridomonosilane of the general formula (IV)
SiR¹R²³H₂ (IV)
wherein R¹ is as defined above,
and R²³ is selected from a hydrido group or a group consisting of aliphatic, cycloaliphatic, aryl, alkaryl and aralkyl groups, in particular an unsubstituted or substituted alkyl group, unsubstituted or substituted cycloaliphatic group, unsubstituted or substituted alkaryl group, unsubstituted or substituted aralkyl group, an unsubstituted or substituted aryl group, or an unsubstituted or substituted alkenyl group, each having 1 to 30 carbon atoms,
in the presence of a redistribution catalyst and optionally in the presence of one or more solvents, or by
- a redistribution reaction of an organoperchloromonosilane of the general formula (III) with the in-situ formed hydrogenation products obtained by reacting the monosilane of the general formula (III),
wherein R¹ is as defined above,
and R²² is selected from a chloro group or a group consisting of aliphatic, cycloaliphatic, aryl, alkaryl and aralkyl groups, in particular an unsubstituted or substituted alkyl group, unsubstituted or substituted cycloaliphatic group, unsubstituted or substituted alkaryl group, unsubstituted or substituted aralkyl group, an unsubstituted or substituted aryl group, or an unsubstituted or substituted alkenyl group, each having 1 to 30 carbon atoms,
with a metal hydride reagent of the general formula MHₓ, wherein M represents one or more metals and x is an integer from 1 to 6, or an organometallic hydride donor selected from diisobutylaluminum hydride, Me₃SnH, *n*Bu₃SnH, Ph₃SnH, Me₂SnH₂, nBu₂SnH₂ and Ph₂SnH₂,
in the presence of a redistribution catalyst and optionally in the presence of one or more solvents, or by
- a chlorination reaction comprising the reaction of an organoperhydridomonosilane of the general formula (IV)
SiR¹R²³H₂ (IV)
wherein R¹ is as defined above,
and R²³ is selected from a hydrido group or a group consisting of aliphatic, cycloaliphatic, aryl, alkaryl and aralkyl groups, in particular an unsubstituted or substituted alkyl group, unsubstituted or substituted cycloaliphatic group, unsubstituted or substituted alkaryl group, unsubstituted or substituted aralkyl group, an unsubstituted or substituted aryl group, or an unsubstituted or substituted alkenyl group, each having 1 to 30 carbon atoms,
with tetrachlorosilane (SiCl₄) in the presence of at least one catalyst, optionally in the presence of one or more solvents, or by
- a selective partial chlorination reaction of an organoperhydridomonosilane of the general formula (IV)
SiR¹R²³H₂ (IV)
wherein R¹ is as defined above,
and R²³ is selected from a hydrido group or a group consisting of aliphatic, cycloaliphatic, aryl, alkaryl and aralkyl groups, in particular an unsubstituted or substituted alkyl group, unsubstituted or substituted cycloaliphatic group, unsubstituted or substituted alkaryl group, unsubstituted or substituted aralkyl group, an unsubstituted or substituted aryl group, or an unsubstituted or substituted alkenyl group, each having 1 to 30 carbon atoms,
by reacting the compound with an HCl/ether reagent, optionally in the presence of one or more further solvents,
and
b) at least one step of submitting a bifunctional monosilane intermediate of the general formula (II) as obtained from step (a) or HSiCl₃ to a metal-catalyzed hydrosilylation reaction with a compound containing at least one C-C double or C-C triple bond to obtain an intermediate of the general formula (V)
SiR¹R²R³¹Cl (V)
wherein R¹ and R² are selected from a group consisting of aliphatic, cycloaliphatic, aryl, alkaryl and aralkyl groups, in particular unsubstituted or substituted alkyl groups, unsubstituted or substituted cycloaliphatic groups, unsubstituted or substituted alkaryl groups, unsubstituted or substituted aralkyl groups, an unsubstituted or substituted aryl group, or an unsubstituted or substituted alkenyl group, each having 1 to 30 carbon atoms,
R³¹ is selected from a chloro group or from the group consisting of aliphatic, cycloaliphatic, aryl, alkaryl and aralkyl groups, in particular unsubstituted or substituted alkyl groups, unsubstituted or substituted cycloaliphatic groups, unsubstituted or substituted alkenyl groups, unsubstituted or substituted alkaryl groups or unsubstituted or substituted aryl groups, each having 2 to 30 carbon atoms and having at least two carbon atoms adjacent to each other, or to obtain an intermediate of the formula R¹SiCl₃, wherein R¹ is as defined for the intermediate of the general formula (V),
and
c) a step of producing an intermediate of the general formula (VI)
SiR¹R²R³²H (VI)
by a hydrogenation reaction of a compound of the general formula (V) as obtained in a step b) wherein in the general formulae (V) and (VI)
R¹and R² are selected from a group consisting of aliphatic, cycloaliphatic, aryl, alkaryl and aralkyl groups, in particular unsubstituted or substituted alkyl groups, unsubstituted or substituted cycloaliphatic groups, unsubstituted or substituted alkaryl groups, unsubstituted or substituted aralkyl groups, an unsubstituted or substituted aryl group, or an unsubstituted or substituted alkenyl group, each having 1 to 30 carbon atoms,
R³¹ is as defined above,
and R³² is selected from a hydrido group or from the group consisting of aliphatic, cycloaliphatic, aryl, alkaryl and aralkyl groups, in particular unsubstituted or substituted alkyl groups, unsubstituted or substituted cycloaliphatic groups, unsubstituted or substituted alkenyl groups, unsubstituted or substituted alkaryl groups or unsubstituted or substituted aryl groups, each having 2 to 30 carbon atoms and having at least two carbon atoms adjacent to each other,
or of producing an intermediate of the general formula R¹SiH₃ by a hydrogenation reaction of a compound of the formula R¹SiCl₃, wherein R¹ is as defined for the intermediate of the general formula (VI),
and
d) submitting an intermediate of the general formula (VI) or R¹SiH₃ obtained from step c) to a final hydrosilylation reaction with a compound containing one or more C-C double bonds or C-C triple bonds in order to obtain the silahydrocarbons of the general formula (I)
SiR¹R²R³R⁴ (I) as defined above,
wherein the intermediate is preferably a tertiary silane of the general structure SiR¹R²R³²H (VI) with R³² ≠ H.

2. The process according to claim 1, wherein the four organyl substituents R¹, R², R³ and R⁴ at the silicon center of the silahydrocarbon product of the general formula (I) are selected from at least two, preferably from at least three, and most preferably from four different groups.

3. The process according to claims 1 and 2, wherein the four organyl substituents R¹, R², R³ and R⁴ at the silicon center of the silahydrocarbon product of the general formula (I) are selected from four different groups, preferably four different alkyl groups, more preferably four different linear alkyl groups, most preferably four different linear unsubstituted alkyl groups.

4. The process according to any of the claims 1 to 3, wherein one or two of the substituents R³ and R⁴ of the silahydrocarbon product of the general formula (I) are selected from the group consisting of alkenyl substituents, residues substituted with one or more halogen substituents, residues comprising one or more aromatic groups, and residues comprising ester groups.

5. The process according to any of the claims 1 to 3, wherein all four organyl substituents R¹, R², R³ and R⁴ at the silicon center of the silahydrocarbon product of the general formula (I) are independently selected from saturated hydrocarbon groups, preferably from unsubstituted alkyl groups, more preferably from unsubstituted alkyl groups, most preferably from linear unsubstituted alkyl groups.

6. The process according to any of the previous claims, wherein the bifunctional monosilane intermediate of the general formula (II) in step a) is a compound of the formula
SiR¹HCl₂
wherein R¹ is an unsubstituted or substituted alkyl group,
preferably R¹ is an unsubstituted alkyl group, more preferably R¹ is an unsubstituted C1-C30 alkyl group, even more preferably R¹ is an unsubstituted C1-C30 linear alkyl group, most preferably R¹ is a methyl group.

7. The process according to any of the previous claims, wherein the bifunctional monosilane intermediate of the general formula (II) in step a) is a compound of the formula
SiR¹R²¹HCl,
wherein R¹ and R²¹ are independently selected from unsubstituted or substituted alkyl groups, preferably R¹ and R²¹ are independently selected from unsubstituted alkyl groups, more preferably R¹ and R²¹ are independently selected from unsubstituted C1-C30 linear alkyl groups, even more preferably R¹ is methyl and R²¹ is selected from unsubstituted C1-C30 linear alkyl groups, most preferably R¹ and R²¹ are both methyl groups.

8. The process according to any of the previous claims, wherein at least one intermediate of the general formula (II) is obtained by a redistribution reaction of a compound of the general formula (III) and a compound of the general formula (IV) as defined above, wherein the redistribution catalyst is selected from one or more compounds selected from the group consisting of
- phosphonium halides, preferably phosphonium chlorides R⁵₄PCl, wherein R⁵ is selected from the group consisting of hydrogen and an organyl group, which can be the same or different, more preferably R⁵ is selected from the group consisting of an aromatic group and an aliphatic hydrocarbon group, even more preferably R⁵ is selected from n-alkyl groups, and most preferably R⁵₄PCl is *n*-Bu₄PCl,
- phosphines R⁵₃P, wherein R⁵ is selected from the group consisting of hydrogen and an organyl group and can be the same or different, preferably R⁵ is an organyl group and can be the same or different, most preferably R⁵₃P is Ph₃P,
- amines R⁵₃N, wherein R⁵ is selected from the group consisting of hydrogen or an organyl group and can be the same or different, preferably R⁵₃N, wherein R⁵ is an organyl group and can be the same or different, most preferably R⁵₃N is *n*-Bu₃N,
- N-heterocyclic amines, preferably methylimidazoles, such as 2-methylimidazole, 4-methylimidazole and 1- methylimidazole, and
- ammonium halides, preferably ammonium chlorides of the formula R⁵₄NCl, wherein R⁵ is selected from the group consisting of hydrogen and an organyl group and can be the same or different, more preferably R⁵₄NCl, wherein R⁵ is an organyl group and can be the same or different, more preferably R⁵ is selected from n-alkyl groups, most preferably R⁵₄NCl is *n*-Bu₄NCl.

9. The process according to any of the previous claims, wherein at least one step a) is performed in the presence of a solvent, wherein the solvent is selected from the group consisting of ethers, alkanes or aromatic solvents, more preferably selected from the group consisting of THF, 1,4-dioxane, diglyme, tetraglyme, hexane and benzene, most preferably the solvent is THF, and/or wherein the reaction temperature in at least one step a) is in the range from 0 °C to 180 °C, preferably 20 °C to 160 °C, and most preferably 60 °C to 120 °C.

10. The process according to any of the previous claims, wherein at least one intermediate of the general formula (II) in a step a) is obtained by a redistribution reaction of a compound of the general formula (III) and the in-situ formed hydrogenation products obtained by reacting one or more monosilanes of the general formula (III) with a metal hydride of the general formula MHₓ or an organometallic hydride donorin the presence of a redistribution catalyst, wherein the redistribution catalyst is selected from the group consisting of
- R⁵₄PCl, wherein R⁵ is selected from the group consisting of hydrogen and an organyl group, which can be the same or different, preferably R⁵ is an organyl group, more preferably R⁵ is selected from the group consisting of an aromatic group and an aliphatic hydrocarbon group, even more preferably an n-alkyl group, and most preferably R⁵₄PCl is *n*-Bu₄PCl,
- phosphines R⁵₃P, wherein R⁵ is selected from the group consisting of hydrogen and an organyl group and can be the same or different, preferably R⁵₃P, wherein R is an organyl group and can be the same or different, more preferably Ph₃P,
- amines R⁵₃N, wherein R⁵ is selected from the group consisting of hydrogen and an organyl group and can be the same or different, preferably R⁵₃N, wherein R⁵ is as defined above and can be the same or different, more preferably *n*-Bu₃N,
- N-heterocyclic amines, preferably methylimidazoles, more preferably 2-methylimidazole, 4-methylimidazole and 1- methylimidazole, and
- ammonium compounds, such as R⁵₄NCl, wherein R⁵ is selected from the group consisting of hydrogen and an organyl group and can be the same or different, preferably R⁵₄NCl, wherein R⁵ is as defined above and can be the same or different, more preferably *n*-Bu₄NCl, and the metal hydride reagent is selected from alkali metal hydrides, alkaline earth metal hydrides, mixed metal hydride salts comprising one or more alkali metal or alkaline earth metal ions or mixtures thereof, preferably selected from lithium hydride, sodium hydride, potassium hydride, magnesium hydride, calcium hydride, lithium aluminum hydride, sodium borohydride, lithium borohydrate, and mixtures thereof, and the organometallic hydride donor is selected from diisobutylaluminum hydride, Me₃SnH, *n*Bu₃SnH, Ph₃SnH, Me₂SnH₂, *n*Bu₂SnH₂ and Ph₂SnH₂, more preferably the metal hydride or organometallic hydride donor is selected from sodium hydride, lithium aluminum hydride, lithium hydride, and *n*Bu₃SnH, most preferably LiH.

11. The process according to any of the previous claims, wherein at least one intermediate of the general formula (II) is obtained in a selective partial chlorination reaction of a compound of the general formula (IV) by reacting the compound with an HCl/ether reagent in step a), wherein the HCl/ether reagent is preferably selected from THF/HCl, diethyl ether/HCl, diglyme/HCl, 1,4-dioxane/HCl, dibutyl ether/HCl, more preferably selected from diglyme/HCl, diethyl ether/HCl, 1,4-dioxane/HCl, dibutyl ether/HCl, and most preferably selected from diethyl ether/HCl, or diglyme/HCl.

12. The process according to any of the previous claims, wherein at least one intermediate of the general formula (II) is obtained in a chlorination reaction of a compound of the general formula (IV) SiR¹R²³H₂ with tetrachlorosilane (SiCl₄) in the presence of at least one catalyst.

13. The process according to any of the previous claims, wherein the compounds of the general formula (IV) submitted to the partial chlorination reaction with an HCl/ether reagent or with SiCl₄ in the presence of at least one catalyst are obtained by perhydrogenation of the analogous perchlorinated monosilanes using one or more metal hydride reagents or organometallic hydride donor reagents selected from NaBH₄, LiAlH₄, LiBH₄, KH, LiH, NaH, MgH₂, CaH₂, *n*Bu₃SnH, Me₃SnH, Ph₃SnH, *n*Bu₂SnH₂, Me₂SnH₂, and Ph₂SnH₂ or *i*-Bu₂AlH, preferably from LiAlH₄, NaH, LiH or *n*Bu₃SnH, more preferably from LiAlH₄ or LiH, most preferably LiH.

14. The process according to any of the previous claims, wherein at least one metal-catalyzed hydrosilylation step (b) is performed using a Rh- or Pt-based catalyst, more preferably using a Pt-catalyst immobilized on a support, even more preferably using a Pt-catalyst immobilized on silica, most preferably a Pt-catalyst immobilized on silica comprising a metal-containing siloxane polymer matrix covalently bonded to the silica support, in particular Pt-nanoparticles encapsulated in a siloxane polymer matrix covalently bonded to a silica support.

15. The process according to any of the previous claims, wherein in step c) the intermediate of the general formula (V) is hydrogenated by a reaction with a metal hydride reagent of the general formula MHₓ, wherein M and x are as defined above, or an organometallic hydride donor reagent selected from the group consisting of *n*Bu₃SnH, Me₃SnH, Ph₃SnH, *n*Bu₂SnH₂, Me₂SnH₂, and Ph₂SnH₂, preferably with a metal hydride reagent selected from the group consisting of NaBH₄, LiAlH₄, LiBH₄, KH, LiH, NaH, MgH₂, CaH₂, *i*-Bu₂AlH or *n*Bu₃SnH, more preferably consisting of LiAlH₄, NaH, LiH, even more preferably from LiAlH₄ and LiH, and most preferably the metal hydride reagent is LiH.

16. The process according to any of the previous claims, wherein the catalyst of the hydrosilylation reaction of step d) is selected from a Rh- or Pt-based catalyst, more preferably from a Pt-catalyst immobilized on a support, even more preferably from a Pt-catalyst immobilized on silica, most preferably from a Pt-catalyst immobilized on silica comprising a metal-containing siloxane polymer matrix covalently bonded to the silica support, in particular Pt-nanoparticles encapsulated in a siloxane polymer matrix covalently bonded to a silica support.

## Patentansprüche

1. Ein Verfahren zur Herstellung von Silakohlenwasserstoffen der allgemeinen Formel (I)
SiR¹R²R³R⁴ (I)
worin
R¹ und R² unabhängig voneinander aus der Gruppe ausgewählt sind, die aus aliphatischen, cycloaliphatischen, Aryl-, Alkaryl- und Aralkylgruppen besteht, insbesondere aus unsubstituierten oder substituierten Alkylgruppen, unsubstituierten oder substituierten cycloaliphatischen Gruppen, unsubstituierten oder substituierten Alkarylgruppen, unsubstituierten oder substituierten Aralkylgruppen, einer unsubstituierten oder substituierten Arylgruppe oder einer unsubstituierten oder substituierten Alkenylgruppe, die jeweils 1 bis 30 Kohlenstoffatome aufweisen,
R³ und R⁴ unabhängig voneinander aus der Gruppe ausgewählt sind, die aus aliphatischen, cycloaliphatischen, Aryl-, Alkaryl- und Aralkylgruppen besteht, insbesondere aus unsubstituierten oder substituierten Alkylgruppen, unsubstituierten oder substituierten cycloaliphatischen Gruppen, unsubstituierten oder substituierten Alkenylgruppen, unsubstituierten oder substituierten Alkarylgruppen oder unsubstituierten oder substituierten Arylgruppen, die jeweils 2 bis 30 Kohlenstoffatome und mindestens zwei einander benachbarte Kohlenstoffatome aufweisen, und worin R¹-R⁴ gleich oder aus zwei, drei oder vier verschiedenen Gruppen ausgewählt sein können,
umfassend
a) mindestens einen Schritt der Herstellung eines bifunktionellen Monosilan-Zwischenprodukts der allgemeinen Formel (II)
SiR¹R²¹HCl (II)
worin R¹ wie oben definiert ist,
und R²¹ aus einer Chlorgruppe, Hydridogruppe oder aus einer Gruppe, die aus aliphatischen, cycloaliphatischen, Aryl-, Alkaryl- und Aralkylgruppen, insbesondere einer unsubstituierten oder substituierten Alkylgruppe, einer unsubstituierten oder substituierten cycloaliphatischen Gruppe, einer unsubstituierten oder substituierten Alkarylgruppe, einer unsubstituierten oder substituierten Aralkylgruppe, einer unsubstituierten oder substituierten Arylgruppe oder einer unsubstituierten oder substituierten Alkenylgruppe, jeweils mit 1 bis 30 Kohlenstoffatomen, besteht, ausgewählt ist,
durch
- eine Redistributionsreaktion eines Organoperchlormonosilans der allgemeinen Formel (III)
SiR¹R²²Cl₂ (III)
worin R¹ wie oben definiert ist,
und R²² aus einer Chlorgruppe oder einer Gruppe, die aus aliphatischen, cycloaliphatischen, Aryl-, Alkaryl- und Aralkylgruppen, insbesondere einer unsubstituierten oder substituierten Alkylgruppe, einer unsubstituierten oder substituierten cycloaliphatischen Gruppe, einer unsubstituierten oder substituierten Alkarylgruppe, einer unsubstituierten oder substituierten Aralkylgruppe, einer unsubstituierten oder substituierten Arylgruppe oder einer unsubstituierten oder substituierten Alkenylgruppe, die jeweils 1 bis 30 Kohlenstoffatome aufweisen, besteht, ausgewählt ist,
mit einem Organoperhydridomonosilan der allgemeinen Formel (IV)
SiR¹R²³H₂ (IV)
worin R¹ wie oben definiert ist,
und R²³ aus einer Hydridogruppe oder einer Gruppe, die aus aliphatischen, cycloaliphatischen, Aryl-, Alkaryl- und Aralkylgruppen, insbesondere einer unsubstituierten oder substituierten Alkylgruppe, einer unsubstituierten oder substituierten cycloaliphatischen Gruppe, einer unsubstituierten oder substituierten Alkarylgruppe, einer unsubstituierten oder substituierten Aralkylgruppe, einer unsubstituierten oder substituierten Arylgruppe oder einer unsubstituierten oder substituierten Alkenylgruppe, die jeweils 1 bis 30 Kohlenstoffatome aufweisen, besteht, ausgewählt ist,
in der Gegenwart eines Redistributionskatalysators und wahlweise in der Gegenwart von einem oder mehreren Lösungsmitteln, oder durch
- eine Redistributionsreaktion eines Organoperchlormonosilans der allgemeinen Formel (III) mit den in-situ gebildeten Hydrierungsprodukten, die durch Reaktion des Monosilans der allgemeinen Formel (III),
worin R¹ wie oben definiert ist,
und R²² aus einer Chlorgruppe oder einer Gruppe, die aus aliphatischen, cycloaliphatischen, Aryl-, Alkaryl- und Aralkylgruppen, insbesondere einer unsubstituierten oder substituierten Alkylgruppe, einer unsubstituierten oder substituierten cycloaliphatischen Gruppe, einer unsubstituierten oder substituierten Alkarylgruppe, einer unsubstituierten oder substituierten Aralkylgruppe, einer unsubstituierten oder substituierten Arylgruppe oder einer unsubstituierten oder substituierten Alkenylgruppe, die jeweils 1 bis 30 Kohlenstoffatome aufweisen, besteht, ausgewählt ist,
mit einem Metallhydridreagenz der allgemeinen Formel MHₓ, worin M ein oder mehrere Metalle darstellt und x eine ganze Zahl von 1 bis 6 ist, oder einem metallorganischen Hydridspender, ausgewählt aus Diisobutylaluminiumhydrid, Me₃SnH, *n*Bu₃SnH, Ph₃SnH, Me₂SnH₂, *n*Bu₂SnH₂ und Ph₂SnH₂,
in der Gegenwart eines Redistributionskatalysators und wahlweise in der Gegenwart eines oder mehrerer Lösungsmittel erhalten werden, oder durch
- eine Chlorierungsreaktion, umfassend die Reaktion eines Organoperhydridomonosilans der allgemeinen Formel (IV)
SiR¹R²³H₂ (IV)
worin R¹ wie oben definiert ist,
und R²³ aus einer Hydridogruppe oder einer Gruppe, die aus aliphatischen, cycloaliphatischen, Aryl-, Alkaryl- und Aralkylgruppen, insbesondere einer unsubstituierten oder substituierten Alkylgruppe, einer unsubstituierten oder substituierten cycloaliphatischen Gruppe, einer unsubstituierten oder substituierten Alkarylgruppe, einer unsubstituierten oder substituierten Aralkylgruppe, einer unsubstituierten oder substituierten Arylgruppe oder einer unsubstituierten oder substituierten Alkenylgruppe, die jeweils 1 bis 30 Kohlenstoffatome aufweisen, besteht, ausgewählt ist,
mit Tetrachlorsilan (SiCl₄) in der Gegenwart von mindestens einem Katalysator, wahlweise in der Gegenwart von einem oder mehreren Lösungsmitteln, oder durch
- eine selektive partielle Chlorierungsreaktion eines Organoperhydridomonosilans der allgemeinen Formel (IV)
SiR¹R²³H₂ (IV)
worin R¹ wie oben definiert ist,
und R²³ aus einer Hydridogruppe oder einer Gruppe, die aus aliphatischen, cycloaliphatischen, Aryl-, Alkaryl- und Aralkylgruppen, insbesondere einer unsubstituierten oder substituierten Alkylgruppe, einer unsubstituierten oder substituierten cycloaliphatischen Gruppe, einer unsubstituierten oder substituierten Alkarylgruppe, einer unsubstituierten oder substituierten Aralkylgruppe, einer unsubstituierten oder substituierten Arylgruppe oder einer unsubstituierten oder substituierten Alkenylgruppe, die jeweils 1 bis 30 Kohlenstoffatome aufweisen, besteht, ausgewählt ist,
durch Umsetzen der Verbindung mit einem HCl/Ether-Reagenz, wahlweise in der Gegenwart eines oder mehrerer weiterer Lösungsmittel,
und
b) mindestens einen Schritt der Umsetzung eines bifunktionellen Monosilan-Zwischenprodukts der allgemeinen Formel (II), wie in Schritt (a) erhalten, oder der Umsetzung von HSiCl₃ in einer metallkatalysierten Hydrosilylierungsreaktion mit einer Verbindung, die mindestens eine C-C-Doppel- oder C-C-Dreifachbindung enthält, um ein Zwischenprodukt der allgemeinen Formel (V) zu erhalten
SiR¹R²R³¹Cl (V)
worin R¹ und R² aus einer Gruppe, die aus aliphatischen, cycloaliphatischen, Aryl-, Alkaryl- und Aralkylgruppen, insbesondere unsubstituierten oder substituierten Alkylgruppen, unsubstituierten oder substituierten cycloaliphatischen Gruppen, unsubstituierten oder substituierten Alkarylgruppen, unsubstituierten oder substituierten Aralkylgruppen, einer unsubstituierten oder substituierten Arylgruppe oder einer unsubstituierten oder substituierten Alkenylgruppe, die jeweils 1 bis 30 Kohlenstoffatome aufweisen, besteht, ausgewählt sind,
R³¹ aus einer Chlorgruppe oder aus der Gruppe, die aus aliphatischen, cycloaliphatischen, Aryl-, Alkaryl- und Aralkylgruppen, insbesondere unsubstituierten oder substituierten Alkylgruppen, unsubstituierten oder substituierten cycloaliphatischen Gruppen, unsubstituierten oder substituierten Alkenylgruppen, unsubstituierten oder substituierten Alkarylgruppen oder unsubstituierten oder substituierten Arylgruppen, die jeweils 2 bis 30 Kohlenstoffatome und mindestens zwei einander benachbarte Kohlenstoffatome aufweisen, besteht, ausgewählt ist, oder um ein Zwischenprodukt der Formel R¹SiCl₃ zu erhalten, worin R¹ wie für das Zwischenprodukt der allgemeinen Formel (V) definiert ist,
und
c) einen Schritt zur Herstellung eines Zwischenprodukts der allgemeinen Formel (VI)
SiR¹R²R³²H (VI)
durch eine Hydrierungsreaktion einer Verbindung der allgemeinen Formel (V), wie sie in einem Schritt b) erhalten wurde,
wobei in den allgemeinen Formeln (V) und (VI)
R¹ und R² aus einer Gruppe, die aus aliphatischen, cycloaliphatischen, Aryl-, Alkaryl- und Aralkylgruppen, insbesondere unsubstituierten oder substituierten Alkylgruppen, unsubstituierten oder substituierten cycloaliphatischen Gruppen, unsubstituierten oder substituierten Alkarylgruppen, unsubstituierten oder substituierten Aralkylgruppen, einer unsubstituierten oder substituierten Arylgruppe oder einer unsubstituierten oder substituierten Alkenylgruppe, die jeweils 1 bis 30 Kohlenstoffatome aufweisen, besteht, ausgewählt sind, R³¹ wie oben definiert ist,
und R³² aus einer Hydridogruppe oder aus der Gruppe, die aus aliphatischen, cycloaliphatischen, Aryl-, Alkaryl- und Aralkylgruppen, insbesondere unsubstituierten oder substituierten Alkylgruppen, unsubstituierten oder substituierten cycloaliphatischen Gruppen, unsubstituierten oder substituierten Alkenylgruppen, unsubstituierten oder substituierten Alkarylgruppen oder unsubstituierten oder substituierten Arylgruppen, die jeweils 2 bis 30 Kohlenstoffatome und mindestens zwei einander benachbarte Kohlenstoffatome aufweisen, besteht, ausgewählt ist,
oder zur Herstellung eines Zwischenprodukts der allgemeinen Formel R¹SiH₃ durch eine Hydrierungsreaktion einer Verbindung der Formel R¹SiCl₃, worin R¹ wie für das Zwischenprodukt der allgemeinen Formel (VI) definiert ist,
und
d) die Umsetzung eines aus Schritt c) erhaltenen Zwischenprodukts der allgemeinen Formel (VI) oder die Umsetzung von R¹SiH₃ in einer abschließenden Hydrosilylierungsreaktion mit einer Verbindung, die eine oder mehrere C-C-Doppelbindungen oder C-C-Dreifachbindungen enthält, um die Silakohlenwasserstoffe der allgemeinen Formel (I)
SiR¹R²R³R⁴ (I)
wie oben definiert zu erhalten,
wobei das Zwischenprodukt bevorzugt ein tertiäres Silan der allgemeinen Struktur SiR¹R²R³²H (VI) mit R³² ≠ H ist.

2. Das Verfahren gemäß Anspruch 1, wobei die vier Organylsubstituenten R¹, R², R³ und R⁴ am Siliciumzentrum des Silakohlenwasserstoffprodukts der allgemeinen Formel (I) aus mindestens zwei, bevorzugt aus mindestens drei und am bevorzugtesten aus vier verschiedenen Gruppen ausgewählt sind.

3. Das Verfahren gemäß den Ansprüchen 1 und 2, wobei die vier Organyl-Substituenten R¹, R², R³ und R⁴ am Siliciumzentrum des Silakohlenwasserstoffprodukts der allgemeinen Formel (I) aus vier verschiedenen Gruppen, bevorzugt vier verschiedenen Alkylgruppen, noch bevorzugter vier verschiedenen linearen Alkylgruppen, am bevorzugtesten vier verschiedenen linearen unsubstituierten Alkylgruppen ausgewählt sind.

4. Das Verfahren gemäß einem der Ansprüche 1 bis 3, wobei einer oder zwei der Substituenten R³ und R⁴ des Silakohlenwasserstoffprodukts der allgemeinen Formel (I) aus der Gruppe, die aus Alkenylsubstituenten, mit einem oder mehreren Halogensubstituenten substituierten Resten, Resten, die eine oder mehrere aromatische Gruppen umfassen, und Resten, die Estergruppen umfassen, ausgewählt sind.

5. Das Verfahren gemäß einem der Ansprüche 1 bis 3, wobei alle vier Organyl-Substituenten R¹, R², R³ und R⁴ am Siliciumzentrum des Silakohlenwasserstoffprodukts der allgemeinen Formel (I) unabhängig voneinander aus gesättigten Kohlenwasserstoffgruppen, bevorzugt aus unsubstituierten Alkylgruppen, noch bevorzugter aus unsubstituierten Alkylgruppen, am bevorzugtesten aus linearen unsubstituierten Alkylgruppen ausgewählt sind.

6. Das Verfahren gemäß einem beliebigen der vorhergehenden Ansprüche, wobei das bifunktionelle Monosilan-Zwischenprodukt der allgemeinen Formel (II) in Schritt a) eine Verbindung der Formel
SiR¹HCl₂ ist,
worin R¹ eine unsubstituierte oder substituierte Alkylgruppe ist,
bevorzugt ist R¹ eine unsubstituierte Alkylgruppe, bevorzugter ist R¹ eine unsubstituierte C1-C30-Alkylgruppe, noch bevorzugter ist R¹ eine unsubstituierte lineare C1-C30-Alkylgruppe, am bevorzugtesten ist R¹ eine Methylgruppe.

7. Das Verfahren gemäß einem beliebigen der vorhergehenden Ansprüche, wobei das bifunktionelle Monosilan-Zwischenprodukt der allgemeinen Formel (II) in Schritt a) eine Verbindung der Formel
SiR¹R²¹HCl,
worin R¹ und R²¹ unabhängig voneinander aus unsubstituierten oder substituierten Alkylgruppen ausgewählt sind, bevorzugt sind R¹ und R²¹ unabhängig voneinander aus unsubstituierten Alkylgruppen ausgewählt, noch bevorzugter sind R¹ und R²¹ unabhängig voneinander aus unsubstituierten linearen C1-C30-Alkylgruppen ausgewählt, noch bevorzugter ist R¹ Methyl und R²¹ ist aus unsubstituierten linearen C1-C30-Alkylgruppen ausgewählt, am bevorzugtesten sind R¹ und R²¹ beide Methylgruppen.

8. Das Verfahren gemäß einem der vorhergehenden Ansprüche, wobei mindestens ein Zwischenprodukt der allgemeinen Formel (II) durch eine Redistributionsreaktion einer Verbindung der allgemeinen Formel (III) und einer Verbindung der allgemeinen Formel (IV), wie oben definiert, erhalten wird, wobei der Redistributionskatalysator aus einer oder mehreren Verbindungen ausgewählt ist, die aus der Gruppe ausgewählt sind, die aus
- Phosphoniumhalogeniden, bevorzugt Phosphoniumchloriden R⁵₄PCl, worin R⁵ aus der Gruppe ausgewählt ist, die aus Wasserstoff und einer Organylgruppe besteht, die gleich oder verschieden sein können, bevorzugter ist R⁵ aus der Gruppe ausgewählt, die aus einer aromatischen Gruppe und einer aliphatischen Kohlenwasserstoffgruppe besteht, noch bevorzugter ist R⁵ aus n-Alkylgruppen ausgewählt, und am bevorzugtesten ist R⁵₄PCl *n*-Bu₄PCl,
- Phosphinen R⁵₃P, worin R⁵ aus der Gruppe bestehend aus Wasserstoff und einer Organylgruppe ausgewählt ist und gleich oder verschieden sein kann, bevorzugt ist R⁵ eine Organylgruppe und kann gleich oder verschieden sein, am bevorzugtesten ist R⁵₃P Ph₃P,
- Aminen R⁵₃N, worin R⁵ aus der Gruppe ausgewählt ist, die aus Wasserstoff oder einer Organylgruppe besteht und gleich oder verschieden sein kann, bevorzugt R⁵₃N, worin R⁵ eine Organylgruppe ist und gleich oder verschieden sein kann, am bevorzugtesten ist R⁵₃N *n*-Bu₃N,
- N-heterozyklischen Aminen, bevorzugt Methylimidazolen, wie 2-Methylimidazol, 4-Methylimidazol und 1-Methylimidazol, und
- Ammoniumhalogeniden, bevorzugt Ammoniumchloriden der Formel R⁵₄NCl, wobei R⁵ aus der Gruppe ausgewählt ist, die aus Wasserstoff und einer Organylgruppe besteht, und gleich oder verschieden sein kann, bevorzugter R⁵₄NCl, wobei R⁵ eine Organylgruppe ist und gleich oder verschieden sein kann, bevorzugter ist R⁵ aus *n-*Alkylgruppen ausgewählt, am bevorzugtesten ist R⁵NCl *n*-Bu₄NCl,
besteht.

9. Das Verfahren gemäß einem der vorhergehenden Ansprüche, wobei mindestens ein Schritt a) in Gegenwart eines Lösungsmittels durchgeführt wird, wobei das Lösungsmittel aus der Gruppe ausgewählt ist, die aus Ethern, Alkanen oder aromatischen Lösungsmitteln besteht, besonders bevorzugt ist es aus der Gruppe ausgewählt, die aus THF, 1,4-Dioxan, Diglyme, Tetraglyme, Hexan und Benzol besteht, am bevorzugtesten ist das Lösungsmittel THF, und/oder wobei die Reaktionstemperatur in mindestens einem Schritt a) im Bereich von 0 °C bis 180 °C, bevorzugt 20 °C bis 160 °C und am bevorzugtesten 60 °C bis 120 °C liegt.

10. Das Verfahren gemäß einem der vorhergehenden Ansprüche, wobei mindestens ein Zwischenprodukt der allgemeinen Formel (II) in einem Schritt a) durch eine Redistributionsreaktion einer Verbindung der allgemeinen Formel (III) und der in-situ gebildeten Hydrierungsprodukte erhalten wird, die durch Umsetzen eines oder mehrerer Monosilane der allgemeinen Formel (III) mit einem Metallhydrid der allgemeinen Formel MHₓ oder einem metallorganischen Hydridspender in Gegenwart eines Redistributionskatalysators erhalten werden, wobei der Redistributionskatalysator aus der Gruppe ausgewählt ist, die aus
- R⁵₄PCl, worin R⁵ aus der Gruppe ausgewählt ist, die aus Wasserstoff und einer Organylgruppe besteht, die gleich oder verschieden sein können,bevorzugt ist R⁵ eine Organylgruppe, bevorzugter ist R⁵ aus der Gruppe ausgewählt, die aus einer aromatischen Gruppe und einer aliphatischen Kohlenwasserstoffgruppe besteht, noch bevorzugter ist eine *n*-Alkylgruppe, und am bevorzugtesten ist R⁵₄PCl n-Bu₄PCl,
- Phosphinen R⁵₃P, wobei R⁵ aus der Gruppe ausgewählt ist, die aus Wasserstoff und einer Organylgruppe besteht, und gleich oder verschieden sein kann, bevorzugt R⁵₃P, worin R eine Organylgruppe ist und gleich oder verschieden sein kann, noch bevorzugter Ph₃P,
- Aminen R⁵₃N, worinR⁵ aus der Gruppe ausgewählt ist, die aus Wasserstoff und einer Organylgruppe besteht, und gleich oder verschieden sein kann, bevorzugt R⁵₃N, worin R⁵ wie oben definiert ist und gleich oder verschieden sein kann, besonders bevorzugt *n*-Bu₃N,
- N-heterocyclischen Aminen, bevorzugt Methylimidazolen, besonders bevorzugt 2-Methylimidazol, 4-Methylimidazol und 1-Methylimidazol, und
- Ammoniumverbindungen, wie R⁵₄NCl, wobei R⁵ aus der Gruppe ausgewählt ist, die aus Wasserstoff und einer Organylgruppe besteht, und gleich oder verschieden sein kann, bevorzugt R⁵₄NCl, wobei R⁵ wie oben definiert ist und gleich oder verschieden sein kann, besonders bevorzugt n-Bu₄NCl, besteht, und das Metallhydridreagenz aus Alkalimetallhydriden, Erdalkalimetallhydriden, gemischten Metallhydridsalzen, die ein oder mehrere Alkalimetall- oder Erdalkalimetallionen enthalten, oder Gemischen davon ausgewählt ist, bevorzugt ausgewählt ist aus Lithiumhydrid, Natriumhydrid, Kaliumhydrid, Magnesiumhydrid, Calciumhydrid, Lithiumaluminiumhydrid, Natriumborhydrid, Lithiumborhydrat und Mischungen davon, und der metallorganische Hydridspender aus Diisobutylaluminiumhydrid, Me₃SnH, *n*Bu₃SnH, Ph₃SnH, Me₂SnH₂, *n*Bu₂SnH₂ und Ph₂SnH₂ ausgewählt ist, wobei das Metallhydrid oder der metallorganische Hydridspender bevorzugt aus Natriumhydrid, Lithiumaluminiumhydrid, Lithiumhydrid und nBu₃SnH, besonders bevorzugt LiH, ausgewählt ist.

11. Das Verfahren gemäß einem beliebigen der vorhergehenden Ansprüche, wobei mindestens ein Zwischenprodukt der allgemeinen Formel (II) in einer selektiven partiellen Chlorierungsreaktion einer Verbindung der allgemeinen Formel (IV) durch Umsetzen der Verbindung mit einem HCl/Ether-Reagenz in Schritt a) erhalten wird, wobei das HCl/Ether-Reagenz bevorzugt aus THF/HCl, Diethylether/HCl, Diglyme/HCl, 1,4-Dioxan/HCl, Dibutylether/HCl, noch bevorzugter aus Diglyme/HCl, Diethylether/HCl, 1,4-Dioxan/HCl, Dibutylether/HCl und am bevorzugtesten aus Diethylether/HCl oder Diglyme/HCl ausgewählt ist.

12. Das Verfahren gemäß einem beliebigen der vorhergehenden Ansprüche, wobei mindestens ein Zwischenprodukt der allgemeinen Formel (II) in einer Chlorierungsreaktion einer Verbindung der allgemeinen Formel (IV) SiR¹R²³H₂ mit Tetrachlorsilan (SiCl₄) in der Anwesenheit von mindestens einem Katalysator erhalten wird.

13. Das Verfahren gemäß einem der vorhergehenden Ansprüche, wobei die Verbindungen der allgemeinen Formel (IV), die der partiellen Chlorierungsreaktion mit einem HCl/Ether-Reagenz oder mit SiCl₄ in Anwesenheit mindestens eines Katalysators unterzogen werden, durch Perhydrierung der analogen perchlorierten Monosilane unter Verwendung eines oder mehrerer Metallhydrid-Reagenzien oder metallorganischen Hydridspender-Reagenzien, ausgewählt aus NaBH₄, LiAlH₄, LiBH₄, KH, LiH, NaH, MgH₂, CaH₂, *n*Bu₃SnH, Me₃SnH, Ph₃SnH, *n*Bu₂SnH₂, Me₂SnH₂ und Ph₂SnH₂ oder i-Bu₂AlH, bevorzugt aus LiAlH₄, NaH, LiH oder *n*Bu₃SnH, bevorzugter aus LiAlH₄ oder LiH, am bevorzugtesten aus LiH, erhalten werden.

14. Das Verfahren gemäß einem beliebigen der vorhergehenden Ansprüche, wobei mindestens ein metallkatalysierter Hydrosilylierungsschritt (b) unter Verwendung eines Katalysators auf Rh- oder Pt-Basis durchgeführt wird, bevorzugter unter Verwendung eines auf einem Träger immobilisierten Pt-Katalysators, noch bevorzugter unter Verwendung eines auf Siliciumdioxid immobilisierten Pt-Katalysators, am bevorzugtesten mit einem auf Siliciumdioxid immobilisierten Pt-Katalysator, der eine metallhaltige Siloxanpolymermatrix umfasst, die kovalent an den Siliciumdioxidträger gebunden ist, insbesondere mit Pt-Nanopartikeln, die in einer Siloxanpolymermatrix eingekapselt sind, die kovalent an einen Siliciumdioxidträger gebunden ist.

15. Das Verfahren gemäß einem beliebigen der vorhergehenden Ansprüche, wobei in Schritt c) das Zwischenprodukt der allgemeinen Formel (V) durch eine Reaktion mit einem Metallhydridreagenz der allgemeinen Formel MHₓ, worin M und x wie oben definiert sind, oder einem metallorganischen Hydridspenderreagenz ausgewählt aus der Gruppe, die aus *n*Bu₃SnH, Me₃SnH, Ph₃SnH, *n*Bu₂SnH₂, Me₂SnH₂ und Ph₂SnH₂ besteht, hydriert wird, bevorzugt mit einem Metallhydridreagenz, das aus der Gruppe ausgewählt ist, die aus NaBH₄, LiAlH₄, LiBH₄, KH, LiH, NaH, MgH₂, CaH₂, *i*-Bu₂AlH oder *n*Bu₃SnH besteht, bevorzugter aus LiAlH₄, NaH, LiH besteht, noch bevorzugter aus LiAlH₄ und LiH, und am bevorzugtesten ist das Metallhydridreagenz LiH.

16. Das Verfahren gemäß einem beliebigen der vorhergehenden Ansprüche, wobei der Katalysator der Hydrosilylierungsreaktion von Schritt d) aus einem Katalysator auf Rh- oder Pt-Basis ausgewählt ist, bevorzugter aus einem auf einem Träger immobilisierten Pt-Katalysator, noch bevorzugter aus einem auf Siliciumdioxid immobilisierten Pt-Katalysator, am bevorzugtesten aus einem auf Siliciumdioxid immobilisierten Pt-Katalysator, der eine metallhaltige Siloxanpolymermatrix umfasst, die kovalent an den Siliciumdioxidträger gebunden ist, insbesondere aus Pt-Nanopartikeln, die in einer Siloxanpolymermatrix eingekapselt sind, die kovalent an einen Siliciumdioxidträger gebunden ist.

## Revendications

1. Un procédé pour la production de silahydrocarbures de formule générale (I)
SiR¹R²R³R⁴ (I)
dans laquelle
R¹ et R² sont choisis indépendamment dans le groupe constitué par les groupes aliphatiques, cycloaliphatiques, aryles, alkaryles et aralkyles, en particulier des groupes alkyles non substitués ou substitués, des groupes cycloaliphatiques non substitués ou substitués, des groupes alkaryles non substitués ou substitués, des groupes aralkyles non substitués ou substitués, un groupe aryle non substitué ou substitué, ou un groupe alcényle non substitué ou substitué, chacun ayant 1 à 30 atomes de carbone,
R³ et R⁴ sont choisis indépendamment dans le groupe constitué par les groupes aliphatiques, cycloaliphatiques, aryles, alkaryles et aralkyles, en particulier les groupes alkyles non substitués ou substitués, les groupes cycloaliphatiques non substitués ou substitués, les groupes alcényles non substitués ou substitués, groupes alkaryles non substitués ou substitués ou groupes aryles non substitués ou substitués, chacun ayant 2 à 30 atomes de carbone et ayant au moins deux atomes de carbone adjacents l'un à l'autre, et dans laquelle R¹-R⁴ peuvent être identiques ou être choisis parmi deux, trois ou quatre groupes différents,
comprenant
a) au moins une étape de production d'un intermédiaire monosilane bifonctionnel de formule générale (II)
SiR¹R²¹HCl (II)
dans laquelle R¹ est tel que défini ci-dessus,
et R²¹ est choisi parmi un groupe chloro, un groupe hydrido ou choisi parmi un groupe constitué de groupes aliphatiques, cycloaliphatiques, aryles, alkaryles et aralkyles, en particulier un groupe alkyle non substitué ou substitué, un groupe cycloaliphatique non substitué ou substitué, un groupe alkaryle non substitué ou substitué, un groupe aralkyle non substitué ou substitué, un groupe aryle non substitué ou substitué, ou un groupe alcényle non substitué ou substitué, chacun ayant 1 à 30 atomes de carbone,
par
- une réaction de redistribution d'un organoperchloromonosilane de formule générale (III)
SiR¹R²²Cl₂ (III)
dans laquelle R¹ est tel que défini ci-dessus,
et R²² est choisi parmi un groupe chloro ou un groupe constitué de groupes aliphatiques, cycloaliphatiques, aryles, alkaryles et aralkyles, en particulier un groupe alkyle non substitué ou substitué, un groupe cycloaliphatique non substitué ou substitué, un groupe alkaryle non substitué ou substitué, un groupe aralkyle non substitué ou substitué, un groupe aryle non substitué ou substitué, ou un groupe alcényle non substitué ou substitué, chacun ayant 1 à 30 atomes de carbone,
avec un organoperhydridomonosilane de formule générale (IV)
SiR¹R²³H₂ (IV)
dans laquelle R¹ est tel que défini ci-dessus,
et R²³ est choisi parmi un groupe hydrido ou un groupe constitué de groupes aliphatiques, cycloaliphatiques, aryles, alkaryles et aralkyles, en particulier un groupe alkyle non substitué ou substitué, un groupe cycloaliphatique non substitué ou substitué, un groupe alkaryle non substitué ou substitué,
un groupe aralkyle non substitué ou substitué, un groupe aryle non substitué ou substitué, ou un groupe alcényle non substitué ou substitué, chacun ayant 1 à 30 atomes de carbone,
en présence d'un catalyseur de redistribution et optionnellement en présence d'un ou plusieurs solvants, ou par
- une réaction de redistribution d'un organoperchloromonosilane de formule générale
(III) avec les produits d'hydrogénation formés in situ obtenus par réaction du monosilane de formule générale (III),
dans laquelle R¹ est tel que défini ci-dessus,
et R²² est choisi parmi un groupe chloro ou un groupe constitué de groupes aliphatiques, cycloaliphatiques, aryles,
alkaryles et aralkyles, en particulier un groupe alkyle non substitué ou substitué, un groupe cycloaliphatique non substitué ou substitué, un groupe alkaryle non substitué ou substitué, un groupe aralkyle non substitué ou substitué, un groupe aryle non substitué ou substitué, ou un groupe alcényle non substitué ou substitué, chacun ayant 1 à 30 atomes de carbone,
avec un réactif hydrure métallique de formule générale MHₓ, où M représente un ou plusieurs métaux et x est un nombre entier de 1 à 6, ou avec un donneur d'hydrure organométallique choisi parmi l'hydrure de diisobutylaluminium, Me₃SnH, *n*Bu₃SnH, Ph₃SnH, Me₂SnH₂, *n*Bu₂SnH₂ et Ph₂SnH₂,
en présence d'un catalyseur de redistribution et éventuellement en présence d'un ou plusieurs solvants, ou par
- une réaction de chloration comprenant la réaction d'un organoperhydridomonosilane de formule générale (IV)
SiR¹R²³H₂ (IV)
dans laquelle R¹ est tel que défini ci-dessus,
et R²³ est choisi parmi un groupe hydrido ou un groupe constitué de groupes aliphatiques, cycloaliphatiques, aryles, alkaryles et aralkyles, en particulier un groupe alkyle non substitué ou substitué, un groupe cycloaliphatique non substitué ou substitué, un groupe alkaryle non substitué ou substitué, un groupe aralkyle non substitué ou substitué, un groupe aryle non substitué ou substitué, ou un groupe alcényle non substitué ou substitué, chacun ayant 1 à 30 atomes de carbone,
avec du tétrachlorosilane (SiCl₄) en présence d'au moins un catalyseur, optionnellement en présence d'un ou plusieurs solvants, ou par
- une réaction de chloration partielle sélective d'un organoperhydridomonosilane de formule générale (IV)
SiR¹R²³H₂ (IV)
dans laquelle R¹ est tel que défini ci-dessus,
et R²³ est choisi parmi un groupe hydrido ou un groupe constitué de groupes aliphatiques, cycloaliphatiques, aryles, alkaryles et aralkyles, en particulier un groupe alkyle non substitué ou substitué, un groupe cycloaliphatique non substitué ou substitué, un groupe alkaryle non substitué ou substitué, un groupe aralkyle non substitué ou substitué, un groupe aryle non substitué ou substitué, ou un groupe alcényle non substitué ou substitué, chacun ayant 1 à 30 atomes de carbone,
en faisant réagir le composé avec un réactif HCl/éther, optionnellement en présence d'un ou plusieurs autres solvants,
et
b) au moins une étape de soumission d'un intermédiaire monosilane bifonctionnel de formule générale (II) tel qu'obtenu à l'étape (a) ou HSiCl₃ à une réaction d'hydrosilylation catalysée par un métal avec un composé contenant au moins une liaison double C-C ou triple C-C pour obtenir un intermédiaire de formule générale (V)
SiR¹R²R³¹Cl (V)
dans laquelle R¹ et R² sont choisis dans un groupe constitué de groupes aliphatiques, cycloaliphatiques, aryles, alkaryles et aralkyles, en particulier des groupes alkyles non substitués ou substitués, des groupes cycloaliphatiques non substitués ou substitués, des groupes alkaryles non substitués ou substitués, des groupes aralkyles non substitués ou substitués, un groupe aryle non substitué ou substitué, ou un groupe alcényle non substitué ou substitué, chacun ayant 1 à 30 atomes de carbone,
R³¹ est choisi parmi un groupe chloro ou parmi le groupe constitué de groupes aliphatiques, cycloaliphatiques, aryles, alkaryles et aralkyles, en particulier des groupes alkyles non substitués ou substitués, des groupes cycloaliphatiques non substitués ou substitués, des groupes alcényle non substitués ou substitués, des groupes alkaryle non substitués ou substitués ou des groupes aryle non substitués ou substitués, chacun ayant 2 à 30 atomes de carbone et ayant au moins deux atomes de carbone adjacents l'un à l'autre, ou pour obtenir un intermédiaire de formule R¹SiCl₃, dans laquelle R¹ est tel que défini pour l'intermédiaire de formule générale (V),
et
c) une étape de production d'un intermédiaire de formule générale (VI)
SiR¹R²R³²H (VI)
par une réaction d'hydrogénation d'un composé de formule générale (V) tel qu'obtenu dans l'étape b)
dans laquelle, dans les formules générales (V) et (VI)
R¹et R² sont choisis dans un groupe constitué de groupes aliphatiques, cycloaliphatiques, aryles, alkaryles et aralkyles, en particulier des groupes alkyles non substitués ou substitués, des groupes cycloaliphatiques non substitués ou substitués, des groupes alkaryles non substitués ou substitués, des groupes aralkyles non substitués ou substitués, un groupe aryle non substitué ou substitué, ou un groupe alcényle non substitué ou substitué, chacun ayant 1 à 30 atomes de carbone,
R³¹ est tel que défini ci-dessus,
et R³² est choisi parmi un groupe hydrido ou parmi le groupe constitué de groupes aliphatiques, cycloaliphatiques, aryles, alkaryles et aralkyles, en particulier des groupes alkyles non substitués ou substitués, des groupes cycloaliphatiques non substitués ou substitués, des groupes alcényles non substitués ou substitués, des groupes alkaryles non substitués ou substitués ou des groupes aryles non substitués ou substitués, chacun ayant 2 à 30 atomes de carbone et ayant au moins deux atomes de carbone adjacents l'un à l'autre,
ou de produire un intermédiaire de formule générale R¹SiH₃ par une réaction d'hydrogénation d'un composé de formule R¹SiCl₃, dans laquelle R¹ est tel que défini pour l'intermédiaire de formule générale (VI),
et
d) soumettre un intermédiaire de formule générale (VI) ou R¹SiH₃ obtenu à l'étape c) à une réaction finale d'hydrosilylation avec un composé contenant une ou plusieurs liaisons doubles C-C ou liaisons triples C-C afin d'obtenir les silahydrocarbures de formule générale (I)
SiR¹R²R³R⁴ (I) tel que défini ci-dessus,
dans laquelle l'intermédiaire est préférablement un silane tertiaire de structure générale SiR¹R²R³²H (VI) avec R³² ≠ H.

2. Le procédé selon la revendication 1, dans lequel les quatre substituants organyles R¹, R², R³ et R⁴ au centre du silicium du produit silahydrocarbure de formule générale (I) sont choisis parmi au moins deux, préférablement parmi au moins trois, et plus préférablement parmi quatre groupes différents.

3. Le procédé selon les revendications 1 et 2, dans lequel les quatre substituants organyles R¹, R², R³ et R⁴ au centre du silicium du produit silahydrocarbure de formule générale (I) sont choisis parmi quatre groupes différents, préférablement quatre groupes alkyle différents, plus préférablement quatre groupes alkyle linéaires différents, et de préférence quatre groupes alkyle linéaires différents non substitués.

4. Le procédé selon l'une quelconque des revendications 1 à 3, dans lequel un ou deux des substituants R³ et R⁴ du produit silahydrocarbure de formule générale (I) sont choisis parmi le groupe constitué de substituants alcényles, de résidus substitués par un ou plusieurs substituants halogènes, de résidus comprenant un ou plusieurs groupes aromatiques et de résidus comprenant des groupes esters.

5. Le procédé selon l'une quelconque des revendications 1 à 3, dans lequel les quatre substituants organyles R¹, R², R³ et R⁴ au centre du silicium du produit silahydrocarbure de formule générale (I) sont choisis indépendamment parmi des groupes hydrocarbures saturés, préférablement parmi des groupes alkyles non substitués, plus préférablement parmi des groupes alkyles non substitués, de préférence parmi des groupes alkyle linéaires non substitués.

6. Le procédé selon l'une quelconque des revendications précédentes, dans lequel l'intermédiaire monosilane bifonctionnel de formule générale (II) dans l'étape a) est un composé de formule
SiR¹HCl₂
dans laquelle R¹ est un groupe alkyle non substitué ou substitué,
préférablement R¹ est un groupe alkyle non substitué, plus préférablement R¹ est un groupe alkyle C1-C30 non substitué, encore plus préférablement R¹ est un groupe alkyle linéaire C1-C30 non substitué, le plus préférablement R¹ est un groupe méthyle.

7. Le procédé selon l'une quelconque des revendications précédentes, dans lequel l'intermédiaire monosilane bifonctionnel de formule générale (II) dans l'étape a) est un composé de formule
SiR¹R²¹HCl,
dans laquelle R¹ et R²¹ sont choisis indépendamment parmi des groupes alkyles non substitués ou substitués, préférablement R¹ et R²¹ sont choisis indépendamment parmi des groupes alkyles non substitués, plus préférablement, R¹ et R²¹ sont choisis indépendamment parmi des groupes alkyle linéaires C1-C30 non substitués, encore plus préférablement, R¹ est un groupe méthyle et R²¹ est choisi parmi des groupes alkyle linéaires C1-C30 non substitués, et le plus préférablement, R¹ et R²¹ sont tous deux des groupes méthyle.

8. Le procédé selon l'une quelconque des revendications précédentes, dans lequel au moins un intermédiaire de formule générale (II) est obtenu par une réaction de redistribution d'un composé de formule générale (III) et d'un composé de formule générale (IV) tels que définis ci-dessus, dans lequel le catalyseur de redistribution est choisi parmi un ou plusieurs composés choisis dans le groupe constitué par
- des halogénures de phosphonium, préférablement des chlorures de phosphonium R⁵₄PCl, dans lesquels R⁵ est choisi dans le groupe constitué par l'hydrogène et un groupe organyle, qui peuvent être identiques ou différents, plus préférablement R⁵ est choisi dans le groupe constitué par un groupe aromatique et un groupe hydrocarboné aliphatique, encore plus préférablement R⁵ est choisi parmi les groupes n-alkyle, et le plus préférablement R⁵₄PCl est *n*-Bu₄PCl,
- des phosphines R⁵₃P, dans lesquelles R⁵ est choisi parmi le groupe constitué d'hydrogène et d'un groupe organyle et peut être identique ou différent, préférablement R⁵ est un groupe organyle et peut être identique ou différent, le plus préférablement R⁵₃P est Ph₃P,
- les amines R⁵₃N, dans lesquelles R⁵ est choisi parmi le groupe constitué d'hydrogène ou d'un groupe organyle et peut être identique ou différent, préférablement R⁵₃N, dans lesquelles R⁵ est un groupe organyle et peut être identique ou différent, le plus préférablement R⁵₃N est *n*-Bu₃N,
- des amines N-hétérocycliques,
préférablement des méthylimidazoles, tels que le 2-méthylimidazole, le 4-méthylimidazole et le 1-méthylimidazole, et
- des halogénures d'ammonium,
préférablement des chlorures d'ammonium de formule R⁵₄NCl, dans laquelle R⁵ est choisi parmi le groupe constitué d'un atome d'hydrogène et d'un groupe organyle et peut être identique ou différent, préférablement R⁵₄NCl, dans laquelle R⁵ est un groupe organyle et peut être identique ou différent, plus préférablement R⁵ est choisi parmi les groupes *n*-alkyle, le plus préférablement R⁵₄NCl est *n*-Bu₄NCl.

9. Le procédé selon l'une quelconque des revendications précédentes, dans lequel au moins une étape a) est réalisée en présence d'un solvant, le solvant étant choisi dans le groupe constitué par les éthers, les alcanes ou les solvants aromatiques, plus préférablement choisi dans le groupe constitué par le THF, le 1,4-dioxane, diglyme, tétraglyme, hexane et benzène, le plus préférablement le solvant étant le THF, et/ou dans lequel la température de réaction dans au moins une étape a) est comprise dans la plage de 0 °C à 180 °C, préférablement de 20 °C à 160 °C, et plus préférablement de 60 °C à 120 °C.

10. Le procédé selon l'une quelconque des revendications précédentes, dans lequel au moins un intermédiaire de formule générale (II) dans une étape a) est obtenu par une réaction de redistribution d'un composé de formule générale (III) et des produits d'hydrogénation formés in situ obtenus en faisant réagir un ou plusieurs monosilanes de formule générale (III) avec un hydrure métallique de formule générale MHₓ ou un donneur d'hydrure organométallique en présence d'un catalyseur de redistribution, le catalyseur de redistribution étant choisi dans le groupe constitué par
- R⁵₄PCl, où R⁵ est choisi dans le groupe constitué par l'hydrogène et un groupe organyle, qui peuvent être identiques ou différents, préférablement R⁵ est un groupe organyle, plus préférablement R⁵ est choisi dans le groupe constitué par un groupe aromatique et un groupe hydrocarboné aliphatique, encore plus préférablement un groupe n-alkyle, et le plus préférablement R⁵₄PCl est *n*-Bu₄PCl,
- les phosphines R⁵₃P, où R⁵ est choisi parmi le groupe constitué d'hydrogène et d'un groupe organyle et peut être identique ou différent, préférablement R⁵₃P, où R est un groupe organyle et peut être identique ou différent, plus préférablement Ph₃P,
- des amines R⁵₃N, dans lesquelles R⁵ est choisi parmi le groupe constitué d'hydrogène et d'un groupe organyle et peut être identique ou différent, préférablement R⁵₃N, dans lesquelles R⁵ est tel que défini ci-dessus et peut être identique ou différent, plus préférablement *n*-Bu₃N,
- des amines N-hétérocycliques,
préférablement des méthylimidazoles, plus préférablement le 2-méthylimidazole, le 4-méthylimidazole et le 1-méthylimidazole, et
- des composés d'ammonium, tels que R⁵₄NCl, dans lesquels R⁵ est choisi parmi le groupe constitué d'hydrogène et d'un groupe organyle et peut être identique ou différent, préférablement R⁵₄NCl, dans lesquels R⁵ est tel que défini ci-dessus et peut être identique ou différent, plus préférablement *n*-Bu₄NCl, et le réactif d'hydrure métallique est choisi parmi les hydrures de métaux alcalins, les hydrures de métaux alcalino-terreux, sels d'hydrures métalliques mixtes comprenant un ou plusieurs ions de métaux alcalins ou alcalino-terreux ou leurs mélanges, préférablement choisis parmi l'hydrure de lithium, l'hydrure de sodium, l'hydrure de potassium, l'hydrure de magnésium, l'hydrure de calcium, l'hydrure de lithium et d'aluminium, le borohydrure de sodium, le borohydrate de lithium et leurs mélanges, et le donneur d'hydrure organométallique est choisi parmi l'hydrure de diisobutylaluminium, Me₃SnH, *n*Bu₃SnH, Ph₃SnH, Me₂SnH₂, *n*Bu₂SnH₂ et Ph₂SnH₂, plus préférablement, le donneur d'hydrure métallique ou d'hydrure organométallique est choisi parmi l'hydrure de sodium, l'hydrure de lithium et d'aluminium, l'hydrure de lithium et *n*Bu₃SnH, le plus préférablement LiH.

11. Le procédé selon l'une quelconque des revendications précédentes, dans lequel au moins un intermédiaire de formule générale (II) est obtenu dans une réaction de chloration partielle sélective d'un composé de formule générale (IV) en faisant réagir le composé avec un réactif HCl/éther dans l'étape a), dans lequel le réactif HCl/éther est préférablement choisi parmi THF/HCl, diéthyléther/HCl, diglyme/HCl, 1,4-dioxane/HCl, dibutyléther/HCl, plus préférablement choisi parmi diglyme/HCl, diéthyléther/HCl, 1,4-dioxane/HCl, dibutyléther/HCl, et le plus préférablement choisi parmi diéthyléther/HCl ou diglyme/HCl.

12. Le procédé selon l'une quelconque des revendications précédentes, dans lequel au moins un intermédiaire de formule générale (II) est obtenu dans une réaction de chloration d'un composé de formule générale (IV) SiR¹R²³H₂ avec le tétrachlorosilane (SiCl₄) en présence d'au moins un catalyseur.

13. Le procédé selon l'une quelconque des revendications précédentes, dans lequel les composés de formule générale (IV) soumis à la réaction de chloration partielle avec un réactif HCl/éther ou avec SiCl₄ en présence d'au moins un catalyseur sont obtenus par perhydrogénation des monosilanes perchlorés analogues à l'aide d'un ou plusieurs réactifs à base d'hydrure métallique ou de réactifs donneurs d'hydrure organométallique choisis parmi NaBH₄, LiAlH₄, LiBH₄, KH, LiH, NaH, MgH₂, CaH₂, *n*Bu₃SnH, Me₃SnH, Ph₃SnH, *n*Bu₂SnH₂, Me₂SnH₂ et Ph₂SnH₂ ou *i*-Bu₂AlH, préférablement parmi LiAlH₄, NaH, LiH ou *n*Bu₃SnH, plus préférablement parmi LiAlH₄ ou LiH, et le plus préférablement parmi LiH.

14. Le procédé selon l'une quelconque des revendications précédentes, dans lequel au moins une étape d'hydrosilylation catalysée par un métal (b) est réalisée à l'aide d'un catalyseur à base de Rh ou de Pt, plus préférablement à l'aide d'un catalyseur Pt immobilisé sur un support, encore plus préférablement à l'aide d'un catalyseur Pt immobilisé sur la silice, le plus préférablement d'un catalyseur Pt immobilisé sur la silice comprenant une matrice polymère siloxane contenant un métal liée de manière covalente au support de silice, en particulier des nanoparticules Pt encapsulées dans une matrice polymère siloxane liée de manière covalente à un support de silice.

15. Le procédé selon l'une quelconque des revendications précédentes, dans lequel, à l'étape c), l'intermédiaire de formule générale (V) est hydrogéné par une réaction avec un réactif hydrure métallique de formule générale MHₓ, où M et x sont tels que définis ci-dessus, ou un réactif donneur d'hydrure organométallique choisi dans le groupe constitué par *n*Bu₃SnH, Me₃SnH, Ph₃SnH, *n*Bu₂SnH₂, Me₂SnH₂ et Ph₂SnH₂, préférablement avec un réactif hydrure métallique choisi dans le groupe constitué de NaBH₄, LiAlH₄, LiBH₄, KH, LiH, NaH, MgH₂, CaH₂, *i*-Bu₂AlH ou *n*Bu₃SnH, plus préférablement constitué de LiAlH₄, NaH, LiH, encore plus préférablement de LiAlH₄ et LiH, et le réactif hydrure métallique est plus préférablement LiH.

16. Le procédé selon l'une quelconque des revendications précédentes, dans lequel le catalyseur de la réaction d'hydrosilylation de l'étape d) est choisi parmi un catalyseur à base de Rh ou de Pt, plus préférablement parmi un catalyseur Pt immobilisé sur un support, encore plus préférablement parmi un catalyseur Pt immobilisé sur la silice, plus préférablement d'un catalyseur Pt immobilisé sur la silice comprenant une matrice polymère siloxane contenant un métal liée de manière covalente au support de silice, en particulier des nanoparticules Pt encapsulées dans une matrice polymère siloxane liée de manière covalente à un support de silice.
